# EUROPEAN PATENT SPECIFICATION

(11) **EP 3 521 907 B1**
(45) Date of publication and mention of the grant of the patent: **04.12.2024**
(21) Application number: 17856334.2
(22) Date of filing: 28.09.2017
(51) Int. Cl.: C09K 9/02, G02C 7/10, G02B 1/04, G02B 5/23, B29D 11/00, C09B 47/00, C09B 67/22, C09B 69/10

(54) **PHOTOCHROMIC LENS AND POLYMERIZABLE COMPOSITION**
PHOTOCHROME LINSE UND POLYMERISIERBARE ZUSAMMENSETZUNG
LENTILLE PHOTOCHROMIQUE ET COMPOSITION POLYMÉRISABLE

(30) Priority: 30.09.2016 JP 2016194499; 17.08.2017 JP 2017157506
(43) Date of publication of application: 07.08.2019
(73) Proprietor: Mitsui Chemicals, Inc., Tokyo 104-0028 (JP)
(72) Inventor: KAWATO Nobuo, Omuta-shi Fukuoka 836-8610 (JP); KAWAGUCHI Masaru, Omuta-shi Fukuoka 836-8610 (JP); KADOWAKI Shinichiro, Omuta-shi Fukuoka 836-8610 (JP); KASORI Yuuki, Omuta-shi Fukuoka 836-8610 (JP)
(74) Representative: Mewburn Ellis LLP
(86) International application number: PCT/JP2017/035210
(87) International publication number: WO 2018/062385

(56) References cited:
- EP-A1- 2 605 059
- WO-A1-2012/020570
- WO-A1-2012/141306
- WO-A1-2015/115648
- WO-A1-2016/006478
- JP-A- 2010 001 297
- US-A1- 2007 138 448
- US-A1- 2010 123 105
- US-A1- 2012 188 503
- US-A1- 2014 198 296
- F. KROHM ET AL: "Photochromic spiropyran- and spirooxazine-homopolymers in mesoporous thin films by surface initiated ROMP", JOURNAL OF MATERIALS CHEMISTRY C, vol. 4, no. 18, 9 February 2016 (2016-02-09), GB, pages 4067 - 4076, XP055723347, ISSN: 2050-7526, DOI: 10.1039/C5TC04054J

## Description

### TECHNICAL FIELD

The present invention relates to a photochromic lens which is excellent in visibility (contrast property) and a polymerizable composition.

### BACKGROUND ART

Due to the fact that a plastic lens is lightweight and is not easily cracked as compared with an inorganic lens, the plastic lens has been rapidly spreading to optical elements such as a spectacle lens and a camera lens. In recent years, development of a plastic lens having a photochromic performance has been progressing.

Patent Document 1 discloses that a photochromic lens for spectacles which has a high refractive index and excellent photochromic properties can be provided by carrying out a radical polymerization of a polymerizable composition that contains a photochromic compound, (meth)acrylate having a specific structure, and divinylbenzene by a cast polymerization method.

Patent Document 2 discloses that a photochromic optical material which has photochromic properties with high photoresponsivity and has various physical properties such as low specific gravity and impact resistance can be provided by carrying out a radical polymerization of a composition that contains a photochromic compound and a polymerizable monomer having a di (meth)acryl group by a cast polymerization method.

In addition, in recent years, in order to clarify an outline and a color of an object and to reduce visual fatigue, with respect to an optical material such as a spectacle lens, it is desired to improve contrast of the object visualized through the lens.

Patent Document 3 discloses that an anti-glare performance and a contrast property can be imparted by adding a tetraazaporphyrin compound to a plastic lens comprised of a thermosetting resin or a thermoplastic resin. In the examples, transmittance spectra of the obtained plastic spectacle lenses are disclosed (Fig. 8) . However, Patent Document 3 does not disclose a photochromic compound, and does not disclose that a transmittance spectrum varies depending on the presence or absence of light irradiation, from the viewpoint that the lens of the document is intended to suppress glare due to visible light by addition of a dye.

Patent Document 4 discloses a photochromic lens comprised of a functional resin layer that contains a photochromic agent such as a spiropyran-based compound and a specific wavelength absorbent such as a tetraazaporphyrin-based compound.

Patent Document 5 discloses a polarizing lens which is comprised of a polarizing film containing a specific organic coloring matter compound and resin layers stacked on both surfaces of the polarizing film. It is described that a coating layer containing a photochromic dye may be provided on the resin layers.

Patent Document 6 discloses a photochromic lens comprised of a composition that contains a photochromic polymer represented by a specific formula and a polymerizable matrix material selected from polymethacrylate.

Patent Document 7 discloses a functional laminated spectacle lens having a polarizing film between an outer lens and an inner lens. A functional layer is laminated onto at least one layer of the lens. The functional layer is made by incorporating a functional pigment into an acrylic urethane resin. The functional pigment may be one selected from a tetraazaporphyrin compound, a photochromic compound and an infrared-absorbing pigment.

### RELATED DOCUMENT

### PATENT DOCUMENT

[Patent Document 1] WO2012/141306
[Patent Document 2] JP2004-078052
[Patent Document 3] JP2008-134618
[Patent Document 4] JP2014-156067
[Patent Document 5] WO2012/020570
[Patent Document 6] WO2012/149599
[Patent Document 7] WO2016/006478

### SUMMARY OF THE INVENTION

### TECHNICAL PROBLEM

The photochromic lens develops color under sunlight, and therefore, a transmittance can be decreased and glare can be suppressed. However, in a case where the transmittance is decreased too much, an outline and a color of an object become unclear, which may cause visual fatigue on the contrary.

In view of the above, the present inventors have ascertained that as a result of adding the tetraazaporphyrin compound described in Patent Document 3 to a photochromic material, an excellent contrast property is exhibited in a region where a color optical density is low. On the other hand, in order to suppress glare, it is preferable that a color optical density is high and a transmittance at a wavelength of 550 nm is 25% or less. However, a remarkable effect was not obtained in a region where a color optical density is high with a transmittance of 25% or less.

Patent Documents 4 to 6 do not disclose a relationship between a combination of specific components and a transmittance.

In view of the above, as a result of intensive studies, the present inventors have found that in a case where a minimum transmittance between 575 nm and 600 nm is lower than a transmittance at 550 nm by 5% or more, a remarkable contrast property is expressed even in a region where a color optical density is high.

### SOLUTION TO PROBLEM

The present invention provides a photochromic lens comprising a tetraazaporphyrin compound represented by General Formula (1), and a photochromic dye, in which a transmittance at 23°C after irradiation using a xenon lamp at an illuminance of 50,000 lux for 15 minutes satisfies the following conditions:
(1) a transmittance at 550 nm is 25% or less
(2) a transmittance a at 550 nm is larger than a minimum transmittance b between 575 nm and 600 nm, and a difference between the transmittance a and the transmittance b is 5% or more
(3) there are one or more points of inflection in a transmittance curve from 550 nm to 600 nm, 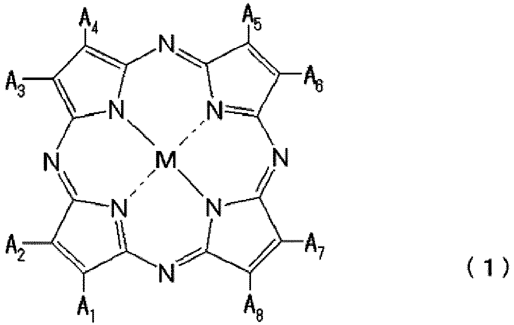 in which in General Formula (1), A₁ to As each independently represent a hydrogen atom, a halogen atom, a nitro group, a cyano group, a hydroxyl group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, or may form a ring other than an aromatic ring via a linking group, and M represents two hydrogen atoms, an optionally substituted metal atom, or an oxy metal atom.

The photochromic lens may have a luminous transmittance at the time of decoloration that is 70% or more.

In the tetraazaporphyrin compound, M may be a copper atom, a nickel atom, or a cobalt atom.

The tetraazaporphyrin compound may be represented by General Formula (1a), 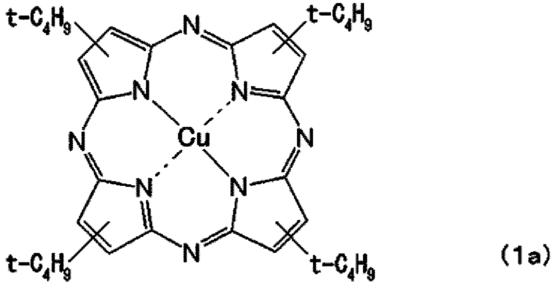 in which, in Formula (1a), Cu represents divalent copper, and t-C₄H₉ represents a tertiary-butyl group of which substitution positions of four substituents are either A₁ or A₂, either A₃ or A₄, either As or A₆, and either A₇ or A₈ in General Formula (1) .

The photochromic dye in the lens may be represented by General Formula (5), 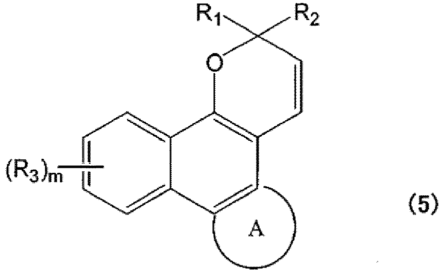
wherein, in the formula, R₁ and R₂, which may be the same or different from each other, independently represent hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R is a linear or branched alkyl group having 1 to 6 carbon atoms, and, in a case where there are two R's, the two R's may be the same or different from each other), and a methacryloyl group or an acryloyl group); or
an aralkyl or heteroaralkyl group (in which a linear or branched alkyl group having 1 to 4 carbon atoms is substituted with the aryl group or heteroaryl group),
R₃'s, which may be the same or different from each other, independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which has been substituted with at least one halogen atom, a halocycloalkyl group having 3 to 12 carbon atoms which has been substituted with at least one halogen atom, or a linear or branched haloalkoxy group having 1 to 12 carbon atoms which has been substituted with at least one halogen atom;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, and an amino group);
an aralkyl or heteroaralkyl group (in which a linear or branched alkyl group having 1 to 4 carbon atoms is substituted with the aryl group or heteroaryl group);
a substituted or unsubstituted phenoxy or naphthoxy group (which has, as a substituent, at least one substituent selected from a linear or branched alkyl group or alkoxy group having 1 to 6 carbon atoms) ;
-NH₂, -NHR, -CONH₂, or -CONHR (in which R is a linear or branched alkyl group having 1 to 6 carbon atoms); or
-OCOR₈ or -COOR₈ (where R₈ is a linear or branched alkyl group having 1 to 6 carbon atoms or a cycloalkyl group having 3 to 6 carbon atoms, a phenyl group which is substituted by at least one substituent of the substituted aryl group or the substituted heteroaryl group in R₁ and R₂, or an unsubstituted phenyl group);
m is an integer of 0 to 4;
A represents an annelated ring of Formula (A₂) or Formula (A₄), 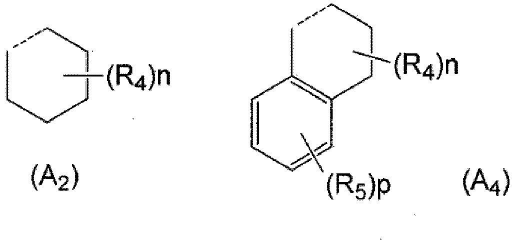
in these annelated rings,
a dotted line represents a C₅-C₆ bond of the naphthopyran ring in General Formula (5);
an α bond of the annelated ring (A₄) can be bonded to C₅ or C₆ of the naphthopyran ring in General Formula (5);
R₄'s are the same or different from each other, and independently represent OH, a linear or branched alkyl group or alkoxy group having 1 to 6 carbon atoms, or two R₄'s form carbonyl (CO);
R₅ represents halogen;
a linear or branched alkyl group having 1 to 12 carbon atoms;
a linear or branched haloalkyl group having 1 to 6 carbon atoms which has been substituted with at least one halogen atom;
a cycloalkyl group having 3 to 12 carbon atoms;
a linear or branched alkoxy group having 1 to 6 carbon atoms;
a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group);
-NH₂ or -NHR (where R is a linear or branched alkyl group having 1 to 6 carbon atoms);
a substituted or unsubstituted phenoxy or naphthoxy group (which has, as a substituent, at least a linear or branched alkyl group or alkoxy group having 1 to 6 carbon atoms); or
a -COR₉, -COOR₉, or -CONHR₉ group (where R₉ is a linear or branched alkyl group having 1 to 6 carbon atoms, a cycloalkyl group having 3 to 6 carbon atoms, or a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group)); and
in a case where A represents (A₄), n is an integer of 0 to 2 and p is an integer of 0 to 4, and in a case where A represents (A₂), n is an integer of 0 to 2.

The photochromic dye may be represented by General Formula (a) or General Formula (b),

PC-L-Chain (a)

PC-L-Chain-L'-PC' (b)

in which PC and PC' each represent any one of General Formulas (c) to (f), and PC and PC' may be the same or different from each other, and 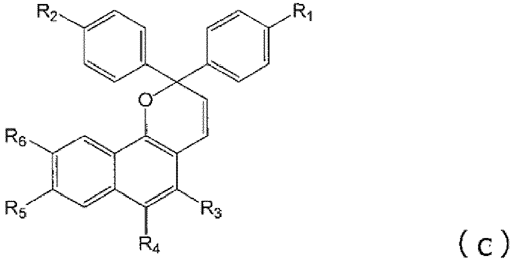 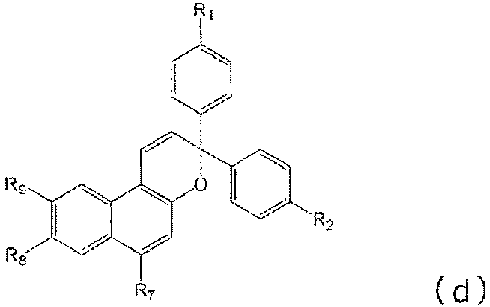 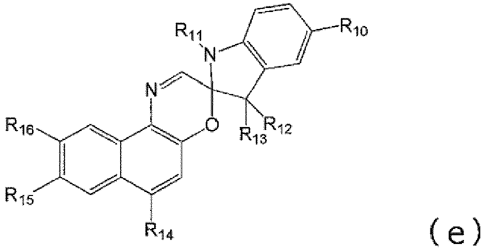 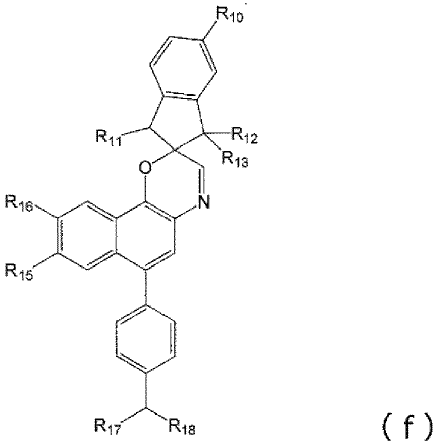
in which R₁ to R₁₈, which may be the same or different from one another, each represent hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, in which
the aliphatic group, alicyclic group, or aromatic organic group may contain an oxygen atom or a nitrogen atom,
any one of the groups contained in the compounds represented by General Formulas (c) to (f) is bonded to L or L' which is a divalent organic group,
L and L' each represent a divalent organic group containing one or more kinds selected from an oxyethylene chain, an oxypropylene chain, a (thio)ester group, and a (thio)amide group, and
the Chain represents a monovalent or divalent organic group containing at least one kind selected from a polysiloxane chain and a polyoxyalkylene chain.

The photochromic lens may further comprise:
at least one kind selected from poly(meth) acrylate, polyallyl carbonate, and poly(thio)urethane.
   Where the photochromic lens comprises poly(meth)acrylate, the poly (meth) acrylate may contain structural units derived from at least two kinds selected from compounds represented by General Formulas (1), (ii), (iii), and (iv) . 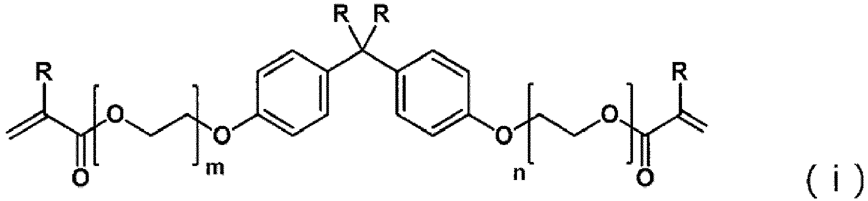
(in the formula, R represents a hydrogen atom or a methyl group, and a plurality of R's may be the same or different from one another, and
m and n each represent an integer of 0 to 20 and may be the same or different from each other) 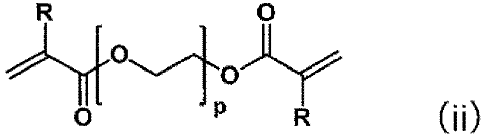
(in the formula, R represents a hydrogen atom or a methyl group, and a plurality of R's may be the same or different from each other, and
p represents an integer of 0 to 20) 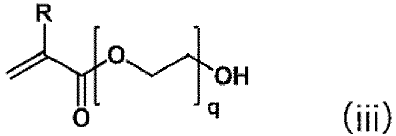
(in the formula, R represents a hydrogen atom or a methyl group, and q represents an integer of 0 to 20).

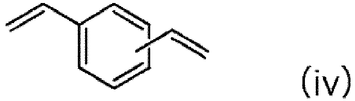

The photochromic lens may contain a mixture comprised of the polyallyl carbonate and the poly(meth)acrylate, and the mixture contains a structural unit (a) derived from an allyl carbonate compound (A) which is represented by General Formula (11) and contains two or more allyloxycarbonyl groups, and a structural unit (b) derived from a (meth)acrylate compound (B) which is represented by General Formula (12) and contains two or more (meth)acryl groups, and
the structural unit (a) is contained in an amount of 5% by weight to 30% by weight and the structural unit (b) is contained in an amount of 70% by weight to 95% by weight, with respect to a total of 100% by weight of the structural unit (a) and the structural unit (b), 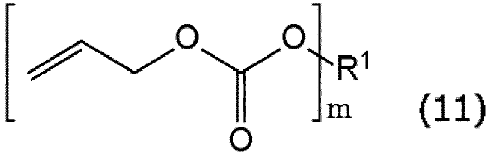
(R¹ represents a divalent to twenty-valent group derived from chained or branched C3 to C35 aliphatic polyol which optionally contain a heteroatom, or a divalent to twenty-valent group derived from C5 to C40 cycloaliphatic polyol which optionally contain a heteroatom, and
m represents an integer of 2 to 10,
where R¹ does not contain an allyloxycarbonyl group) 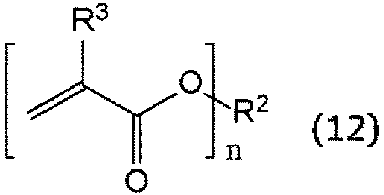
in which, R² represents a divalent to tetravalent organic group having 1 to 30 carbon atoms which optionally contain a heteroatom or an aromatic group,
R³ represents a hydrogen atom or a methyl group, and
n represents an integer of 2 to 4).

Where the photochromic lens comprises a poly(thio)urethane, the poly(thio) urethane may contain a structural unit derived from a polyisocyanate compound (a), a structural unit derived from a polyol compound (b) having a number average molecular weight of 100 or more, and a structural unit derived from a bifunctional or higher functional active hydrogen compound (c) (with the proviso that the compound (b) is excluded).

The invention also provides a polymerizable composition, containing:
a tetraazaporphyrin compound represented by General Formula (1) ;
at least one kind selected from photochromic dyes represented by General Formula (5), General Formula (a), and General Formula (b) ; and
a polymerizable compound, 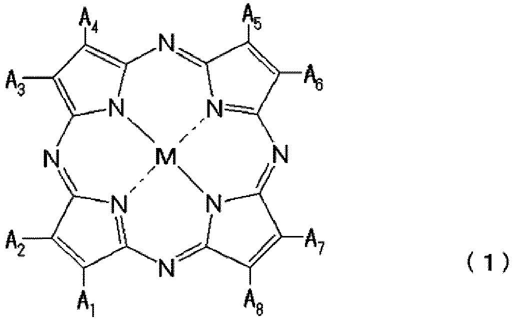
wherein, in General Formula (1), A₁ to As each independently represent a hydrogen atom, a halogen atom, a nitro group, a cyano group, a hydroxyl group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, or may form a ring other than an aromatic ring via a linking group, and M represents two hydrogen atoms, an optionally substituted metal atom, or an oxy metal atom, 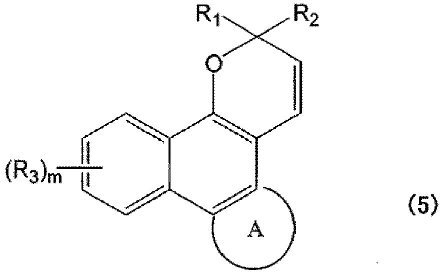
wherein, in the formula, R₁ and R₂, which may be the same or different from each other, independently represent hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R is a linear or branched alkyl group having 1 to 6 carbon atoms, and, in a case where there are two R's, the two R's may be the same or different from each other), and a methacryloyl group or an acryloyl group); or
an aralkyl or heteroaralkyl group (in which a linear or branched alkyl group having 1 to 4 carbon atoms is substituted with the aryl group or heteroaryl group),
R₃'s, which may be the same or different from each other, independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which has been substituted with at least one halogen atom, a halocycloalkyl group having 3 to 12 carbon atoms which has been substituted with at least one halogen atom, or a linear or branched haloalkoxy group having 1 to 12 carbon atoms which has been substituted with at least one halogen atom;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, and an amino group);
an aralkyl or heteroaralkyl group (in which a linear or branched alkyl group having 1 to 4 carbon atoms is substituted with the aryl group or heteroaryl group);
a substituted or unsubstituted phenoxy or naphthoxy group (which has, as a substituent, at least one substituent selected from a linear or branched alkyl group or alkoxy group having 1 to 6 carbon atoms) ;
-NH₂, -NHR, -CONH₂, or -CONHR (in which R is a linear or branched alkyl group having 1 to 6 carbon atoms); or
-OCOR₈ or -COOR₈ (where R₈ is a linear or branched alkyl group having 1 to 6 carbon atoms or a cycloalkyl group having 3 to 6 carbon atoms, a phenyl group which is substituted by at least one substituent of the substituted aryl group or the substituted heteroaryl group in R₁ and R₂, or an unsubstituted phenyl group);
m is an integer of 0 to 4;
A represents an annelated ring of Formula (A₂) or Formula (A₄), 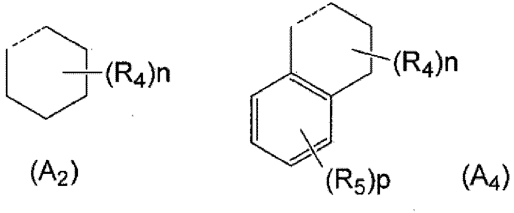
in these annelated rings,
a dotted line represents a C₅-C₆ bond of the naphthopyran ring in General Formula (5);
an α bond of the annelated ring (A₄) can be bonded to C₅ or C₆ of the naphthopyran ring in General Formula (5);
R₄'s are the same or different from each other, and independently represent OH, a linear or branched alkyl group or alkoxy group having 1 to 6 carbon atoms, or two R₄'s form carbonyl (CO) ;
R₅ represents halogen;
a linear or branched alkyl group having 1 to 12 carbon atoms;
a linear or branched haloalkyl group having 1 to 6 carbon atoms which has been substituted with at least one halogen atom;
a cycloalkyl group having 3 to 12 carbon atoms;
a linear or branched alkoxy group having 1 to 6 carbon atoms;
a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group);
-NH₂ or -NHR (where R is a linear or branched alkyl group having 1 to 6 carbon atoms);
a substituted or unsubstituted phenoxy or naphthoxy group (which has, as a substituent, at least a linear or branched alkyl group or alkoxy group having 1 to 6 carbon atoms); or
a -COR₉, -COOR₉, or -CONHR₉ group (where R₉ is a linear or branched alkyl group having 1 to 6 carbon atoms, a cycloalkyl group having 3 to 6 carbon atoms, or a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group));
in a case where A represents (A₄), n is an integer of 0 to 2 and p is an integer of 0 to 4, and in a case where A represents (A₂), n is an integer of 0 to 2,

   PC-L-Chain (a)

   PC-L-Chain-L'-PC' (b)
wherein PC and PC' each represent any one of General Formulas (c) to (f), and PC and PC' may be the same or different from each other 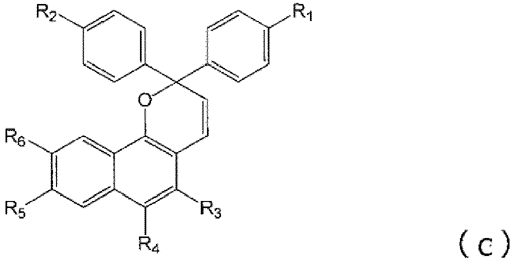 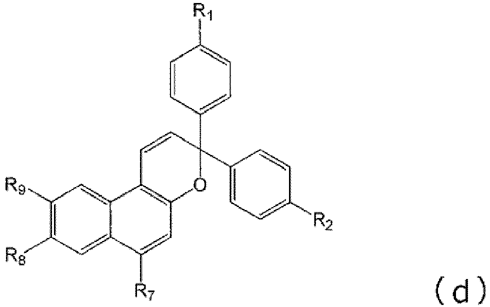 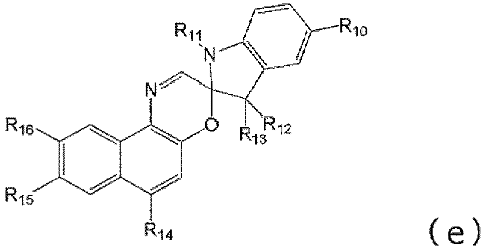 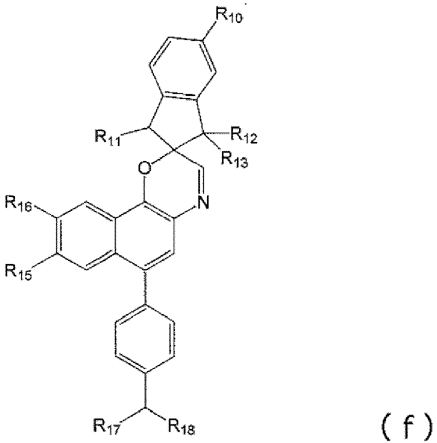
wherein R₁ to R₁₈, which may be the same or different from one another, each represent hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, in which
the aliphatic group, alicyclic group, or aromatic organic group may contain an oxygen atom or a nitrogen atom,
any one of the groups contained in the compounds represented by General Formulas (c) to (f) is bonded to L or L' which is a divalent organic group,
L and L' each represent a divalent organic group containing one or more kinds selected from an oxyethylene chain, an oxypropylene chain, a (thio)ester group, and a (thio)amide group, and
the Chain represents a monovalent or divalent organic group containing at least one kind selected from a polysiloxane chain and a polyoxyalkylene chain.

In the polymerizable composition, the polymerizable compound may contain at least two kinds selected from compounds represented by General Formulas (i), (ii), (iii), and (iv), 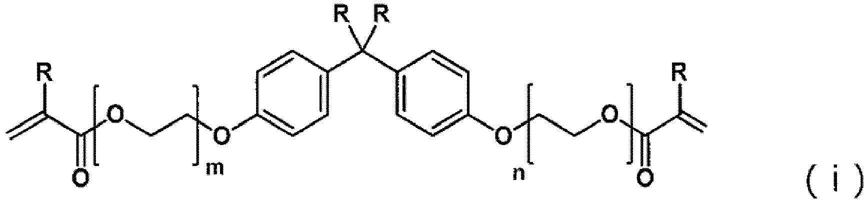
in which in the formula, R represents a hydrogen atom or a methyl group, and a plurality of R's may be the same or different from one another, and
m and n each represent an integer of 0 to 20 and may be the same or different from each other, and 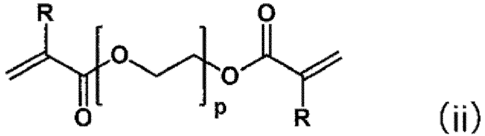
in which in the formula, R represents a hydrogen atom or a methyl group, and a plurality of R's may be the same or different from each other, and
p represents an integer of 0 to 20, 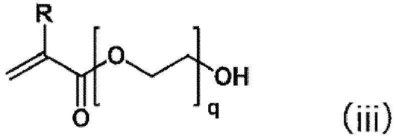
in which in the formula, R represents a hydrogen atom or a methyl group, and q represents an integer of 0 to 20.

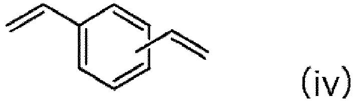

In the polymerizable composition, the polymerizable compound may contain an allyl carbonate compound (A) which is represented by General Formula (11) and contains two or more allyloxycarbonyl groups, and a (meth)acrylate compound (B) which is represented by General Formula (12) and contains two or more (meth)acryl groups, and
the compound (A) is contained in an amount of 5% by weight to 30% by weight and the compound (B) is contained in an amount of 70% by weight to 95% by weight, in a total of 100% by weight of the compound (A) and the compound (B), 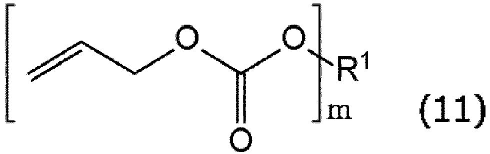
wherein R¹ represents a divalent to twenty-valent group derived from chained or branched C3 to C35 aliphatic polyol which optionally contain a heteroatom, or a divalent to twenty-valent group derived from C5 to C40 cycloaliphatic polyol which optionally contain a heteroatom, and
m represents an integer of 2 to 10,
where R¹ does not contain an allyloxycarbonyl group, 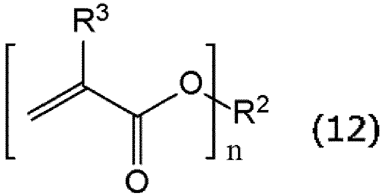
wherein R² represents a divalent to tetravalent organic group having 1 to 30 carbon atoms which optionally contain a heteroatom or an aromatic group,
R³ represents a hydrogen atom or a methyl group, and
n represents an integer of 2 to 4.

In the polymerizable composition, the polymerizable compound contains a polyisocyanate compound (a), a polyol compound (b) having a number average molecular weight of 100 or more, and a bifunctional or higher functional active hydrogen compound (c) (with the proviso that the compound (b) is excluded).

The invention also provides a photochromic lens obtained by curing the polymerizable composition of the invention.

The invention also provides a plastic polarizing lens, containing:
a polarizing film; and
a base material layer comprised of the polymerizable composition of the invention which is formed on at least a surface of the polarizing film located at an objective surface side.

In the present invention, for example, "a bis (allyl carbonate) compound of diol" means a compound having a structure in which two hydroxyl groups of diol are substituted with allyl carbonate groups. For the diol, one kind may be used or two or more kinds may be used in combination.

In the present invention, for example, "a bis (allyl carbonate) compound of a mixture of diethylene glycol and neopentyl glycol" means
(1) a compound having a structure in which two hydroxyl groups of diethylene glycol are substituted with allyl carbonate groups, and
(2) a compound having a structure in which two hydroxyl groups of neopentyl glycol are substituted with allyl carbonate groups.
   In addition, in the present invention, for example, "an oligomer of a bis (allyl carbonate) compound of a mixture of diethylene glycol and neopentyl glycol" means any one of the following (3), (4), or (5), or a mixture of two or more kinds selected therefrom.
(3) Oligomer of bis(allyl carbonate) compound of diethylene glycol
   A compound having a structure in which two or more molecules of diethylene glycol are oligomerized via a carbonate bond and terminal hydroxyl groups are substituted with allyl carbonate groups.
(4) Oligomer of bis(allyl carbonate) compound of neopentyl glycol
   A compound having a structure in which two or more molecules of neopentyl glycol are oligomerized via a carbonate bond and terminal hydroxyl groups are substituted with allyl carbonate groups.
(5) Oligomer of bis(allyl carbonate) compound of diethylene glycol and neopentyl glycol

A compound having a structure in which one or more molecules of diethylene glycol and one or more molecules of neopentyl glycol are oligomerized in the same molecule in a random combination via a carbonate bond, and terminal hydroxyl groups are substituted with allyl carbonate groups.

The same applies to "a bis(allyl carbonate) compound of trifunctional or higher functional polyol" and "a bis (allyl carbonate) compound using two or more kinds of diol and trifunctional or higher functional polyol".

In a case of "an oligomer of a bis(allyl carbonate) compound of trifunctional or higher functional polyol" and "an oligomer of a bis (allyl carbonate) compound using two or more kinds of diol and trifunctional or higher functional polyol", a structure in which all terminal hydroxyl groups are substituted with allyloxy carbonate groups, or a structure in which some hydroxyl groups are substituted with allyloxy carbonate groups.

In the present invention, for example, "1 to 10" means "equal to or greater than 1 and equal to or less than 10 ".

In the present invention, a heteroatom means an atom other than C and H.

In the present invention, "at the time of decoloration" means a state in which a sample is stored in a dark place at 65°C for 2 hours and then stored in a dark place at 23°C for at least 12 hours, using a method in accordance with ISO/DIS 8980-3 (JIS T7333) .

### ADVANTAGEOUS EFFECTS OF INVENTION

According to a molded product of the present invention, it is possible to provide a photochromic lens having an excellent anti-glare property and an excellent contrast property while retaining a high color-development density.

### BRIEF DESCRIPTION OF THE DRAWINGS

The above-mentioned objects, other objects, features, and advantages will become more apparent from the following description and the accompanying drawings.

Fig. 1 is a chart showing a transmittance curve of a resin flat plate obtained in Example 1.
Fig. 2 is a chart showing a transmittance curve of a resin flat plate obtained in Example 2.
Fig. 3 is a chart showing a transmittance curve of a resin flat plate obtained in Example 3.
Fig. 4 is a chart showing a transmittance curve of a resin flat plate obtained in Example 4.
Fig. 5 is a chart showing a transmittance curve of a resin flat plate obtained in Example 5.
Fig. 6 is a chart showing a transmittance curve of a resin flat plate obtained in Example 6.
Fig. 7 is a chart showing a transmittance curve of a resin flat plate obtained in Example 7.
Fig. 8 is a chart showing a transmittance curve of a resin flat plate obtained in Example 8.
Fig. 9 is a chart showing a transmittance curve of a resin flat plate obtained in Example 9.
Fig. 10 is a chart showing a transmittance curve of a resin flat plate obtained in Comparative Example 1.
Fig. 11 is a chart showing a transmittance curve of a resin flat plate obtained in Comparative Example 2.
Fig. 12 is a chart showing a transmittance curve of a resin flat plate obtained in Comparative Example 3.
Fig. 13 is a chart showing a transmittance curve of a resin flat plate obtained in Comparative Example 4.
Fig. 14 is a chart showing a transmittance curve of a resin flat plate obtained in Comparative Example 5.
Fig. 15 is a chart showing a transmittance curve of a resin flat plate obtained in Comparative Example 6.
Fig. 16 is a chart showing a transmittance curve of a resin flat plate obtained in Comparative Example 7.
Fig. 17 is a chart showing a transmittance curve of a resin flat plate obtained in Comparative Example 8.

### DETAILED DESCRIPTION

The photochromic lens of the invention comprises a tetraazaporphyrin compound represented by General Formula (1), and a photochromic dye, in which a transmittance at 23°C after irradiation using a xenon lamp at an illuminance of 50,000 lux for 15 minutes satisfies the following conditions:
(1) A transmittance at 550 nm is 25% or less, preferably 23% or less, and more preferably 21% or less.
(2) A transmittance a at 550 nm is larger than a minimum transmittance b between 575 nm and 600 nm, and a difference (a - b) between the transmittance a and the transmittance b is 5% or more, preferably 7% or more, and more preferably 9% or more.
(3) There are one or more points of inflection in a transmittance curve from 550 nm to 600 nm.

Conditions for irradiation using the xenon lamp at an illuminance of 50,000 lux are based on ISO8980-3. The tetraazaporphyrin compound represented by General Formula (1) is as described herein.

The photochromic lens satisfying the above conditions allows a high color optical density and an excellent anti-glare property to be exhibited, and a remarkable contrast property to be expressed even in a region where a color optical density is high.

Furthermore, in the photochromic lens of the present invention, a luminous transmittance at the time of decoloration can be 70% or more, preferably 72% or more, and more preferably 75% or more.

Accordingly, the photochromic lens of the invention is capable of exerting a photochromic performance and is also capable of expressing excellent visibility (contrast property) in any state including a case where color development occurs in the photochromic lens and a case where decoloration occurs in the photochromic lens.

The photochromic lens of the invention contains a tetraazaporphyrin compound represented by general Formula (1), a photochromic dye, and a resin.

The respective components will be described below.

### [Tetraazaporphyrin compound]

As the tetraazaporphyrin compound, it is possible to use a compound having a main absorption peak (P) between 565 nm and 605 nm in a visible absorption spectroscopy spectrum measured with a chloroform or toluene solution, in which an absorbance coefficient (ml/g · cm) at a peak apex of the peak (P) (Pmax: a point showing a maximum absorbance coefficient in the peak) is 0.5 × 10⁵ or more, a peak width at a absorbance of 1/4 of an absorbance at the (Pmax) of the peak (P) is 50 nm or less, a peak width at a absorbance of 1/2 of the absorbance at the (Pmax) of the peak (P) is 30 nm or less, and a peak width at a absorbance of 2/3 of the absorbance at the (Pmax) of the peak (P) is 20 nm or less.

It is preferred that the peak apex (Pmax) of the main absorption peak (P) is between 580 nm and 590 nm. In addition, the peak width at a absorbance of 1/4 of the absorbance at the (Pmax) of the peak (P) may be 40 nm or less, the peak width at a absorbance of 1/2 of the absorbance at the (Pmax) of the peak (P) may be 25 nm or less, and the peak width at a absorbance of 2/3 of the absorbance at the (Pmax) of the peak (P) may be 20 nm or less.

The tetraazaporphyrin compound is a compound represented by General Formula (1).

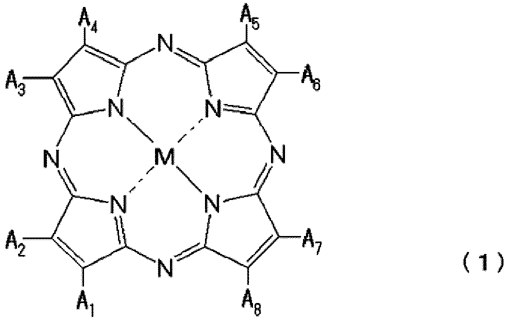

In General Formula (1), A₁ to As each independently represent a hydrogen atom, a halogen atom, a nitro group, a cyano group, a hydroxyl group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, or may form a ring other than an aromatic ring via a linking group, and M represents two hydrogen atoms, an optionally substituted metal atom, or an oxy metal atom. As the metal atom, a copper atom, a nickel atom, and a cobalt atom are mentioned. As trade names of the tetraazaporphyrin compound, for example, FDG-004, FDG-005, FDG-006, and FDG-007, manufactured by Yamada Kasei Company, Ltd. are mentioned.

Regarding the tetraazaporphyrin compound represented by General Formula (1), M in General Formula (1) is more preferably divalent copper. As specific examples, a tetra-t-butyl-tetraazaporphyrin copper complex represented by Formula (1a) is mentioned, and this corresponds to a product number PD-311S (manufactured by Mitsui Chemicals, Inc.).

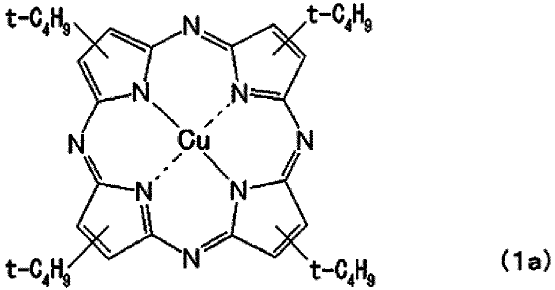

In Formula (1a), Cu represents divalent copper, and t-C₄H₉ represents a tertiary-butyl group of which substitution positions of four substituents are either A₁ or A₂, either A₃ or A₄, either A₅ or A₆, and either A₇ or A₈ in General Formula (1) .

In the photochromic lens, the tetraazaporphyrin compound can be contained in an amount of 1 to 15 ppm and preferably 5 to 15 ppm, with respect to 100% by weight of the resin. An amount added thereof cannot be unconditionally limited because a performance varies depending on a kind of the tetraazaporphyrin compound, and the amount is appropriately selected depending on a performance of the tetraazaporphyrin compound, and kinds and amounts added of a naphthopyran-based compound as a photochromic compound and the photochromic compound represented by General Formula (a) or General Formula (b).

### [Photochromic dye]

In the photochromic lens of the invention, the photochromic dye (photochromic compound) is not particularly limited, and any compound can be appropriately selected from compounds known in the related art which can be used for a photochromic lens. For example, one kind or two or more kinds from a spiropyran-based compound, a spirooxazine-based compound, a fulgide-based compound, a naphthopyran-based compound, and a bisimidazole compound can be used depending on a desired coloration, and at least one kind selected from General Formula (a) and General Formula (b) as described later can also be used.

As examples of the spiropyran-based compound, the respective substitutes obtained by substituting an indole ring and a benzene ring of indolinospirobenzopyran with halogen, methyl, ethyl, methylene, ethylene, or a hydroxyl group, the respective substitutes obtained by substituting an indole ring and a naphthalene ring of indolinospironaphthopyran with halogen, methyl, ethyl, methylene, ethylene, or a hydroxyl group, the respective substitutes obtained by substituting an indole ring of indolinospiroquinolinopyran with halogen, methyl, ethyl, methylene, ethylene, or a hydroxyl group, the respective substitutes obtained by substituting an indole ring of indolinospiropyridopyran with halogen, methyl, ethyl, methylene, ethylene, or a hydroxyl group, , are mentioned.

As examples of the spirooxazine-based compound, the respective substitutes obtained by substituting an indole ring and a benzene ring of indolinospirobenzoxazine with halogen, methyl, ethyl, methylene, ethylene, or a hydroxyl group, the respective substitutes obtained by substituting an indole ring and a naphthalene ring of indolinospironaphthoxazine with halogen, methyl, ethyl, methylene, ethylene, or a hydroxyl group, the respective substitutes obtained by substituting an indole ring of indolinospirophenanthroxazine with halogen, methyl, ethyl, methylene, ethylene, or a hydroxyl group, the respective substitutes obtained by substituting an indole ring of indolinospiroquinolinoxazine with halogen, methyl, ethyl, methylene, ethylene, or a hydroxyl group, the respective substitutes obtained by substituting a piperidine ring and a naphthalene ring of piperidinospironaphthoxazine with halogen, methyl, ethyl, methylene, ethylene, or a hydroxyl group, are mentioned.

As examples of the fulgide-based compound, N-cyanomethyl-6,7-dihydro-4-methyl-2-phenylspiro(5,6-benzo[b]thi ophenedicarboximido-7,2'-tricyclo[3.3.1.1^{3,7}]decane), N-cyanomethyl-6,7-dihydro-2-(p-methoxyphenyl)-4-methylspiro(5,6-benzo[b]thiophenedicarboximide-7,2'-tricyclo[3.3.1.1^{3,7}]decane), 6,7-dihydro-N-methoxycarbonylmethyl-4-methyl-2-phenylspiro(5,6-b enzo[b]thiophenedicarboximide-7,2'-tricyclo[3.3.1.1^{3,7}]decane), 6,7-dihydro-4-methyl-2-(p-methylphenyl)-N-nitromethylspiro(5,6-b enzo[b]thiophenedicarboximide-7,2'-tricyclo[3.3.1.1^{3,7}]decane), N-cyanomethyl-6,7-dihydro-4-cyclopropyl-3-methylspiro(5,6-benzo[ b]thiophenedicarboximido-7,2'-tricyclo[3.3.1.1^{3,7}]decane), N-cyanomethyl-6,7-dihydro-4-cyclopropylspiro(5,6-benzo[b]thiophe nedicarboximide-7,2'-tricyclo[3.3.1.1^{3,7}]decane), N-cyanomethyl-6,7-dihydro-2-(p-methoxyphenyl)-4-cyclopropylspiro (5,6-benzo[b]thiophenedicarboximido-7,2'-tricyclo[3.3.1.1^{3,7}]deca ne), are mentioned.

As examples of the naphthopyran-based compound, spiro[norbornane-2,2'-[2H]benzo[h]chromene], spiro[bicyclo[3.3.1]nonane-9,2'-[2H]benzo[h]chromene], 7'-methoxyspiro[bicyclo[3.3.1]nonane-9,2'-[2H]benzo[h]chromene], 7'-methoxyspi [norbornane-2,2'-[2H]benzo[f]chromene], 2,2-dimethyl-7-octoxy [2H]benzo[h]chromene, spiro[2-bicyclo[3.3.1]nonene-9,2'-[2H]benzo[h]chromene], spiro[2-bicyclo[3.3.1]nonene-9,2'-[2H]benzo[f]chromene], 6-morpholino-3,3-bis(3-fluoro-4-methoxyphenyl)-3H-benzo(f)chrome ne, 5-isopropyl-2,2-diphenyl-2H-benzo(h)chromene, and the compound represented by Formula (3) and the compound represented by Formula (4) are mentioned.

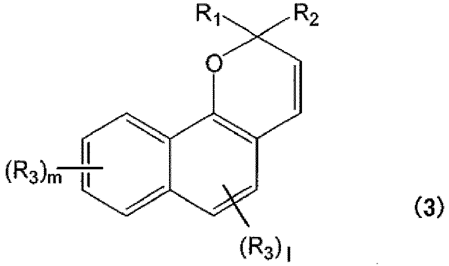

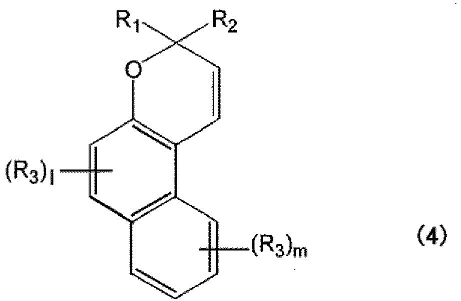

In General Formula (3) and General Formula (4), R₁ and R₂ may be the same or different from each other, and independently represent hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms;
an aralkyl or heteroaralkyl group (in which a linear or branched alkyl group having 1 to 4 carbon atoms is substituted with the above-mentioned aryl group or heteroaryl group).

As a substituent in the substituted aryl group having 6 to 24 carbon atoms or the substituted heteroaryl group having 4 to 24 carbon atoms, at least one is selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted by at least one halogen atom, a linear or branched haloalkoxy group having 1 to 12 carbon atoms which has been substituted by at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, -NH₂ group, -NHR group, -N(R)₂ group (R is a linear or branched alkyl group having 1 to 6 carbon atoms, and, in a case where there are two R's, the two R's may be the same or different from each other), and a methacryloyl group or an acryloyl group.

R₃'s, which may be the same or different from each other, are independently a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which has been substituted with at least one halogen atom, a halocycloalkyl group having 3 to 12 carbon atoms which has been substituted with at least one halogen atom, and a linear or branched haloalkoxy group having 1 to 12 carbon atoms which has been substituted with at least one halogen atom;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, and an amine group);
an aralkyl or heteroaralkyl group (in which a linear or branched alkyl group having 1 to 4 carbon atoms is substituted with the aryl group or heteroaryl group);
a substituted or unsubstituted phenoxy or naphthoxy group (which has, as a substituent, at least one substituent selected from a linear or branched alkyl group or alkoxy group having 1 to 6 carbon atoms) ;
-NH₂, -NHR, -CONH₂, or -CONHR (R is a linear or branched alkyl group having 1 to 6 carbon atoms);
or -OCOR₈ or -COOR₈ (where R₈ is a linear or branched alkyl group having 1 to 6 carbon atoms or a cycloalkyl group having 3 to 6 carbon atoms, a phenyl group which is substituted by at least one substituent of the substituted aryl group or the substituted heteroaryl group in R₁ and R₂, or an unsubstituted phenyl group).

At least two adjacent R₃'s can be bonded together so that the carbon atom to which R₃ is bonded is included, to form one or more aromatic ring groups or non-aromatic ring groups. The aromatic ring group or non-aromatic ring group includes one ring or two annelated rings optionally containing a heteroatom selected from the group consisting of oxygen, sulfur, and nitrogen.

l is an integer of 0 to 2. m is an integer of 0 to 4.

In addition, as the naphthopyran-based compound, compounds obtained by adding a photochromic dye molecule to at least one terminal of each of polysiloxane oligomer, polyalkylene oxide, and polyalkyl ester as described in Pamphlet of International Publication No. WO2013/78086, Pamphlet of International Publication No. WO2012/149599, Pamphlet of International Publication No. WO2010/020770, and Pamphlet of International Publication No. WO2009/146509, and compounds in which a structure represented by General Formula (3) or (4) is linked with a linking group and which contains two or more naphthopyran rings in one molecule are additionally mentioned.

In the naphthopyran-based compound represented by General Formula (3), a compound represented by General Formula (5) (hereinafter also referred to as a compound (5)) is mentioned as a preferable example.

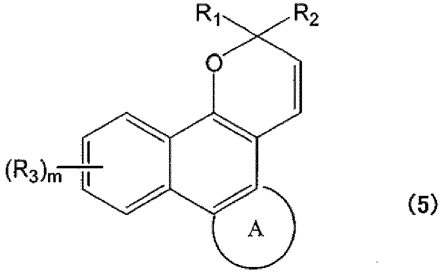

R₁, R₂, R₃, and m are the same as defined above, and A represents an annelated ring of Formulas (A₁) to (A₅).

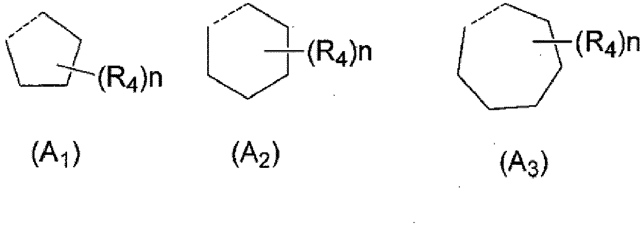

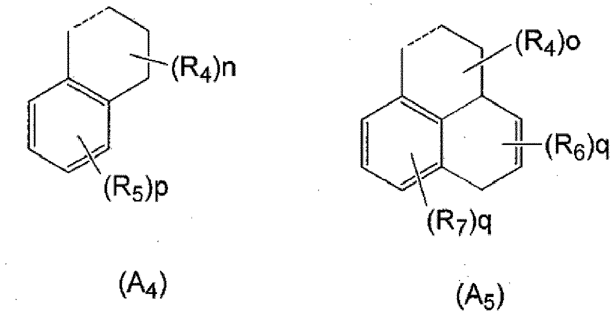

In these annelated rings (A₁) to (A₅), a dotted line represents a C₅-C₆ bond of the naphthopyran ring in General Formula (5). An α bond of the annelated ring (A₄) or (A₅) can be bonded to C₅ or C₆ of the naphthopyran ring in General Formula (5).

R₄'s are the same or different from each other and independently represent OH, a linear or branched alkyl group or alkoxy group having 1 to 6 carbon atoms, or two R₄'s form carbonyl (CO) .
R₅, R₆, and R₇ are independently a halogen atom (preferably fluorine, chlorine, or bromine);
a linear or branched alkyl group having 1 to 12 carbon atoms (preferably a linear or branched alkyl group having 1 to 6 carbon atoms);
a linear or branched haloalkyl group having 1 to 6 carbon atoms (preferably a fluoroalkyl group) which has been substituted with at least one halogen atom;
a cycloalkyl group having 3 to 12 carbon atoms;
a linear or branched alkoxy group having 1 to 6 carbon atoms;
a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group);
NH₂ or -NHR (where R is a linear or branched alkyl group having 1 to 6 carbon atoms);
a substituted or unsubstituted phenoxy or naphthoxy group (which has, as a substituent, a linear or branched alkyl group or alkoxy group having at least 1 to 6 carbon atoms)); or
a -COR₉, -COOR₉, or -CONHR₉ group (where R₉ represents a linear or branched alkyl group having 1 to 6 carbon atoms, a cycloalkyl group having 3 to 6 carbon atoms, or a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group)).
n is an integer of 0 to 6, o is an integer of 0 to 2, p is an integer of 0 to 4, and q is an integer of 0 to 3.

In a case where A represents (A₄), n is an integer of 0 to 2 and p is an integer of 0 to 4, and, in a case where A represents (A₂), n is an integer of 0 to 2.

The photochromic compound of General Formula (5) has high coloring adaptability even at 40°C with being combined with a discoloration reaction rate which is applied to a use being required. Easily achievable colors range from orange to blue.

A mixture of compounds (5) that belong to at least one different kind of compound selected from the group consisting of a compound (5) in which A = (A₁), a compound (5) in which A = (A₂), a compound (5) in which A = (A₃), a compound (5) in which A = (A₄), and a compound (5) in which A = (A₅) is included.

As the compound (5), a compound represented by General Formula (6) can be preferably used.

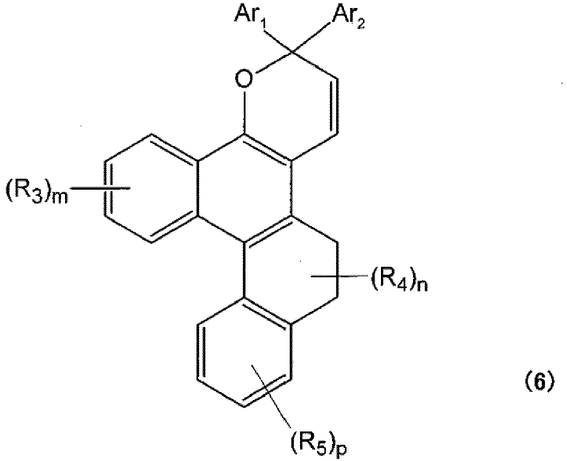

Ar₁ and Ar₂ are aromatic groups, and these may be the same or different from each other, each representing an optionally substituted benzene ring or thiophene ring. As a substituent of the benzene ring or the thiophene ring, a linear or branched alkyl group having 1 to 10 carbon atoms, a linear or branched alkoxy group having 1 to 10 carbon atoms, and an amino group which is mono- (or di-) substituted with a linear or branched alkyl having 1 to 6 carbon atoms are mentioned. R₃, R₄, R₅, m, n, and p have the same meanings as defined above.

As the compound (5), a compound represented by General Formula (7) can be more preferably used.

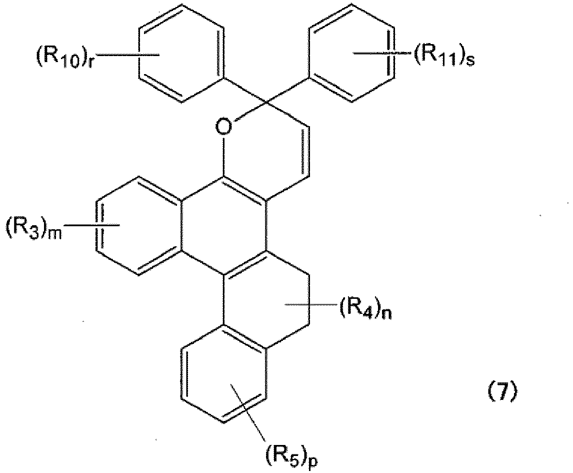

In Formula (7), R₁₀ and R₁₁ may be the same or different from each other and each represent a linear or branched alkyl group having 1 to 10 carbon atoms, a linear or branched alkoxy group having 1 to 10 carbon atoms, or an amino group which is mono- (or di-) substituted with a linear or branched alkyl having 1 to 6 carbon atoms. In a case where m is 2, adjacent R₃'s can be bonded to each other so that the carbon atom to which R₃ is bonded is included, to form a ring structure, r and s are each an integer of 0 to 4. The ring structure is a substituted or unsubstituted aryl group having 6 to 24 carbon atoms or a substituted or unsubstituted heteroaryl group having 3 to 24 carbon atoms.

R₃, R₄, R₅, m, n, and p have the same meanings as defined above.

As specific examples of the compound represented by General Formula (7), a compound represented by Formula (8) or Formula (9) is mentioned. The compounds represented by Formula (8) and Formula (9) are preferable.

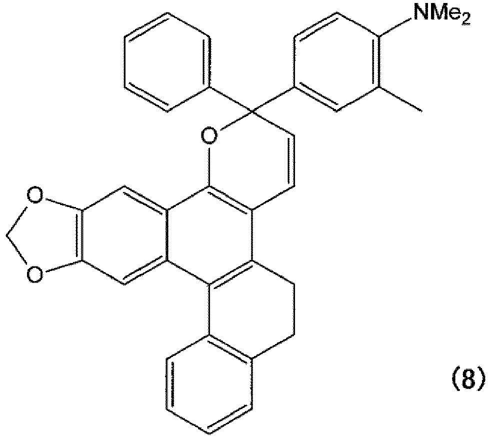

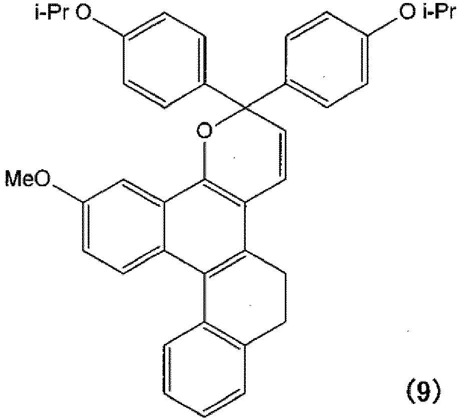

The compound represented by General Formula (5) which is a photochromic compound can be synthesized by a known method. For example, the compound can be synthesized by the method described in PCT Japanese Translation Patent Publication No. 2004-500319.

In addition, as a specific example of the naphthopyran-based compound represented by General Formula (3), a compound represented by Formula (10) can be mentioned as a preferable example.

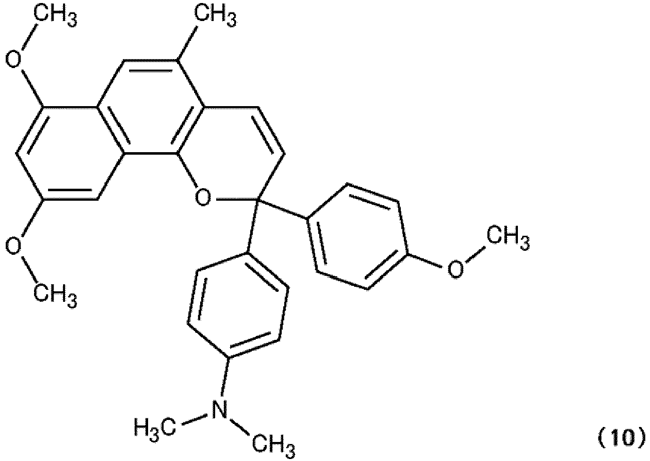

As the naphthopyran-based compound, one kind or two or more kinds of compounds selected from the compounds described above may be used.

In the photochromic lens, naphthopyran-based compound can be contained in an amount of 100 to 3,000 ppm and preferably 100 to 2,000 ppm, with respect to 100% by weight of the resin. An amount added thereof cannot be unconditionally limited because a performance varies depending on a kind of the tetraazaporphyrin compound, and the amount is appropriately selected depending on a performance of the naphthopyran-based compound, and kinds and amounts added of the tetraazaporphyrin compound.

As the photochromic compound, at least one kind selected from General Formulas (a) and (b) can be used.

PC-L-Chain (a)

PC-L-Chain-L'-PC' (b)

PC and PC' each represent a monovalent group derived from the compounds of Formulas (c) to (f). PC and PC' may be the same or different from each other.

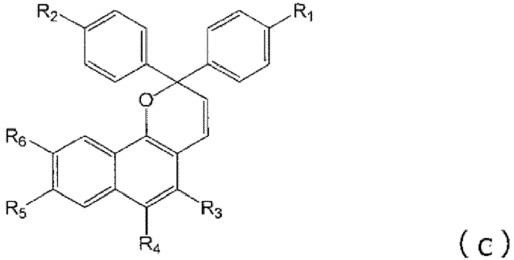

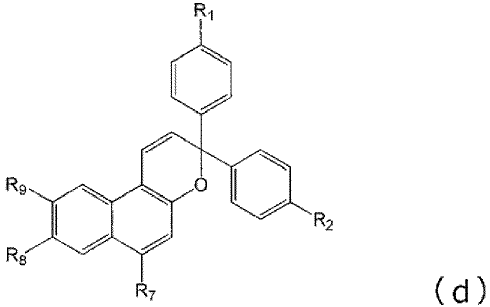

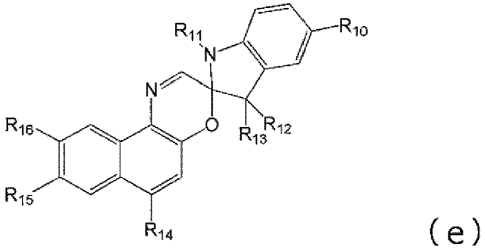

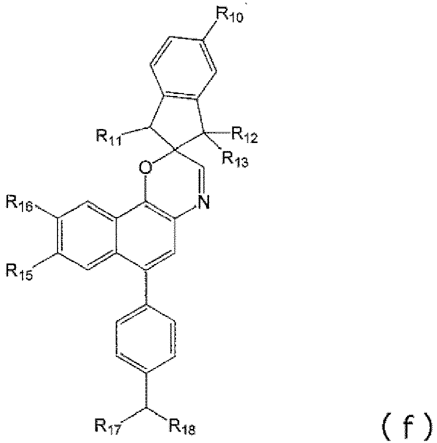

R₁ to R₁₈ in Formulas (c) to (f) are each hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, and may be the same or different from each other. The aliphatic group, the alicyclic group, or the aromatic organic group may contain an oxygen atom or a nitrogen atom. Any one of the groups contained in the compounds represented by Formulas (c) to (f) is bonded to L or L' which is a divalent organic group.

As the optionally substituted C1 to C20 aliphatic group, a linear or branched C1 to C10 alkyl group, a linear or branched C1 to C10 alkoxy group, a linear or branched C2 to C10 alkenyl group, a C1 to C10 hydroxyalkyl group, a C1 to C10 hydroxyalkoxy group, a C1 to C10 alkyl group substituted with a C1 to C10 alkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C10 alkylamino group, a C1 to C10 aminoalkyl group, and a linear or branched C1 to C20 alkoxycarbonyl group can be mentioned.

As the optionally substituted C3 to C20 alicyclic group, a C3 to C20 cycloalkyl group and a C6 to C20 bicycloalkyl group can be mentioned.

As the optionally substituted C6 to C20 aromatic organic group, a phenyl group, a C7 to C16 alkoxyphenyl group, an arylamino group, a diarylamino group, an aryl C1 to C5 alkylamino group, a cyclic amino group, an arylcarbonyl group, and an aroyl group can be mentioned.

As R₁ and R₂, preferably, a hydrogen atom; a halogen atom; an optionally substituted C1 to C20 aliphatic group such as a linear or branched C1 to C10 alkyl group, a linear or branched C1 to C10 alkoxy group, a C1 to C10 hydroxyalkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, and a C1 to C5 alkylamino group; an optionally substituted C6 to C20 aromatic group such as a phenyl group, a C7 to C16 alkoxyphenyl group, a C1 to C5 dialkylamino group, an arylamino group, a diarylamino group, an aryl C1 to C5 alkylamino group, and a cyclic amino group; can be mentioned. R₁ and R₂ may be the same or different from each other.

As R₃, preferably, a hydrogen atom; a halogen atom; a carboxyl group; an acetyl group; an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group; an optionally substituted C3 to C20 alicyclic group such as a C3 to C20 cycloalkyl group and a C6 to C20 bicycloalkyl group; an optionally substituted C6 to C20 aromatic organic group such as an arylcarbonyl group, a formyl group, and an aroyl group; can be mentioned.

As R₄, preferably, a hydrogen atom; a halogen atom; a carboxyl group; an acetyl group; a formyl group; an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group; an optionally substituted C3 to C20 alicyclic group such as a C3 to C20 cycloalkyl group and a C6 to C20 bicycloalkyl group;
an optionally substituted C6 to C20 aromatic organic group such as alkylcarbonyl group, an aroyl group, a phenyl group, a C7 to C16 alkoxyphenyl group, a C1 to C10 dialkoxyphenyl group, a C1 to C10 alkylphenyl group, and a C1 to C10 dialkylphenyl group; can be mentioned.

R₃ and R₄ may be bonded to each other. In a case where R₃ and R₄ are bonded to each other to form a cyclic structure, General Formula (g) or (h) is mentioned. A dotted line portion represents a bond between the carbon atom to which R₃ is bonded and the carbon atom to which R₄ is bonded.

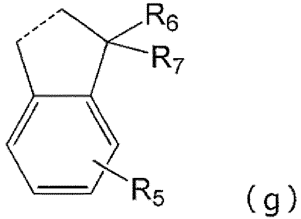

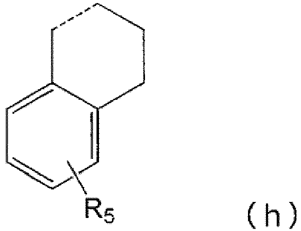

R₅, R₆, R₇, R₈, R₉, R₁₀, R₁₄, R₁₅, and R₁₆ represent the same functional groups as R₁ and R₂. A plurality of R₅'s to R₇'s may be the same or different from each other.

As R₁₁, preferably, a hydrogen atom; a halogen atom; an optionally substituted C1 to C20 aliphatic group such as a linear or branched C1 to C20 alkyl group, a C1 to C5 haloalkyl group, a C1 to C5 dihaloalkyl group, and a C1 to C5 trihaloalkyl group; an optionally substituted C3 to C20 alicyclic group such as C3 to C20 cycloalkyl group, C6 to C20 bicycloalkyl group, a C3 to C20 cycloalkyl group substituted with a C1 to C5 alkyl group, and a C6 to C20 bicycloalkyl group substituted with a C1 to C5 alkyl group; an optionally substituted C6 to C20 aromatic organic group such as an aryl group substituted with a C1 to C5 alkyl group; can be mentioned.

As R₁₂ and R₁₃, preferably, a hydrogen atom, a halogen atom; an optionally substituted C1 to C20 aliphatic group such as a C1 to C10 alkyl group and a C1 to C5 alkylalkoxycarbonyl group; an optionally substituted C3 to C20 alicyclic group such as a C5 to C7 cycloalkyl group; are mentioned.

As R₁₇ and R₁₈, preferably, a hydrogen atom; a halogen atom; an optionally substituted C1 to C20 aliphatic group such as a linear or branched C1 to C10 alkyl group and a C1 to C10 hydroxyalkyl group; an optionally substituted C3 to C20 alicyclic group such as a C5 to C7 cycloalkyl group; are mentioned.

L and L' in General Formula (a) or (b) each represent a divalent organic group containing at least one kind of group selected from an oxyethylene chain, an oxypropylene chain, a (thio)ester group, and a (thio)amido group.

Specifically, L and L' are represented by General Formulas (i) to (o). L and L' may be the same or different from each other.

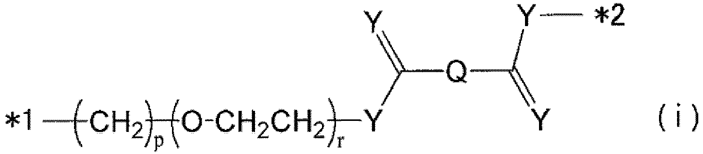

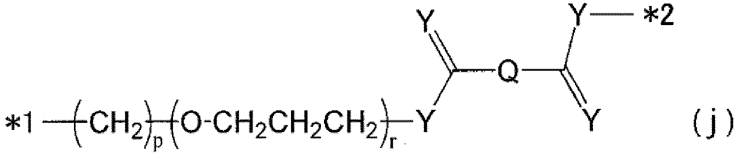

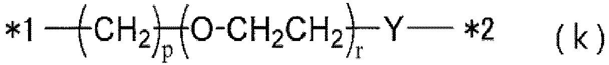

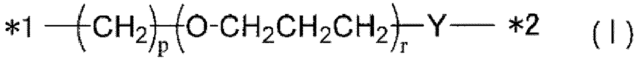

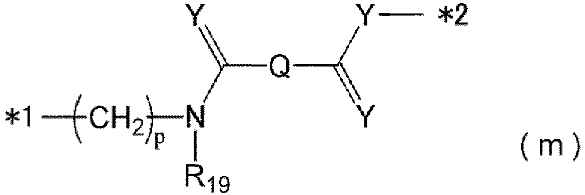

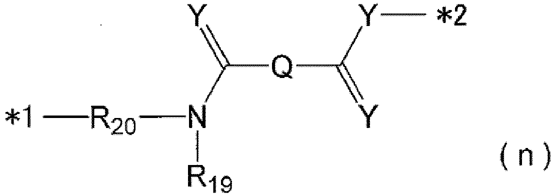

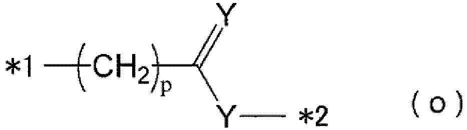

In Formulas (i) to (o),
Y represents oxygen or sulfur,
R₁₉ represents hydrogen, or a linear or branched C1 to C10 alkyl group,
R₂₀ represents a linear or branched C1 to C10 alkyl group,
p represents an integer of 0 to 15, and r represents an integer of 0 to 10,
Q represents a linear or branched C1 to C10 alkylene group, a C1 to C10 alkenylene group, a divalent group derived from a substituted aryl group at a 1,2-, 1,3-, or 1,4-position, a divalent group derived from a substituted heteroaryl group,
*1 and *2 represent bonding hands, in which *1 is bonded to a monovalent or divalent organic group represented by "Chain", and *2 is bonded to a monovalent organic group represented by PC or PC'.

"Chain" in General Formula (a) or (b) represents a monovalent or divalent organic group containing at least one kind selected from a polysiloxane chain and a polyoxyalkylene chain.

As the polysiloxane chain, a polydimethyl siloxane chain, a polymethylphenyl siloxane chain, and a polymethyl hydrosiloxane chain, are mentioned.

As the polyoxyalkylene chain, a polyoxyethylene chain, a polyoxypropylene chain, and a polyoxyhexamethylene chain, are mentioned.

Specifically, "Chain" represents a monovalent organic group of General Formula (p) or (q) in a case where the photochromic compound is General Formula (a).

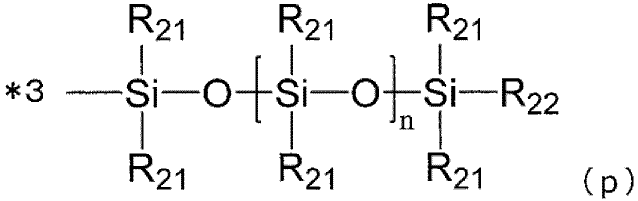

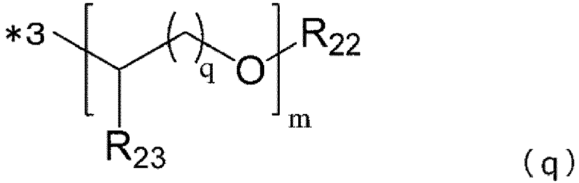

"Chain" represents a divalent organic group of General Formula (r) or (s) in a case where the photochromic compound is General Formula (b) .

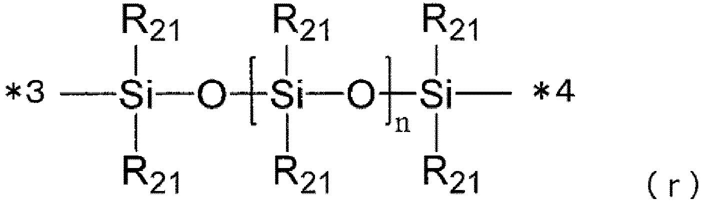

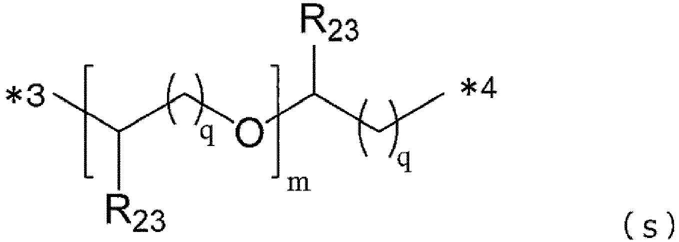

In Formulas (p) to (s),
R₂₁ represents a linear or branched C1 to C10 alkyl group,
R₂₂ represents a linear or branched C1 to C10 alkyl group,
R₂₃ represents hydrogen, a methyl group, or an ethyl group,
n represents an integer of 4 to 75, and m represents an integer of 1 to 50,
q represents an integer of 1 to 3,
*3 and *4 represent bonding hands, in which *3 is bonded to a divalent organic group represented by L, and *4 is bonded to a divalent organic group represented by L' .

In the photochromic lens (100% by weight), the photochromic compound represented by General Formula (a) or General Formula (b) can be contained in an amount of 100 to 3,000 ppm and preferably 100 to 2,000 ppm. An amount added thereof cannot be unconditionally limited because a performance varies depending on a kind of the photochromic compound represented by General Formula (a) or (b), and the amount is appropriately selected depending on a performance of the photochromic compound represented by General Formula (a) or (b), and kinds and amounts added of the tetraazaporphyrin compound.

The photochromic compound can be obtained by the methods described in Pamphlet of International Publication No. WO2009/146509, Pamphlet of International Publication No. WO2010/20770, Pamphlet of International Publication No. WO2012/149599, and Pamphlet of International Publication No. WO2012/162725.

As the photochromic compound, Reversacol Humber Blue (polydimethyl siloxane chain, naphthopyran-based chromophore (General Formula (c)), Reversacol Calder Blue (polydimethyl siloxane chain, naphthopyran-based chromophore (General Formula (c)), Reversacol Trent Blue (polydimethyl siloxane chain, naphthopyran-based chromophore (General Formula (c)), Reversacol Pennine Green (polydimethyl siloxane chain, naphthopyran-based chromophore (General Formula (c)), Reversacol Heath Green (polyoxyalkylene chain, naphthopyran-based chromophore (General Formula (c)), Reversacol Chilli Red (polydimethyl siloxane chain, naphthopyran-based chromophore General Formula (c)), Reversacol Wembley Grey (polyoxyalkylene chain, naphthopyran-based chromophore (General Formula (c)), Reversacol Cayenne Red (polyoxyalkylene chain, naphthopyran-based chromophore (General Formula (c)), and Reversacol Wilson Blue (polyoxyalkylene chain, and naphthopyran-based chromophore (General Formula (c)), manufactured by Vivimed Labs Ltd., are mentioned.

In the photochromic lens of the invention, superior visibility can be expressed even at the time of color development by containing a specific tetraazaporphyrin compound in combination with a photochromic dye.

### [Resin]

As the resin constituting the photochromic lens (base material), at least one kind selected from poly(meth)acrylate, polyallyl carbonate, and poly(thio)urethane is used.

### (Poly(meth) acrylate)

The poly (meth) acrylate, for example, contains a structural unit derived from at least two kinds of polymerizable monomers selected from the compounds represented by General Formulas (i), (ii), (iii), and (iv).

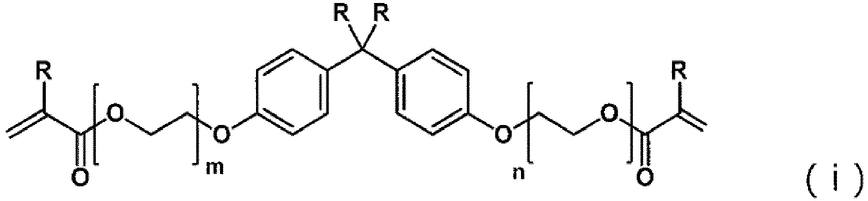

In the formula, R represents a hydrogen atom or a methyl group, and a plurality of R's may be the same or different from each other. m and n each represent an integer of 0 to 20 and may be the same or different from each other.

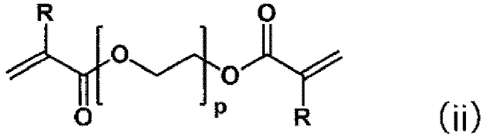

In the formula, R represents a hydrogen atom or a methyl group, and a plurality of R's may be the same or different from each other. p represents an integer of 0 to 20.

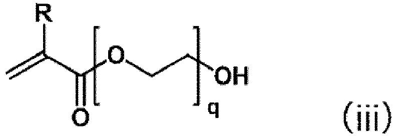

In the formula, R represents a hydrogen atom or a methyl group, and q represents an integer of 0 to 20.

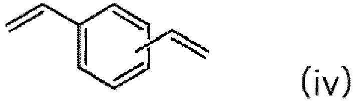

As the polymerizable monomer having a (meth)acryl group represented by General Formula (i), bisphenol A dimethacrylate, methylene-bis(4,1-phenylene)-bis(2-methacrylate), bisphenol A diacrylate, methylene-bis(4,1-phenyl)-bis(2-acrylate), 2,2-bis(4-methacryloyloxyphenyl)propane, 2,2-bis(4-acryloyloxyphenyl)propane, 2-(4-methacryloyloxyphenyl)-2-(4-methacryloyloxyphenyl)propane, 2-(4-acryloyloxyphenyl)-2-(4-acryloyloxyethoxyphenyl)propane, 2,2-bis(4-methacryloyloxyethoxyphenyl)propane, 2,2-bis(4-acryloyloxyethoxyphenyl)propane, 2-(4-(methacryloyloxyethoxyphenyl)-2-(4-(methacryloyloxyethoxy)e thoxyphenyl)propane, 2-(4-acryloyloxyethoxyphenyl)-2-(4-(acryloyloxyethoxy)ethoxyphen yl)propane, 2,2-bis(4-(methacryloyloxyethoxy)ethoxyphenyl)propane, and 2,2-bis(4-(acryloyloxyethoxy)ethoxyphenyl)propane, can be mentioned.

As the polymerizable monomer having a (meth)acryl group represented by General Formula (ii), ethylene glycol dimethacrylate, diethylene glycol dimethacrylate, triethylene glycol dimethacrylate, tetraethylene glycol dimethacrylate, ethylene glycol diacrylate, diethylene glycol diacrylate, triethylene glycol diacrylate, and tetraethylene glycol diacrylate, can be mentioned.

As the polymerizable monomer having a (meth)acryl group represented by Formula (iii), methacrylic acid, acrylic acid, 2-hydroxyethyl methacrylate, 2-hydroxyethyl acrylate, 2-(2-hydroxyethoxy)ethyl methacrylate, and 2-(2-hydroxyethoxy)ethyl acrylate, can be mentioned.

As a polymerizable monomer having a (meth) acryl group other than the monomers as mentioned above, one kind or two or more kinds of compounds selected from the group consisting of butanediol dimethacrylate, hexamethylene dimethacrylate, 2,2-bis(4-methacryloyloxyethoxy-3,5-dibromophenyl)propane, 2,2-bis(4-methacryloyloxypentaethoxyphenyl)propane, pentaerythritol triacrylate, pentaerythritol tetraacrylate, trimethylol propane triacrylate, dipentaerythritol hexaacrylate, bisphenol A-diglycidyl ether diacrylate type, bisphenol A-diglycidyl ether dimethacrylate type, tetrabromobisphenol A-diglycidyl ether diacrylate type, and tetrabromobisphenol A-diglycidyl ether dimethacrylate can be mentioned.

As a monomer (excluding the compound represented by Formula (iv)) other than the polymerizable monomer having a (meth) acryl group, one kind or two or more kinds of compounds selected from the group consisting of styrene, alphamethylstyrene, an alphamethylstyrene dimer, benzyl methacrylate, chlorostyrene, bromostyrene, methoxystyrene, monobenzyl malic acid, dibenzyl malic acid, monobenzyl fumarate, dibenzyl fumarate, methyl benzyl malic acid, dimethyl malic acid, diethyl malic acid, dibutyl malic acid, dibutyl fumarate, monobutyl malic acid, monopentyl malic acid, dipentyl malic acid, monopentyl fumarate, dipentyl fumarate, and diethylene glycol bisaryl carbonate can be used.

In 100% by weight of the poly (meth) acrylate, a structural unit derived from the polymerizable monomer represented by General Formula (i) can be contained in an amount of 20% to 70% by weight and preferably 30% to 60% by weight,
a structural unit derived from the polymerizable monomer represented by General Formula (ii) can be contained in an amount of 10% to 60% by weight and preferably 20% to 50% by weight,
a structural unit derived from the polymerizable monomer represented by General Formula (iii) can be contained in an amount of 2% to 20% by weight and preferably 5% to 15% by weight, and
a structural unit derived from the compound represented by Formula (iv) can be contained in an amount of 1% by weight to 20% by weight, preferably 3% by weight to 15% by weight, and more preferably 5% by weight to 10% by weight.

In the polymerizable composition, these polymerizable monomers can be contained in the above-mentioned amounts.

For the poly(meth)acrylate, as a trade name, for example, SunSensors-55 Monomer is mentioned.

### (Mixture comprised of polyallyl carbonate and poly(meth)acrylate)

A mixture comprised of polyallyl carbonate and poly (meth) acrylate which are resins constituting a photochromic lens (base material) contains a structural unit (a) which is derived from an allyl carbonate compound (A) containing two or more allyloxycarbonyl groups and is represented by General Formula (11), and a structural unit (b) which is derived from a (meth)acrylate compound (B) containing two or more (meth)acryl groups and is represented by General Formula (12), in which the structural unit (a) is contained in an amount of 5% by weight to 30% by weight, and the structural unit (b) is contained in an amount of 70% by weight to 95% by weight, with respect to 100% by weight of a total of the structural unit (a) and the structural unit (b).

In the polymerizable composition, these polymerizable monomers can be contained in the above-mentioned amounts.

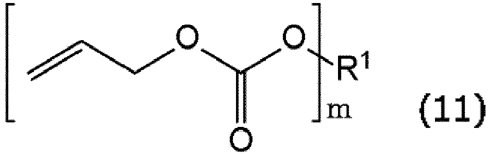

R¹ represents a divalent to twenty-valent group derived from chained or branched C3 to C35 aliphatic polyol which optionally contain a heteroatom, or a divalent to twenty-valent group derived from C5 to C40 cycloaliphatic polyol which optionally contain a heteroatom. m represents an integer of 2 to 10. R¹ does not contain an allyloxycarbonyl group.

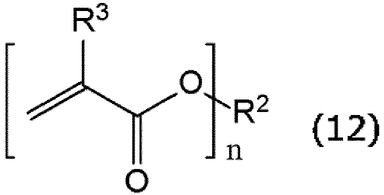

R² represents a divalent to tetravalent organic group having 1 to 30 carbon atoms which optionally contain a heteroatom or an aromatic group. R³ represents a hydrogen atom or a methyl group. n represents an integer of 2 to 4.

The allyl carbonate compound (A) can include an oligomer thereof. The oligomer is a poly (allyl carbonate) in which two or more molecules of polyol are linked via a carbonate bond generated by a transesterification reaction of allyl carbonate and polyol generated in a production step. The allyl carbonate compound is a poly(allyl carbonate) of chained or branched aliphatic polyol having 3 to 12 carbon atoms. Poly (allyl carbonate) of cycloaliphatic polyol having 5 to 16 carbon atoms in the molecule is also suitable for this purpose. Such polyol can usually have 2 to 6 hydroxyl groups and preferably 2 to 4 hydroxyl groups in a molecule. It is also possible to use mixed poly(allyl carbonate), that is, poly(allyl carbonate) derived from two or more kinds of polyols, which can be obtained by mechanical mixing of poly(allyl carbonate) of single polyol, or which can be obtained directly by chemical reaction starting from a mixture of polyol and diallyl carbonate. Finally, all these poly(allyl carbonates) can be in the form of a monomer or a mixture of a monomer and an oligomer.

As the polyol constituting R¹ of General Formula (11), specifically, diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethyl-1,3-propanediol, 2,2-diethyl-1,3-propanediol, 2,2,4-trimethyl-1,3-pentanediol, 1,4-dimethylolcyclohexane, 4,8-bis(hydroxymethyl)-[5.2.1.0²,⁶]tricyclodecane, glycerol, trimethylolpropane, tris(hydroxyethyl)isocyanurate, pentaerythritol, diglycerol, ditrimethylol propane, and dipentaerythritol, can be mentioned.

Accordingly, as examples of the allyl carbonate compound (A), for example, at least one kind selected from
a bis(allyl carbonate) compound of at least one kind of diol selected from diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethyl-1,3-propanediol, 2,2-diethyl-1,3-propanediol, 2,2,4-trimethyl-1,3-pentanediol, 1,4-dimethylolcyclohexane, and 4,8-bis(hydroxymethyl)-[5.2.1.0^{2,6}] tricyclodecane;
a tris (allyl carbonate) compound of at least one kind of triol selected from glycerol, trimethylolpropane, and tris(hydroxyethyl) isocyanurate;
a tetra (allyl carbonate) compound of at least one kind of tetraol selected from pentaerythritol, diglycerol, and ditrimethylol propane; dipentaerythritol hexa(allyl carbonate) compounds; and
a mixed poly(allyl carbonate) compound of at least two kinds of compounds selected from the diols, the triols, the tetraols, and the dipentaerythritol.

The following are preferable examples of the allyl carbonate polymerizable compound suitable for the purpose of the present invention.

### (i) Mixture of bis(allyl carbonate) compound of diethylene glycol and an oligomer thereof

Diethylene glycol bis (allyl carbonate) can be defined by Formula (13) .

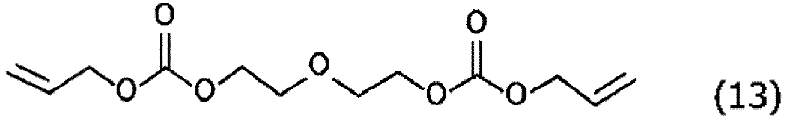

In addition, the oligomer of diethylene glycol bis(allyl carbonate) can be defined by Formula (14).

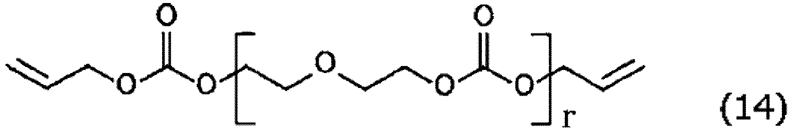

In the formula, r is 2 or more.

It is possible to manufacture compound (13) by reacting diethylene glycol bis (chloroformate) with allyl alcohol as described in, for example, "Encyclopedia of Chemical Technology", Kirk-Othmer, Third Edition, Volume 2, pages 111-112. It is possible to easily produce mixtures of diethylene glycol-bis(allyl carbonate) (Formula (13)) and an oligomer (Formula (14)) thereof by ester replacement between diallyl carbonate and diethylene glycol in the presence of a basic catalyst, for example, as described in EP 35,304. These mixtures usually include up to approximately 80% by weight of oligomers.

### (ii) Mixture of bis(allyl carbonate) compound of mixture of diethylene glycol and neopentyl glycol, and oligomer thereof

This bis (allyl carbonate) compound is the same as the bis (allyl carbonate) compound of point (i) above except that diethylene glycol is replaced with a mixture of diethylene glycol and neopentyl glycol.

### (iii) Mixture of poly(allyl carbonate) compound of a mixture of diethylene glycol and tris (hydroxyethyl) isocyanurate with oligomers thereof

It is possible to obtain the poly(allyl carbonate) compound by ester replacement of a diallyl carbonate of a mixture of diethylene glycol and tris(hydroxyethyl) isocyanurate, for example, as described in US Pat. No. 4,812,545.

### (iv) Mixture of poly(allyl carbonate) compound of a mixture of diethylene glycol and trimethylolpropane with oligomers thereof

This poly(allyl carbonate) compound is the same as the poly(allyl carbonate) compound of point (iii) above, except that tris(hydroxyethyl) isocyanurate is replaced with trimethylol propane.

### (v) Mixture of poly(allyl carbonate) compound of a mixture of diethylene glycol and pentaerythritol with oligomers thereof

This poly(allyl carbonate) compound is the same as the poly(allyl carbonate) compound of point (iii) above, except that tris(hydroxyethyl) isocyanurate is replaced with pentaerythritol.

### (vi) Mixture of poly(allyl carbonate) compound of a mixture of diethylene glycol, neopentyl glycol, and pentaerythritol with oligomers thereof

This poly(allyl carbonate) compound is the same as the poly(allyl carbonate) compound of point (v) above, except that diethylene glycol is replaced with two kinds of diols of diethylene glycol and neopentyl glycol.

### (vii) Poly (allyl carbonate) mixture including a mixture of poly(allyl carbonate) compound of a mixture of diethylene glycol, neopentyl glycol, and pentaerythritol with oligomers thereof and a mixture of diethylene glycol bis(allyl carbonate) compound with oligomers thereof

The (meth)acrylate compound (B) can be represented by the following formula.

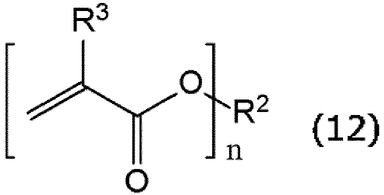

R² represents a divalent to tetravalent organic group having 1 to 30 carbon atoms which optionally contain a heteroatom or an aromatic group. R³ represents a hydrogen atom or a methyl group. n represents an integer of 2 to 4.

In addition, as the (meth)acrylate compound (B), compounds represented by General Formulas (16) and (17) can be mentioned.

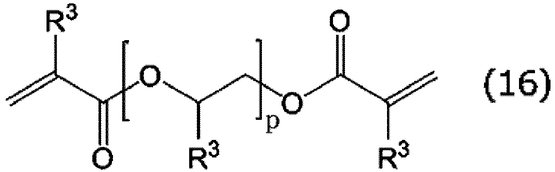

p represents a numerical value of 1 to 100, and R³' s each represent a hydrogen atom or a methyl group, and may not be the same. n is preferably a numerical value of 1 to 50, more preferably a numerical value of 1 to 20, even more preferably a numerical value of 2 to 10, and particularly preferably a numerical value of 2 to 4.

As the (meth)acrylate compound represented by General Formula (16), at least one kind selected from ethylene glycol dimethacrylate, diethylene glycol dimethacrylate, triethylene glycol dimethacrylate, tetraethylene glycol dimethacrylate, ethylene glycol diacrylate, diethylene glycol diacrylate, triethylene glycol diacrylate, tetraethylene glycol diacrylate, propylene glycol dimethacrylate, dipropylene glycol dimethacrylate, tripropylene glycol dimethacrylate, tetrapropylene glycol dimethacrylate, propylene glycol diacrylate, dipropylene glycol diacrylate, tripropylene glycol diacrylate, and tetrapropylene glycol diacrylate can be mentioned.

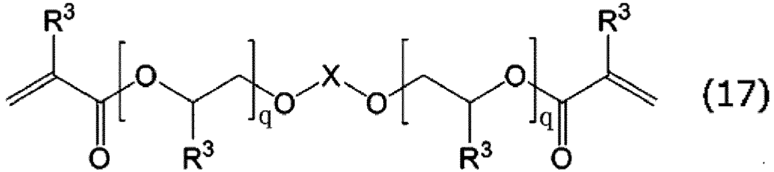

q's each represent a numerical value of 1 or more, and a total of the two q's represents a numerical value of 2 to 100. R³'s each represent a hydrogen atom or a methyl group, and may not be the same. X represents a substituted or unsubstituted divalent aromatic group or a substituted or unsubstituted divalent aliphatic group which optionally contain an aromatic group having 1 to 20 carbon atoms.

As the (meth)acrylate compound represented by General Formula (17), at least one kind selected from bisphenol A dimethacrylate, methylene-bis(4,1-phenylene)-bis(2-methacrylate), bisphenol A diacrylate, methylene-bis(4, 1-phenylene)-bis(2-acrylated), 2,2-bis(4-methacryloyloxyphenyl)propane, 2,2-bis(4-acryloyloxyphenyl)propane, 2-(4-methacryloyloxyphenyl)-2-(4-methacryloyloxyethoxyphenyl)pro pane, 2-(4-acryloyloxyphenyl)-2-(4-acryloyloxyethoxyphenyl)propane, 2,2-bis(4-methacryloyloxyethoxyphenyl)propane, 2,2-bis(4-acryloyloxyethoxyphenyl)propane, 2-(4-methacryloyloxyethoxyphenyl)-2-(4-(methacryloyloxyethoxy)et hoxyphenyl)propane, 2-(4-acryloyloxyethoxyphenyl)-2-(4-acryloyloxyethoxy)ethoxyphenyl)pro pane, 2,2-bis(4-(methacryloyloxyethoxy)ethoxyphenyl)propane, and 2,2-bis(4-(acryloyloxyethoxy)ethoxyphenyl)propane can be mentioned.

As a (meth)acrylate compound other than the compounds as mentioned above, at least one kind selected from the group consisting of butanediol dimethacrylate, hexamethylene dimethacrylate, 2,2-bis(4-methacryloyloxyethoxy-3,5-dibromophenyl)propane, 2,2-bis(4-methacryloyloxypentaethoxyphenyl)propane, pentaerythritol triacrylate, pentaerythritol tetraacrylate, trimethylolpropane triacrylate, dipentaerythritol hexaacrylate, bisphenol A-diglycidyl ether diacrylate type, bisphenol A-diglycidyl ether dimethacrylate type, tetrabromobisphenol A-diglycidyl ether diacrylate type, and tetrabromobisphenol A-diglycidyl ether dimethacrylate, can be mentioned.

Among these exemplified compounds, at least one kind selected from diethylene glycol dimethacrylate, triethylene glycol dimethacrylate, diethylene glycol diacrylate, triethylene glycol diacrylate, dipropylene glycol dimethacrylate, tripropylene glycol dimethacrylate, dipropylene glycol diacrylate, and tripropylene glycol diacrylate is preferable, at least one kind selected from diethylene glycol dimethacrylate, triethylene glycol dimethacrylate, diethylene glycol diacrylate, and triethylene glycol diacrylate is more preferable, and at least one kind selected from diethylene glycol dimethacrylate, triethylene glycol dimethacrylate is particularly preferable.

The allyl carbonate compound (A) is contained in an amount of 5% by weight to 30% by weight, preferably 5% by weight to 28% by weight, and more preferably 5% by weight to 25% by weight, in the polymerizable composition as described later.

### (Poly(thio)urethane)

Poly(thio)urethane which is a resin constituting the photochromic lens (base material) of invention contains a structural unit derived from a polyisocyanate compound (a), a structural unit derived from a polyol compound (b) having a number average molecular weight of 100 or more, and a structural unit derived from a bifunctional or higher functional active hydrogen compound (c) (excluding the compound (b)).

As the polyisocyanate compound (a), an aliphatic polyisocyanate compound such as hexamethylene diisocyanate, pentamethylene diisocyanate, 2,2,4-trimethylhexane diisocyanate, 2,4,4-trimethylhexamethylene diisocyanate, lysine diisocyanate methyl ester, lysine triisocyanate, m-xylylene diisocyanate, o-xylylene diisocyanate, p-xylylene diisocyanate, xylylene diisocyanate, α, α, α',α'-tetramethylxylylene diisocyanate, bis(isocyanatomethyl)naphthalene, 1,3,5-tris(isocyanatomethyl)benzene, bis(isocyanatomethyl)sulfide, bis(isocyanatoethyl)sulfide, bis(isocyanatomethyl)disulfide, bis(isocyanatoethyl)disulfide, bis(isocyanatomethylthio)methane, bis(isocyanatoethylthio)methane, bis(isocyanatoethylthio)ethane, and bis(isocyanatomethylthio)ethane; an alicyclic polyisocyanate compound such as isophorone diisocyanate, bis(isocyanatomethyl)cyclohexane, 1,2-bis(isocyanatomethyl)cyclohexane, 1,3-bis(isocyanatomethyl)cyclohexane, 1,4-bis (isocyanatomethyl)cyclohexane, dicyclohexylmethane diisocyanate, dicyclohexylmethane-4,4'-diisocyanate, dicyclohexylmethane-2,4'-diisocyanate, cyclohexane diisocyanate, methylcyclohexane diisocyanate, dicyclohexyl dimethylmethane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane; an aromatic polyisocyanate compound such as diphenyl sulfide-4,4-diisocyanate, tolylene diisocyanate, phenylene diisocyanate, 1,3-phenylene diisocyanate, 1,4-phenylene diisocyanate, and diphenylmethane diisocyanate; a heterocyclic polyisocyanate compound such as 2,5-diisocyanatothiophene, 2,5-bis(isocyanatomethyl)thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane can be mentioned. As the polyisocyanate compound (a), at least one kind selected from these can be used.

As the polyisocyanate compound (a), in addition to a monomer, a case of being a modified product thereof and/or a case of being a mixture thereof with the modified product are also included, and, as a modified product of isocyanate, for example, a multimer, a biuret modified product, an allophanate-modified product, an oxadiazinetrione-modified product, and a polyol-modified product, are mentioned. As the multimer, for example, a dimer such as uretdione, uretimine, and carbodiimide, and a trimer or higher multimer such as isocyanurate and iminooxadiane dione are mentioned.

As the polyisocyanate compound (a), hexamethylene diisocyanate, pentamethylene diisocyanate, m-xylylene diisocyanate, isophorone diisocyanate, bis(isocyanatomethyl)cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate are preferable, and isophorone diisocyanate, m-xylylene diisocyanate, bis(isocyanatomethyl)cyclohexane, dicyclohexylmethane diisocyanate, 2,5-bis (isocyanatomethyl)bicyclo-[2.2.1]-heptane, and 2,6-bis(isocyanatomethyl)bicyclo-[2.2.1]-heptane are more preferable. For these polyisocyanate compounds, one kind may be used alone, or two or more kinds may be used in admixture.

As the polyol compound (b) , at least one kind of compound selected from compounds having a number average molecular weight of 100 or more can be used.

As the polyol compound (b), polyethylene glycol and polypropylene glycol are mentioned, which optionally contain a low molecular weight oligomer such as ethylene glycol, diethylene glycol, and triethylene glycol. These may be used alone or may be used as an admixture of two or more kinds. In addition, polyethylene glycol or polypropylene glycol includes a diol type or triol type thereof.

In addition, as the polyol compound (b), a compound obtained by adding ethylene oxide, propylene oxide, or ε-caprolactone to trifunctional or higher functional alcohol may be used. For example, an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone-modified glycerol, caprolactone-modified trimethylolpropane, and caprolactone-modified pentaerythritol are mentioned.

A lower limit of a number average molecular weight of the polyol compound (b) is 100 or more, preferably 200 or more, more preferably 300 or more, even more preferably 400 or more, and particularly preferably 600 or more, and an upper limit thereof is 4,000 or less, more preferably 3,000 or less, even more preferably 2,000 or less, and particularly preferably 1, 500 or less. The upper limit and the lower limit can be appropriately combined.

The number average molecular weight of the polyol compound (b) being within the above-mentioned range allows a photochromic performance to be effectively expressed without impairing excellent properties such as mechanical strength of the poly(thio)urethane resin.

For example, in a case where the polyol compound (b) is polyethylene glycol, the number average molecular weight being 400 to 2,000 further improves a color development performance and further suppresses cloudiness of the resin molded product.

In addition, in a case where the polyol compound (b) is polypropylene glycol, the number average molecular weight being 400 to 2,000 further improves a color development performance and further suppresses cloudiness of the resin molded product.

In addition, a resin molded product obtained from polypropylene glycol can exert high heat resistance and rigidity as compared with a resin molded product obtained from polyethylene glycol. Therefore, polypropylene glycol may be more preferable than polyethylene glycol for a use in various environments and conditions such as a spectacle lens.

As the polyol compound (b), a polyethylene glycol adduct or a polypropylene glycol adduct such as 1,4-butanediol, 3-methyl-1,5-pentanediol, 1,9-nonanediol, 1,4-bis(hydroxyethoxy)benzene, 1,3-bis(m-hydroxyethoxy)benzene, and 2,2-[(1,1-biphenyl)-4,4-diylbis(oxy)]bisethanol can be mentioned. These may be used alone or may be used as an admixture of two or more kinds.

In a number average molecular weight of these compounds, a lower limit is 200 or more, preferably 300 or more, more preferably 400 or more, even more preferably 500 or more, and particularly preferably 600 or more, and an upper limit is 4,000 or less, preferably 3,000 or less, more preferably 2,000 or less, even more preferably 1,500 or less, and particularly preferably 1,000 or less. The upper limit and the lower limit can be appropriately combined. The number average molecular weight being within the above-mentioned range allows a photochromic performance to be effectively expressed without impairing excellent properties such as mechanical strength of the poly(thio)urethane resin.

As the polyol compound (b), a polyethylene glycol adduct of bisphenol A, and a polypropylene glycol adduct of bisphenol A, are mentioned. These may be used alone or may be used as an admixture of two or more kinds.

In a number average molecular weight of these compounds, a lower limit is 200 or more, preferably 300 or more, more preferably 400 or more, even more preferably 500 or more, and particularly preferably 600 or more, and an upper limit is 4,000 or less, preferably 3,000 or less, more preferably 2, 000 or less, and even more preferably 1,500 or less. The upper limit and the lower limit can be appropriately combined. The number average molecular weight to be within the above-mentioned range allows a photochromic performance to be effectively expressed without impairing excellent properties such as mechanical strength of the poly(thio)urethane resin.

As the polyol compound (b), a polyester compound comprised of a diol compound and a dicarboxylic acid can be mentioned.

The diol compound constituting the polyester compound is not particularly limited, and aliphatic diol having 2 to 12 carbon atoms in a main chain is suitably used. As examples thereof, ethylene glycol, propylene glycol, 1,4-butanediol, 3-methyl-1,5-pentanediol, and 1,9-nonanediol, are mentioned.

In addition, the dicarboxylic acid constituting the polyester compound is also not particularly limited, and an aliphatic dicarboxylic acid or aromatic dicarboxylic acid having 2 to 12 carbon atoms in a main chain is suitably used. As examples thereof, a succinic acid, an adipic acid, a sebacic acid, an isophthalic acid, and a terephthalic acid, are mentioned.

For the polyester compound, one kind or two or more kinds of these diol compounds, and one kind or two or more kinds of dicarboxylic acids can be appropriately combined and used.

In addition, polyester compounds obtained by ring-opening polymerization of lactone can also be used. As examples of a lactone compound, α-acetolactone, β-propiolactone, γ-butyrolactone, and δ-valerolactone, are mentioned. In a number average molecular weight of these compounds, a lower limit is 600 or more, preferably 800 or more, and more preferably 1,000 or more, and an upper limit is 4,000 or less, more preferably 3,000 or less, even more preferably 2,000 or less, and particularly preferably 1,500 or less. The upper limit and the lower limit can be appropriately combined. The number average molecular weight being within the above-mentioned range allows a photochromic performance to be effectively expressed without impairing excellent properties such as mechanical strength of the poly(thio)urethane resin.

As the polyol compound (b), a compound represented by General Formula (I) can be used.

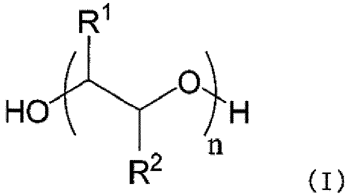

In General Formula (I), R¹ and R² each represent a hydrogen atom, a methyl group, or an ethyl group, and at least one thereof is a hydrogen atom. R¹ and R² may be the same or different from each other. n represents an integer of 30 to 500.

Specifically, a compound represented by General Formula (II) can be used.

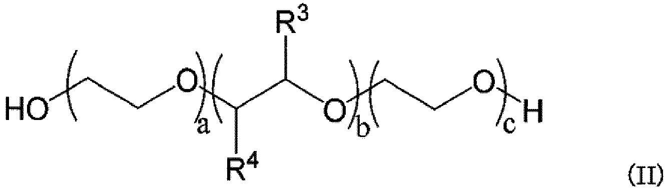

In General Formula (II), R³ and R⁴ each represent a hydrogen atom, a methyl group, or an ethyl group, and at least one thereof is a hydrogen atom. R³ and R⁴ may be the same or different from each other. a + c is an integer of 2 to 400, and b is an integer of 1 to 100.

A number average molecular weight of the compounds represented by General Formulas (I) and (II) is 1,000 to 1,5000 and preferably 1,500 to 7,500.

As the compounds represented by General Formulas (I) and (II), ADEKA PLURONIC series manufactured by ADEKA CORPORATION, PLURONIC series manufactured by BASF Corporation, are mentioned.

As the compounds represented by General Formulas (I) and (II), ADEKA PLURONIC L-44, L-62, L-64, L-72, P-84, and P-85, which are manufactured by ADEKA CORPORATION, and Pluronic L-43, L-44, L-62, L-64, L-72, P-65, P-84, P-85, F-68, and F-77, which are manufactured by BASF Corporation, are preferable, and
ADEKA PLURONIC L-62, L-64, P-84, and P-85, which are manufactured by Adeka Corporation, and PLURONIC L-62, L-64, L-72, P-65, P-84, P-85, and F-77, which are manufactured by BASF Corporation, are more preferable . For these compounds, one kind may be used alone, or two or more kinds may be used in admixture.

The polyol compound (b) comprised of the above compounds allows a photochromic performance to be effectively expressed.

As the polyol compound (b) , at least one kind of compound selected from the above exemplified compounds can be used. It is preferable to use a diol type or triol type of polyethylene glycol or polypropylene glycol, the compound represented by General Formula (I), or the compound represented by General Formula (II), and it is more preferable to use a diol type or triol type of polypropylene glycol, or the compound represented by General Formula (II).

In the polymerizable composition, the polyol compound (b) can be contained in a range of 0.05 times by weight to 10 times by weight with respect to a weight of the bifunctional or higher functional active hydrogen compound (c). The polyol compound (b) is used within such a range so that a resin performance desired according to a use is obtained while maintaining a high photochromic performance. The range is preferably in a range of 0.1 times by weight to 5 times by weight.

Times by weight of the polyol compound (b) to the active hydrogen compound (c) being within the above-mentioned range allows a high photochromic performance, that is, a high color-development density and a fast density change to be suitably exerted. Furthermore, since a crosslinking density is within an optimum range, an optical material which is excellent in stiffness, surface hardness, and heat resistance, can be obtained.

As the bifunctional or higher functional active hydrogen compound (c) (hereinafter simply "active hydrogen compound (c)"), there is no particular limitation, and a polyol compound, a polythiol compound, and a hydroxyl group can be mentioned. The active hydrogen compound (c) does not include the polyol compound (b).

The polyol compound includes, for example, aliphatic polyol such as ethylene glycol, diethylene glycol, propylene glycol, dipropylene glycol, tripropylene glycol, butylene glycol, neopentyl glycol, glycerin, trimethylol ethane, trimethylol propane, ditrimethylol propane, butanetriol, 1,2-methyl glucoside, pentaerythritol, dipentaerythritol, tripentaerythritol, sorbitol, erythritol, threitol, ribitol, arabinitol, xylitol, allitol, mannitol, dulcitol, iditol, glycol, inositol, hexanetriol, triglycerose, diglycerol, triethylene glycol, polyethylene glycol, tris(2-hydroxy ethyl)isocyanurate, cyclobutane diol, cyclopentane diol, cyclohexane diol, cycloheptane diol, cyclooctane diol, cyclohexane dimethanol, hydroxy propyl cyclohexanol, tricyclo[5.2.1.0^{2,6}]decane-dimethanol, bicyclo[4.3.0]-nonane diol, dicyclohexane diol, tricyclo[5.3.1.1]dodecane diol, bicyclo[4.3.0]nonane dimethanol, tricyclo[5.3.1.1]dodecane-diethanol, hydroxy propyl tricyclo[5.3.1.1]dodecanol, spiro[3.4]octane diol, butyl cyclohexane diol, 1,1'-bicyclohexylidene diol, cyclohexane triol, maltitol, and lactose; aromatic polyol such as dihydroxy naphthalene, trihydroxy naphthalene, tetrahydroxy naphthalene, dihydroxy benzene, benzene triol, biphenyl tetraol, pyrogallol, (hydroxy naphthyl)pyrogallol, trihydroxy phenanthrene, bisphenol A, bisphenol F, xylylene glycol, di (2-hydroxy ethoxy) benzene, bisphenol A-bis-(2-hydroxy ethyl ether), tetrabromobisphenol A, and tetrabromobisphenol A-bis-(2-hydroxy ethyl ether); halogenated polyol such as dibromoneopentyl glycol; a compound obtained by adding ethylene oxide, propylene oxide, or ε-caprolactone to a trifunctional or higher alcohol such as ethylene oxide adduct of glycerol, ethylene oxide adduct of trimethylolpropane, ethylene oxide adduct of pentaerythritol, propylene oxide adduct of glycerol, propylene oxide adduct of trimethylolpropane, propylene oxide adduct of pentaerythritol, caprolactone-modified glycerol, caprolactone-modified trimethylolpropane, and caprolactone-modified pentaerythritol; and high molecular weight polyol such as an epoxy resin. At least one kind selected from these can be used in combination.

In addition, the polyol compound includes a condensation reaction product of the above-mentioned polyol with an organic acid such as an oxalic acid, a glutamic acid, an adipic acid, an acetic acid, a propionic acid, a cyclohexanecarboxylic acid, a β-oxocyclohexane propionic acid, a dimer acid, a phthalic acid, an isophthalic acid, a salicylic acid, a 3-bromopropionic acid, 2-bromoglycol, dicarboxycyclohexane, a pyromellitic acid, a butanetetracarboxylic acid, and a bromophthalic acid; an addition reaction product of the above-mentioned polyol with an alkylene oxide such as ethylene oxide and propylene oxide; an addition reaction product of alkylene polyamine with an alkylene oxide such as ethylene oxide and propylene oxide; furthermore, bis[4-(hydroxyethoxy)phenyl]sulfide, bis[4-(2-hydroxypropoxy)phenyl]sulfide, bis[4-(2,3-dihydroxypropoxy)phenyl]sulfide, bis[4-(4-hydroxycyclohexyloxy)phenyl]sulfide, bis[2-methyl-4-(hydroxyethoxy)-6-butylphenyl]sulfide, and compounds obtained by adding ethylene oxide and/or propylene oxide having an average of 3 molecules or less per a hydroxyl group to these compounds,; polyol containing a sulfur atom such as di-(2-hydroxyethyl)sulfide, 1,2-bis(2-hydroxyethylmercapto)ethane, bis(2-hydroxyethyl)disulfide, 1,4-dithiane-2,5-diol, bis(2,3-dihydroxypropyl)sulfide, tetrakis(4-hydroxy-2-thiabutyl)methane, bis(4-hydroxyphenyl)sulfone (trade name: BISPHENOL S), tetrabromobisphenol S, tetramethylbisphenol S, 4,4'-thiobis(6-tert-butyl-3-methylphenol), and 1,3-bis(2-hydroxyehtylthioethyl)-cyclohexane, are additionally mentioned. At least one kind selected from these can be used in combination.

As the polythiol compound, for example, an aliphatic polythiol compound such as methanedithiol, 1,2-ethanedithiol, 1,2,3-propanetrithiol, 1,2-cyclohexanedithiol, bis(2-mercaptoethyl)ether, tetrakis(mercaptomethyl)methane, diethylene glycol bis(2-mercaptoacetate), diethylene glycol bis(3-mercaptopropionate), ethylene gloycol bis(2-mercaptoacetate), ethylene gloycol bis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis (2-mercaptoacetate), pentaerythritol tetrakis (3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis (2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,2,3-tris(mercaptomethylthio)propane, 1,2,3-tris(2-mercaptoehtylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis (2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, and ester obtained by reacting these thiol compounds with a thioglycolic acid and a mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropinate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio)propane, 1,1,2,2-tetrakis(mercaptomethylthio)ethane, 4,6-bis(mercaptomethylthio)-1,3-dithiane, tris(mercaptomethylthio)methane, and tris(mercaptoethylthio)methane; an aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris (mercaptomethyleneoxy)benzene, 1,3,5-tris(mercaptoethyleneoxy)benzene, 2,5-toluenedithiol, 3,4-toluenedithiol, 1,5-naphthalenedithiol, and 2,6-naphthalenedithiol; a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane; and a compound represented by General Formula (18), can be mentioned. However, the polythiol compound is not limited to only these exemplified compounds. At least one kind selected from these can be used in combination.

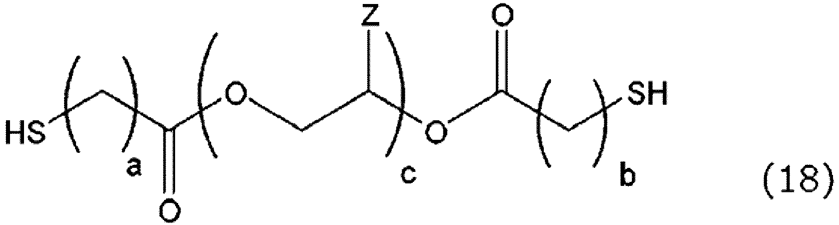

In the formula, a and b independently represent an integer of 1 to 4, and c represents an integer of 1 to 3. Z is hydrogen or a methyl group, and in a case where there are a plurality of Z's, the Z's may be the same or different from each other.

As a thiol compound having a hydroxyl group, 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate), can be mentioned. However, the thiol compound is not limited to these exemplified compounds.

Furthermore, oligomers of these active hydrogen compounds, and halogen-substituted products of these active hydrogen compounds such as chlorine-substituted products and bromine-substituted products may be used. These active hydrogen compounds can be used alone, or two or more kinds thereof can be used in admixture.

From the viewpoint of physical properties such as mechanical strength of the obtained molded product, it is preferable to use a trifunctional or higher functional active hydrogen compound as the active hydrogen compound (c).

Specifically, at least one kind selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio)propane, trimethylolpropane tris(3-mercaptopropionate) is preferably used.

In addition, as a preferable combination of the polyol compound (b) and the active hydrogen compound (c),
a combination of polyethylene glycol and at least one kind selected from glycerin, pentaerythritol tetrakis(2-mercaptoacetate), and
   4-mercaptomethyl-1,8-dimercapto-3,6-dithiaoctane,
a combination of polypropylene glycol and at least one kind selected from pentaerythritol tetrakis(2-mercaptoacetate) and 4-mercaptomethyl-1,8-dimercapto-3,6-dithiaoctane,
a combination of a polypropylene glycol adduct of bisphenol A and 4-mercaptomethyl-1,8-dimercapto-3,6-dithiaoctane,
a combination of at least one kind selected from polyester compounds comprised of 3-methyl-1,5-pentanediol, adipic acid, and isophthalic acid, and
   4-mercaptomethyl-1,8-dimercapto-3,6-dithiaoctane,
a combination of a triol type of polypropylene glycol and a composition that contains
   5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane,
a combination of a diol type of polypropylene glycol and a composition that contains
   5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane,
a combination of a diol type of polypropylene glycol and 4-mercaptomethyl-1,8-dimercapto-3,6-dithiaoctane,
a combination of the compound represented by General Formula (II) and at least one kind selected from pentaerythritol tetrakis(2-mercaptoacetate) and
   4-mercaptomethyl-1,8-dimercapto-3,6-dithiaoctane,
a combination of the compound represented by General Formula (II) and a composition that contains
   5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane, can be mentioned. However, the preferable combination is not limited to these combinations.

For the polymerizable composition, in a functional group equivalent ratio (b/a) of the polyol compound (b) to the polyisocyanate compound (a), a lower limit is 0.001 or more, preferably 0.010 or more, more preferably 0.015 or more, even more preferably 0.018 or more, and particularly preferably 0.020 or more, and an upper limit is 0.060 or less, preferably 0.050 or less, more preferably 0.040 or less, and even more preferably 0.030 or less. The upper limit and the lower limit can be appropriately combined.

For the polymerizable composition, in a functional group equivalent ratio (c/a) of the active hydrogen compound (c) to the polyisocyanate compound (a), a lower limit is 0.30 or more, preferably 0.40 or more, more preferably 0.50 or more, and even more preferably 0.60 or more, and an upper limit is 0.99 or less, preferably 0.98 or less, more preferably 0.90 or less, and even more preferably 0.80 or less. The upper limit and the lower limit can be appropriately combined.

For the polymerizable composition, a molar ratio (NCO groups/ (OH groups + SH groups)) of NCO groups contained in the polyisocyanate compound (a) with respect to a sum of OH groups and SH groups contained in the active hydrogen compound (c) and the polyol compound (b) is usually within a range of 0.8 to 1.2, preferably within a range of 0.85 to 1.15, and more preferably within a range of 0.9 to 1.1.

In a case where the molar ratio of NCO groups/(OH groups + SH groups) is 0.8 or more, unreacted OH groups and SH groups do not remain, the composition is sufficiently cured, and a resin which is excellent in heat resistance, moisture resistance, and light resistance is obtained. In a case where the molar ratio of NCO groups/ (OH groups + SH groups) is 1.2 or less, unreacted NCO groups do not remain, a resin which is excellent in heat resistance, moisture resistance, and light resistance is obtained, it is not necessary to raise a reaction temperature in order to decrease the unreacted NCO groups, and disadvantages such as coloring are not observed, which is preferable as a resin material.

### (Other components)

The composition of the invention may further contain a polymerization catalyst, an ultraviolet absorber, a resin modifier, and an internal mold release agent.

As the polymerization catalyst, in a case of poly (thio) urethane, a tertiary amine compound and an inorganic acid salt or organic acid salt thereof, a metal compound, a quaternary ammonium salt, and an organic sulfonic acid, can be mentioned.

In a case of poly(meth)acrylate or polyallyl carbonate, as a radical polymerization initiator, a peroxyester-based radical polymerization initiator, a peroxyketal-based radical polymerization initiator, a peroxy monocarbonate-based radical polymerization initiator, or an azo-based radical polymerization initiator can be mentioned.

As the peroxyester-based radical polymerization initiator, t-hexyl peroxyneodecanoate, 1,1,3,3-tetramethylbutyl peroxyneodecanoate, t-hexylperoxy-2-ethyl hexanoate, 1-cyclohexyl-1-methylethyl peroxyneodecanoate, cumyl peroxyneodecanoate, t-butyl peroxy-2-ethyl hexanoate, t-butyl peroxypivalate, t-hexyl peroxypivalate, t-butyl peroxy neodecanoate, t-butyl peroxylaurate, t-butyl peroxy nonanoate, t-butyl peroxy isobutylate, t-butyl peroxy-3,3,5-trimethylhexanoate, t-butyl peroxyacetate, t-butyl peroxyisonononate, t-butyl peroxybenzoate, t-amyl peroxy-2-ethyl hexanoate, t-amyl peroxy normo octoate, t-amyl peroxy acetate, t-amyl peroxy isononate, t-amyl peroxybenzoate, t-hexyl peroxybenzoate, and 1,1,3,3-tetramethylbutylperoxy-2-ethylhexanoate are mentioned.

As the peroxyketal-based radical polymerization initiator, 1,1-bis(t-hexylperoxy) cyclohexane, 1,1-bis(t-butylperoxy) cyclohexane, 1,1-bis(t-butylperoxy) 3,3,5-trimethyl cyclohexane, 1,1-bis(t-butylperoxy)-3,3,5-trimethyl cyclohexane, 1,1-bis(t-hexylperoxy)-3,3,5-trimethyl cyclohexane, 2,2-bis(t-butylperoxy) butane, n-butyl-4,4-bis(t-butylperoxy) valerate, ethyl 3,3-bis(t-butylperoxy) valerate, 1,1-bis(t-butylperoxy) cyclohexane, 1,1-bis(t-butylperoxy)-2-methyl cyclohexane, 1,1-bis(t-amylperoxy) cyclohexane, 1,1-bis(t-hexylperoxy)-3,3,5-trimethyl cyclohexane, and 2,2-bis[4,4-(di-t-butylperoxy)yclohexyl]propane, are mentioned.

As the peroxy monocarbonate-based radical polymerization initiator, O,O-(t-butyl)-O-isopropyl monoperoxycarbonate, O,O-(t-amyl)-O-isopropyl monoperoxycarbonate, O,O-(t-butyl)-O-(2-ethylhexyl) monoperoxycarbonate, and O,O-(t-amyl)-O-(2-ethylhexyl) monoperoxycarbonate, are mentioned.

As the azo-based radical polymerization initiator, for example, azobisisobutyronitrile, and azobisdimethylvaleronitrile, are mentioned.

For these radical polymerization initiators, one kind can be used, or two or more kinds can be used in admixture. In addition, if necessary, another radical polymerization initiator may be used in combination.

An amount added of the radical polymerization initiator is in a range of 0.01 to 10 parts by weight and preferably 0.1 to 5 parts by weight, with respect to 100 parts by weight of the polymerizable composition. In a case where the amount is less than 0.01 part by weight, curing becomes insufficient, and in a case where the amount exceeds 10 parts by weight, the molded product tends to be distorted.

As the ultraviolet absorber, a benzotriazole-based ultraviolet absorber, a triazine-based ultraviolet absorber, a benzophenone-based ultraviolet absorber, a cyanoacrylate-based ultraviolet absorber, a diphenyl acrylate-based ultraviolet absorber, a phenol-based ultraviolet absorber, an oxanilide -based ultraviolet absorber, and a malonic acid ester-based ultraviolet absorber are mentioned.

An amount added of the ultraviolet absorber cannot be unconditionally limited because an ultraviolet region to be absorbed varies depending on a kind of the ultraviolet absorber, and the amount is 0.01 to 5 parts by weight and preferably 0.02 to 2 parts by weight, with respect to 100 parts by weight of the polymerizable composition.

As the resin modifier, as long as an effect of the present invention is not impaired, in addition to the above-mentioned compounds, an episulfide compound, an alcohol compound, an amine compound, an epoxy compound, an organic acid and an anhydride thereof, and an olefin compound containing a (meth)acrylate compound, are mentioned.

### <Method for producing polymerizable composition and resin molded product>

The polymerizable composition of the invention contains the tetraazaporphyrin compound represented by General Formula (1), at least one kind selected from the photochromic dyes represented by General Formula (5), General Formula (a), and General Formula (b), and the polymerizable compound constituting the resin. Furthermore, the above-mentioned other components can be contained. The polymerizable composition can be prepared by mixing these components collectively, or separately and finally mixing the components into one.

In the polymerizable composition, the tetraazaporphyrin compound can be contained in an amount of 1 to 15 ppm and preferably 5 to 15 ppm, with respect to 100% by weight of a total of the polymerizable compound. The naphthopyran-based compound which is a photochromic compound can be contained in an amount of 100 to 3000 ppm and preferably 10 to 2000 ppm, and the photochromic compound represented by General Formula (a) or General Formula (b) can be contained in an amount of 100 to 3,000 ppm and preferably 100 to 2,000 ppm. Amounts added of the tetraazaporphyrin compound, the naphthopyran-based compound which is a photochromic compound, and the photochromic compound represented by General Formula (a) or General Formula (b) cannot be unconditionally limited because a performance varies depending on kinds thereof, and the amounts are appropriately selected depending on kinds and amounts added of the respective compounds.

A mixing temperature is usually 25°C or lower. From the viewpoint of a pot life of the polymerizable composition, it may be preferable to further decrease the temperature. However, in a case where solubility of a catalyst and an additive in the monomer is not good, it is also possible to heat the catalyst and the additive in advance so as to be dissolved in the monomer and the resin modifier.

The method for producing the resin molded product is not particularly limited, and cast polymerization is mentioned as a preferable production method. First, a polymerizable composition is injected between molded molds held by a gasket, or a tape. Depending on physical properties required for the plastic lens to be obtained, in many cases, it is preferable to carry out a defoaming treatment under reduced pressure, and a filtration treatment such as pressurization and depressurization, , as necessary.

A polymerization condition is not particularly limited because conditions are largely different depending on a composition of the polymerizable composition, a kind and an amount used of the catalyst, and a shape of the mold, and the polymerization is usually carried out at about -50°C to 150°C over 1 to 50 hours. In some cases, it is preferable that the temperature is held or is gradually increased in a temperature range of 10°C to 150°C, and the polymerizable composition is cured for 1 to 48 hours.

The resin molded product may be subjected to a treatment such as annealing as necessary. A treatment temperature is usually 50°C to 150°C. The treatment is preferably carried out at 90°C to 140°C, and more preferably carried out at 100°C to 130°C.

At the time of molding the resin, depending on a purpose, in addition to the above-described "other components", various additives such as a chain extender, a crosslinking agent, a light stabilizer, an antioxidant, a bluing agent, an oil soluble dye, a filler, and an adhesiveness improver may be added in the same manner as a known molding method.

### <Use>

The resin molded product of the invention can be formed into various shapes by changing a kind of a mold for cast polymerization.

The molded product obtained from the polymerizable composition for an optical material of the invention makes it possible to obtain a material which is excellent both in surface hardness and photochromic performance without impairing transparency. Thus, the molded product can be used for various optical materials such as a plastic lens. In particular, the molded product can be suitably used as a photochromic lens or a plastic polarizing lens.

### [Photochromic lens]

The photochromic lens using a lens base material comprised of the molded product according to the invention may be used by applying a coating layer on one surface or both surfaces thereof, as necessary.

The photochromic lens of the invention may include a lens base material comprised of the polymerizable composition as described above and a coating layer.

As the coating layer, a primer layer, a hard coat layer, an anti-reflection layer, an anti-fog coating layer, an anti-fouling layer, and a water repellent layer, are mentioned. For these coating layers, each coating layer can be used alone, or a plurality of coating layers can be used in multiple layers . In a case of applying a coating layer on both surfaces, the same coating layer may be applied to the both surfaces or different coating layers may be applied to the respective surfaces.

For each of these coating layers, an infrared absorber for the purpose of protecting eyes from infrared rays, a light stabilizer and an antioxidant for the purpose of improving weather resistance of the lens, a dye or a pigment for the purpose of improving the fashionability of the lens, an antistatic agent, and other known additives for increasing the performance of the lens may be used in combination.

Regarding the layer to be coated by application, various leveling agents for improving coatability may be used.

The primer layer is usually formed between a hard coat layer described below and the lens base material. The primer layer is a coating layer intended to improve adhesiveness between the hard coat layer formed thereon and the lens base material. In some cases, the primer layer is capable of improving impact resistance. Any material can be used as the primer layer as long as the material has high adhesiveness to the obtained lens, and a primer composition that contains a urethane-based resin, an epoxy-based resin, a polyester-based resin, a melanin-based resin, and polyvinyl acetal as main components is usually used. For the purpose of adjusting a viscosity of the composition, an appropriate solvent which does not affect the lens may be used as the primer composition. Of course, no solvent may be used.

The primer layer may be formed by any one of a coating method or a dry method. In a case where the coating method is used, a primer layer is formed by applying the primer composition to a lens by a known coating method such as spin coating and dip coating, and then solidifying the primer composition. In a case where the dry method is used, a primer layer is formed by a known dry method such as a CVD method or a vacuum deposition method. When a primer layer is formed, for the purpose of improving adhesiveness, a surface of the lens may be subjected to a pretreatment such as an alkali treatment, a plasma treatment, and an ultraviolet treatment, as necessary.

The hard coat layer is a coating layer intended to provide the lens surface with a function such as scratch resistance, abrasion resistance, moisture resistance, hot water resistance, heat resistance, and weather resistance.

Generally, for the hard coat layer, a hard coat composition that contains an organosilicon compound having curability and at least one kind of oxide fine particles of an element selected from the element group consisting of Si, Al, Sn, Sb, Ta, Ce, La, Fe, Zn, W, Zr, In, and Ti, and/or at least one kind of oxide fine particles comprised of a composite oxide of two or more kinds elements selected from the element group is used.

In addition to the above components, the hard coat composition preferably contains at least one of amines, amino acids, a metal acetylacetonate complex, an organic acid metal salt, perchloric acids, salts of perchloric acids, acids, metal chloride, and a polyfunctional epoxy compound. An appropriate solvent which does not affect the lens may be used for the hard coat composition, or no solvent may be used.

The hard coat layer is usually formed by applying the hard coat composition by a known coating method such as spin coating and dip coating and then curing the hard coat composition. As a curing method, heat curing, a curing method by energy ray irradiation such as an ultraviolet ray or visible light, are mentioned. In order to suppress generation of interference fringes, it is preferable that a difference in refractive index between the hard coat layer and the lens is in a range of ±0.1.

The antireflection layer is usually formed on the hard coat layer, as necessary. The antireflection layer includes an inorganic antireflection layer and an organic antireflection layer. In a case where the antireflection layer is inorganic, an inorganic oxide such as SiO₂ or TiO₂ is used, and the antireflection layer is formed by a dry method such as a vacuum deposition method, a sputtering method, an ion plating method, an ion beam assist method, and a CVD method. In a case where the antireflection layer is organic, a composition containing an organosilicon compound and silica-based fine particles having an internal cavity is used, and the antireflection layer is formed by a wet method.

The antireflection layer includes a single layer and a multiple layer. In a case where the antireflection layer is used as a single layer, it is preferable that a refractive index thereof is lower than that of the hard coat layer by at least 0.1 or more. In order to effectively express an antireflection function, it is preferable to use a multilayer antireflection film. In that case, a low refractive index film and a high refractive index film are alternately stacked. Even in this case, a difference in refractive index between the low refractive index film and the high refractive index film is preferably 0.1 or more. As the high refractive index film, a film of ZnO, TiO₂, CeO₂, Sb₂O₅, SnO₂, ZrO₂, or Ta₂O₅, are mentioned, and, as the low refractive index film, a SiO₂ film is mentioned.

An anti-fog layer, an anti-fouling layer, or a water repellent layer may be formed on the antireflection layer, as necessary. With respect to the method of forming the anti-fog layer, the anti-fouling layer, or the water repellent layer, as long as the method does not give an adverse effect on the antireflection function, a treatment method, and a treatment material, are not particularly limited. Any known anti-fogging treatment method, anti-fouling treatment method, water repellent treatment method, and materials may be used. For example, as the anti-fogging treatment method and the anti-fouling treatment method, a method of covering a surface with a surfactant, a method of adding a hydrophilic film to a surface so as to cause the surface to be water absorbent, a method of covering a surface with fine irregularities so as to increase water absorption, a method of causing a surface to be water absorbent by using photocatalytic activity, and a method of preventing adhesion of water droplets by applying a super water repellent treatment are mentioned. In addition, as the water repellent treatment method, a method of forming a water repellency-treated layer by applying a fluorine-containing silane compound by vapor deposition or sputtering, a method of dissolving a fluorine-containing silane compound in a solvent and performing coating to form a water repellent treated layer, are mentioned.

### [Plastic polarizing lens]

The polarizing lens of the present invention may includes a polarizing film and a base material layer which is formed on at least one surface of the polarizing film and which includes a molded product obtained by curing the polymerizable composition of the invention.

The polarizing film can be comprised of a thermoplastic resin. As the thermoplastic resin, a polyester resin, a polycarbonate resin, a polyolefin resin, a polyimide resin, a polyvinyl alcohol resin, and a polyvinyl chloride resin, can be mentioned. From the viewpoints of water resistance, heat resistance and molding processability, a polyester resin and a polycarbonate resin are preferable, and a polyester resin is more preferable.

As the polyester resin, polyethylene terephthalate, polyethylene naphthalate, and polybutylene terephthalate, can be mentioned, and, from the viewpoints of water resistance, heat resistance, and molding processability, polyethylene terephthalate is preferable.

As the polarizing film, specifically, a polyester polarizing film containing a dichroic dye, a polyvinyl alcohol polarizing film containing iodine, and a polyvinyl alcohol polarizing film containing a dichroic dye, are mentioned.

The polarizing film may be used after being subjected to a heat treatment for drying and stabilization.

Furthermore, in order to improve adhesiveness to the acrylic resin, the polarizing film may be used after one kind or two or more kinds of pretreatments selected from a primer coating treatment, a chemical treatment (a chemical treatment such as gas or alkali), a corona discharge treatment, a plasma treatment, an ultraviolet ray irradiation treatment, an electron beam irradiation treatment, a surface roughening treatment, and a flame treatment, may be performed. Among such pretreatments, one kind or two or more kinds selected from a primer coating treatment, a chemical treatment, a corona discharge treatment, and a plasma treatment are particularly preferable.

In the plastic polarizing lens, a base material layer obtained by curing the polymerizable composition for an optical material of the invention is stacked on one surface of an objective surface side or an ocular surface side of such a polarizing film or on both surfaces of the objective surface side and the ocular surface side thereof.

From the viewpoint of a photochromic performance, it is preferable that a base material layer obtained by curing the polymerizable composition for an optical material of the invention is stacked on at least a surface located at the objective surface side of the polarizing film. In a case where the base material layer is formed only on the surface located at the objective surface side of the polarizing film, a base material layer formed on the other surface of the polarizing film can be comprised of the polymerizable composition of the invention which does not contain a tetraazaporphyrin compound and a photochromic dye, or may be comprised of a plastic material such as an acrylic resin, an allyl carbonate resin, a polycarbonate resin, a polyurethane resin, a polythiourethane resin, or a polysulfide resin.

The method of producing plastic polarizing lens of the invention is not particularly limited, and a method of stacking a lens base material on both surfaces of the polarizing film, and a method of carrying out cast polymerization of a polymerizable composition on both surfaces of the polarizing film, can be mentioned. An example of forming by a cast polymerization method will be described.

The method for producing a plastic polarizing lens, for example,
a step of forming a first polymerizable composition layer on a surface of a polarizing film located at an objective surface side and forming a second polymerizable composition layer on the other surface of the polarizing film in a mold, and
a step of polymerizing and curing the polymerizable composition layers to stack a base material layer on both surfaces of the polarizing film.

The first polymerizable composition layer is comprised of the polymerizable composition of the invention. In a case where the layer of the first polymerizable composition and the layer of the second polymerizable composition have the same resin composition, it becomes easy to achieve a temperature management in the polymerization steps. Thus, the layer of the second polymerizable composition is formed of the polymerizable composition for an optical material which does not contain a tetraazaporphyrin compound and a photochromic dye.

A lens casting mold is generally composed of two substantially disc-shaped glass molds held by a gasket. In a space of this lens casting mold, the polarized film is placed such that the film surface is parallel to an inner surface of the mold on a front side where the film surface faces. Cavities are formed between the polarizing film and the molds. The polarizing film may be shaped in advance.

Then, a first polymerizable composition can be injected between the mold and a surface of the polarizing film located at an objective surface side to form a layer of the first polymerizable composition, and subsequently a second polymerizable composition can be injected into a cavity between a surface of the polarizing film on an ocular surface side and the mold to form a layer of the second polymerizable composition.

In addition, the step can be carried out by mounting the first polymerizable composition on a forming surface of the mold for forming an objective surface of the lens, spreading the first polymerizable composition over the entire surface of the forming surface with the polarizing film, and separating the mold from the surface of the polarizing film located at the objective surface side by a predetermined distance via the formed layer of the first polymerizable composition, and subsequently by injecting the second polymerizable composition into a cavity between the polarizing film and a forming surface of the mold for forming an ocular surface of the lens, to form a layer of the second polymerizable composition.

A polymerization condition for the polymerizable composition varies depending on a composition of the polymerizable composition, a kind and an amount used of the catalyst, and a shape of the mold, and the polymerization is carried out at about 5°C to 140°C over 1 to 50 hours. In some cases, it is preferable that the temperature is held or is gradually increased in a temperature range of 5°C to 130°C, and the polymerizable composition is cured for 1 to 25 hours.

A stack cured by polymerization is released from the mold, so that the plastic polarizing lens of the invention can be obtained.

The stack after polymerization and release may be subjected to a heat treatment such as annealing, as necessary. A treatment temperature is 90°C to 150°C from the viewpoint of an effect of the present invention. The treatment is preferably carried out at 110°C to 130°C, and more preferably carried out at 115°C to 125°C. A treatment time is in a range of 1 to 10 hours and preferably 2 to 5 hours, from the viewpoint of an effect of the present invention.

The same coating layer as the plastic spectacle lens may be formed on a surface of the obtained base material layer.

### Examples

Next, the present invention will be described in more detail with reference to examples. However, the present invention is not limited by these examples at all. In the examples and comparative examples, methods and apparatuses used for evaluation are as follows.

· Luminous transmittance at time of decoloration: For a molded product sample processed to a 2 mm thickness, a spectral transmittance was measured at a temperature of 23°C using an instantaneous multi-photometry system MSPD-7700 manufactured by OTSUKA ELECTRONICS Co., LTD, and a luminous transmittance (%T) at the time of decoloration was calculated based on ISO8980-3. In a case where the luminous transmittance at the time of decoloration was 70%T or more, it was determined to have high transparency.
· Luminous transmittance at time of color development: After a molded product sample processed to a 2 mm thickness was irradiated with excitation light for 15 minutes at a temperature of 23°C under a condition of an illuminance of 50,000 lux, using an instantaneous multi-photometry system MSPD-7700 manufactured by OTSUKA ELECTRONICS Co., LTD which is equipped with an excitation light source xenon lamp MS-35AAA/FB2000-O manufactured by USHIO INC., a spectral transmittance was measured, and a luminous transmittance (%T) at the time of color development was calculated based on ISO8980-3. In a case where the luminous transmittance at the time of color development was 25%T or less, it was determined to have a high color-development performance.
· Visibility: A transmittance at 550 nm and a minimum transmittance (transmittance at 585 nm) between 575 nm and 600 nm when color development occurred in the molded product sample as described above were measured, and a difference therebetween was obtained. In a case where the difference is 5%T or more, it can be determined to have high visibility.

In addition, at the time of actually observing the outdoors through the obtained lens under fine weather, in a case where it was possible to obtain the results that an outline of an object such as a twig of a tree was clear, contrast of green, yellow, and red is high, and an object was clearly visualized, it was determined to be "good", and, in a case where it was not possible to obtain such results, it was determined to be "poor" (field test).

### (Raw materials used)

### Photochromic dye:

· Reversacol Wembley Grey (polyoxyalkylene chain, naphthopyran-based chromophore (General Formula (c)))
· Reversacol Heath Green (polyoxyalkylene chain, naphthopyran-based chromophore (General Formula (c)))
· Reversacol Chilli Red (polyoxyalkylene chain, naphthopyran-based chromophore (General Formula (c))
· Reversacol Cayenne Red (polyoxyalkylene chain, naphthopyran-based chromophore (General Formula (c)))

### Monomer:

· SunSensors-55 Monomer (manufactured by Mitsui Chemicals, Inc.) :
   A polymerizable composition that contains, as main components, 44% by weight of dimethacrylate of General Formula (i), 18% by weight of diacrylate of General Formula (ii), 15% by weight of dimethacrylate of General Formula (ii), 9% by weight of methacrylate of General Formula (iii), and 4.5% by weight of divinylbenzene of General Formula (iv) .
· SunSensors-50 Monomer (manufactured by Mitsui Chemicals, Inc.) :
   A polymerizable composition that contains, as main components, 12% by weight of the polyallyl carbonate of General Formula (11) and 86% by weight of the (meth)acrylate of General Formula (12)

### [Example 1]

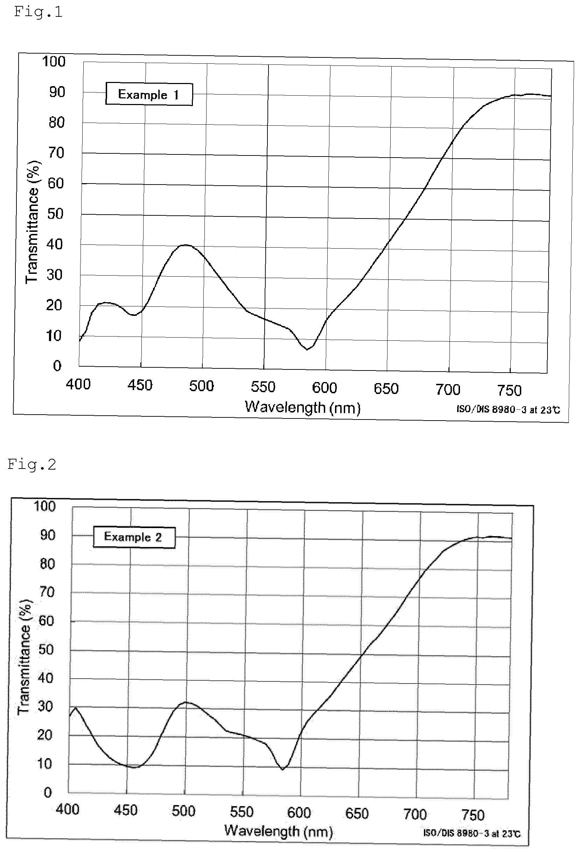

After adding, to 100.0 parts by weight of a product name SunSensors-55 Monomer (manufactured by Mitsui Chemicals, Inc.), 0.0215 parts by weight of a product name Reversacol Heath Green (manufactured by Vivimed Labs Ltd.) and 0.0540 parts by weight of a product name Reversacol Wembley Grey (manufactured by Vivimed Labs Ltd.) as photochromic compounds, and 0.0010 part by weight of a product name PD-311S (manufactured by Mitsui Chemicals, Inc.) as a tetraazaporphyrin compound, 0.25 parts by weight of 2,2'-azobis[2,4-dimethylvaleronitrile], and 0.03 parts by weight of 1,1-bis(t-butylperoxy)cyclohexane are added thereto, and dissolution was done by performing mixing and stirring. Degassing was performed under 5 mmHg for 60 minutes. Filtration was carried out with a 1 um PTFE filter and the filtrate was injected into a mold composed of glass molds and a tape. The mold was put into an oven, and then gradually heated to a temperature from 35°C to 95°C over 23 hours to carry out polymerization. After completion of the polymerization, the mold was taken out of the oven and released to obtain a 2 mm thick resin flat plate. The obtained resin flat plate was further annealed at 110°C for 1 hour. The obtained evaluation results are shown in Table 1. Furthermore, a transmittance curve of the obtained resin flat plate is shown in Fig. 1.

### [Example 2]

A procedure was carried out in the same manner as in Example 1 except that 0.0900 parts by weight of the product name Reversacol Heath Green (manufactured by Vivimed Labs Ltd.) and 0.0400 parts by weight of a product name Reversacol Chilli Red (manufactured by Vivimed Labs Ltd.) were used as photochromic compounds . The obtained evaluation results are shown in Table 1. Furthermore, a transmittance curve of the obtained resin flat plate is shown in Fig. 2.

### [Example 3]

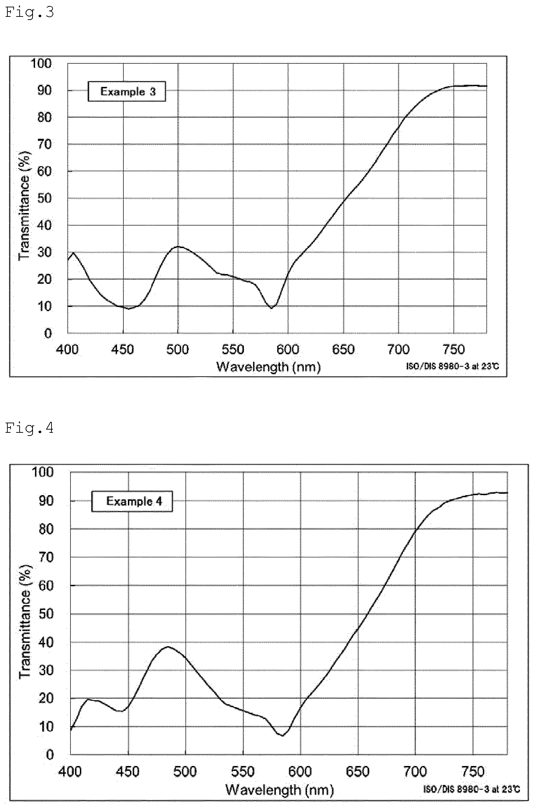

A procedure was carried out in the same manner as in Example 1 except that 0.0900 parts by weight of the product name Reversacol Heath Green (manufactured by Vivimed Labs Ltd.) and 0.0400 parts by weight of a product name Reversacol Cayenne Red (manufactured by Vivimed Labs Ltd.) were used as photochromic compounds . The obtained evaluation results are shown in Table 1. Furthermore, a transmittance curve of the obtained resin flat plate is shown in Fig. 3.

### [Example 4]

After adding, to 100.0 parts by weight of the product name SunSensors-50 Monomer (manufactured by Mitsui Chemicals, Inc.), 0.0285 parts by weight of the product name Reversacol Heath Green (manufactured by Vivimed Labs Ltd.) and 0.0530 parts by weight of the product name Reversacol Wembley Grey (manufactured by Vivimed Labs Ltd.) as photochromic compounds, and 0.0010 part by weight of the product name PD-311S (manufactured by Mitsui Chemicals, Inc.) as a tetraazaporphyrin compound, 0.55 parts by weight of t-butyl-peroxyneodecanoate and 0.15 parts by weight of 1,1,3,3-tetramethylbutyl-2-ethyl-peroxyhexanoate are added thereto, and dissolution was done by performing mixing and stirring. Degassing was performed under 5 mmHg for 60 minutes.

Filtration was carried out with a 1 um PTFE filter and the filtrate was injected into a mold composed of glass molds and a tape. The mold was put into an oven, and then gradually heated to a temperature from 30°C to 85°C over 23 hours to carry out polymerization. After completion of the polymerization, the mold was taken out of the oven and released to obtain a 2 mm thick resin flat plate. The obtained resin flat plate was further annealed at 110°C for 1 hour. The obtained evaluation results are shown in Table 1. Furthermore, a transmittance curve of the obtained resin flat plate is shown in Fig. 4.

### [Example 5]

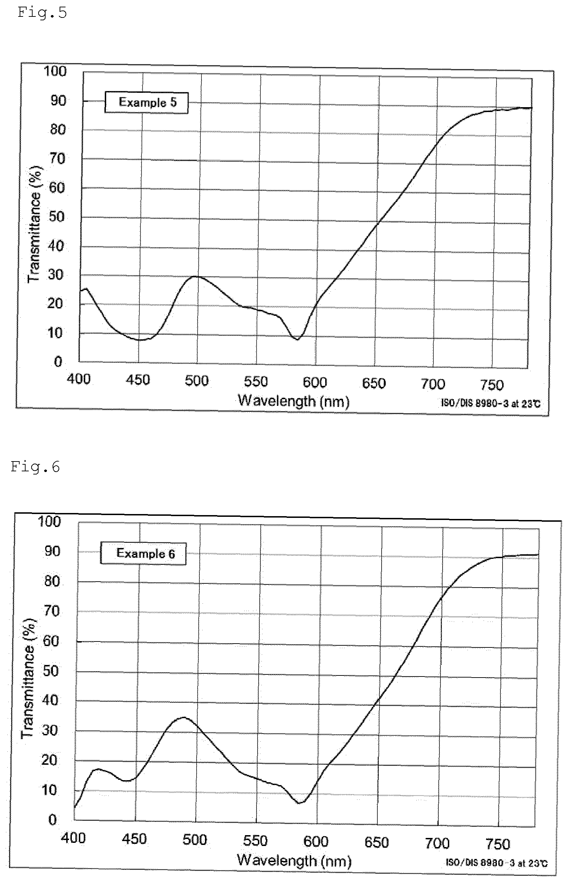

A procedure was carried out in the same manner as in Example 4 except that 0.0900 parts by weight of the product name Reversacol Heath Green (manufactured by Vivimed Labs Ltd.) and 0.0400 parts by weight of the product name Reversacol Cayenne Red (manufactured by Vivimed Labs Ltd.) were used as photochromic compounds . The obtained evaluation results are shown in Table 1. Furthermore, a transmittance curve of the obtained resin flat plate is shown in Fig. 5.

### [Example 6]

To 49.6 parts by weight of a mixture of 2,5-bis(isocyanatomethyl)-bicyclo[2.2.1]heptane and 2,6-bis(isocyanatomethyl)-bicyclo [2.2.1]heptane, were added 0.0010 parts by weight of the product name PD-311S (manufactured by Mitsui Chemicals, Inc.) as a tetraazaporphyrin compound, 0.30 parts by weight of JP-506H manufactured by Johoku Chemical Industry Co., Ltd. as acidic phosphate ester, 2.0 parts by weight of ADEKA PLURONIC L-64 manufactured by ADEKA CORPORATION, 0.0745 parts by weight of Reversacol Wembley Grey (manufactured by Vivimed Labs Ltd.) and 0.0610 parts by weight of Reversacol Heath Green (manufactured by Vivimed Labs Ltd.) as photochromic compounds, and 0.075 parts by weight of HOSTAVIN PR-25 as an ultraviolet absorber, and dissolution was done by performing stirring. To this mixture, were added 23.4 parts by weight of pentaerythritol tetrakis(3-mercaptopropionate) and 25.0 parts by weight of 4-mercaptomethyl-1,8-dimercapto-3,6-dithiaoctane. After performing stirring, 0.040 parts by weight of dimethyl tin dichloride was added thereto and uniformly dissolved. Degassing was performed under 5 mmHg for 60 minutes. Filtration was carried out with a 1 um PTFE filter and the filtrate was injected into a mold composed of glass molds and a tape. The mold was put into an oven, and then gradually heated to a temperature from 30°C to 120°C over 23 hours to carry out polymerization. After completion of the polymerization, the mold was taken out of the oven and released to obtain a 2 mm thick resin flat plate. The obtained resin flat plate was further annealed at 120°C for 1 hour. The obtained evaluation results are shown in Table 1. Furthermore, a transmittance curve of the obtained resin flat plate is shown in Fig. 6.

### [Example 7]

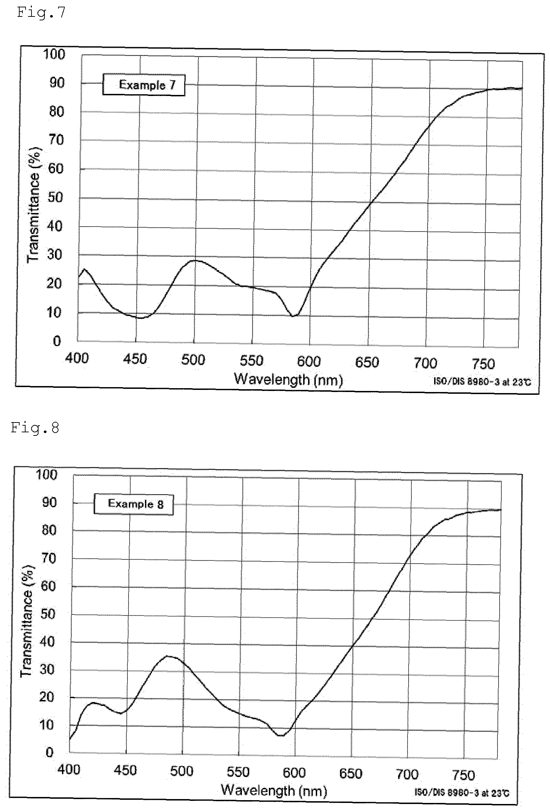

A procedure was carried out in the same manner as in Example 6 except that 0.1285 parts by weight of the product name Reversacol Heath Green (manufactured by Vivimed Labs Ltd.) and 0.0855 parts by weight of the product name Reversacol Cayenne Red (manufactured by Vivimed Labs Ltd.) were used as photochromic compounds . The obtained evaluation results are shown in Table 1. Furthermore, a transmittance curve of the obtained resin flat plate is shown in Fig. 7.

### [Example 8]

To 49.7 parts by weight of 1,3-xylylene diisocyanate, were added 0.0010 parts by weight of the product name PD-311S (manufactured by Mitsui Chemicals, Inc.) as a tetraazaporphyrin compound, 0.10 parts by weight of triphenyl phosphite, 0.30 parts by weight of JP-506H manufactured by Johoku Chemical Industry Co., Ltd. as acidic phosphate ester, 2.0 parts by weight of ADEKA PLURONIC L-64 manufactured by ADEKA CORPORATION, 0.0745 parts by weight of Reversacol Wembley Grey (manufactured by Vivimed Labs Ltd.) and 0.0610 parts by weight of Reversacol Heath Green (manufactured by Vivimed Labs Ltd.) as photochromic compounds, and 0.10 parts by weight of HOSTAVIN PR-25 as an ultraviolet absorber, and dissolution was done by performing stirring. To this mixture, was added 48.3 parts by weight of a composition that contains 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and stirred. Then, 0.008 parts by weight of dimethyl tin dichloride was added thereto, and uniformly dissolved. Degassing was performed under 5 mmHg for 60 minutes. Filtration was carried out with a 1 um PTFE filter and the filtrate was injected into a mold composed of glass molds and a tape. The mold was put into an oven, and then gradually heated to a temperature from 30°C to 120°C over 23 hours to carry out polymerization. After completion of the polymerization, the mold was taken out of the oven and released to obtain a 2 mm thick resin flat plate. The obtained resin flat plate was further annealed at 120°C for 1 hour. The obtained evaluation results are shown in Table 1. Furthermore, a transmittance curve of the obtained resin flat plate is shown in Fig. 8.

### [Example 9]

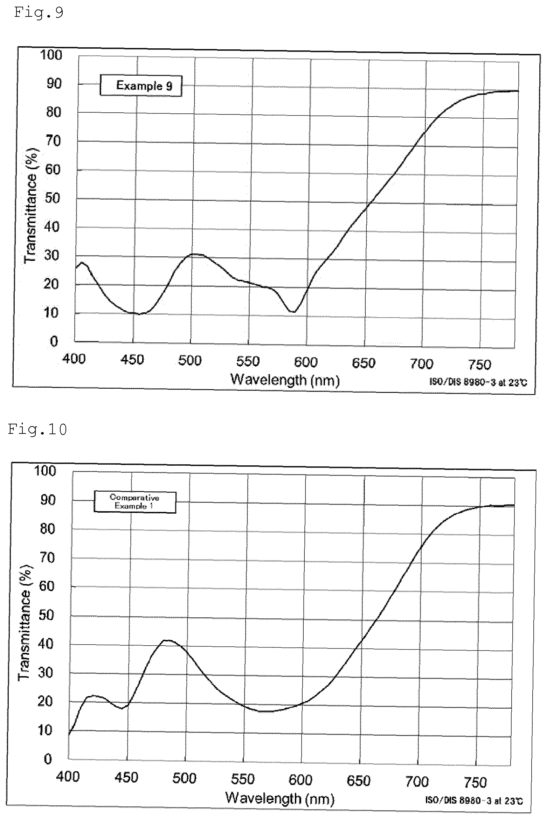

A procedure was carried out in the same manner as in Example 8 except that 0.1285 parts by weight of the product name Reversacol Heath Green (manufactured by Vivimed Labs Ltd.) and 0.0855 parts by weight of the product name Reversacol Cayenne Red (manufactured by Vivimed Labs Ltd.) were used as photochromic compounds . The obtained evaluation results are shown in Table 1. Furthermore, a transmittance curve of the obtained resin flat plate is shown in Fig. 9.

### [Comparative Examples 1 to 8]

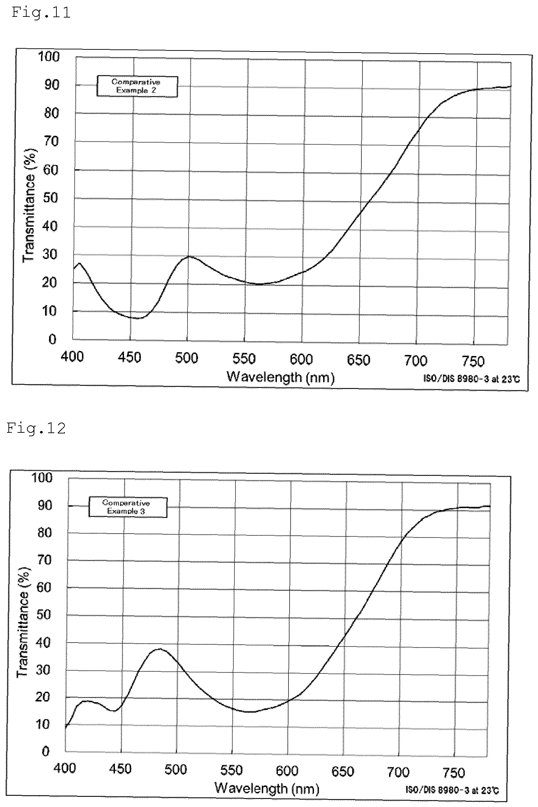

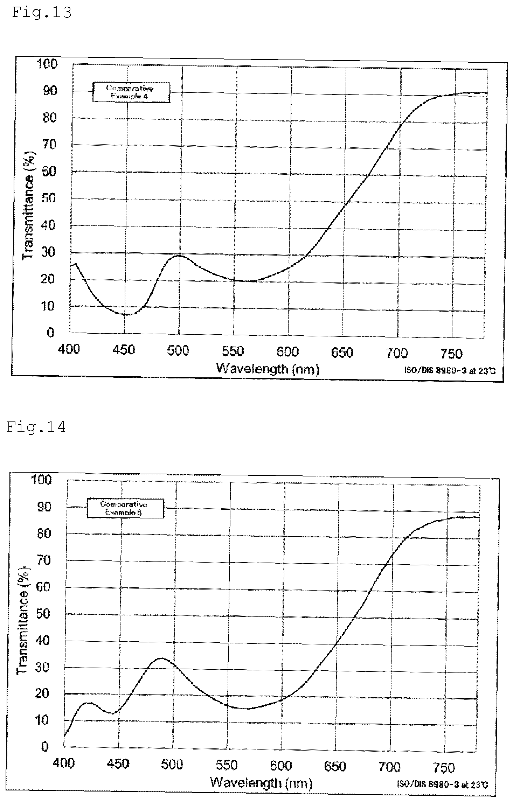

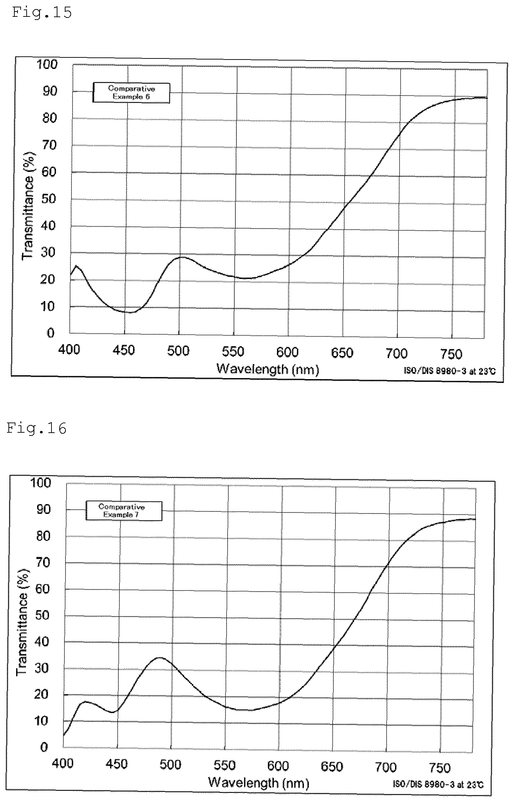

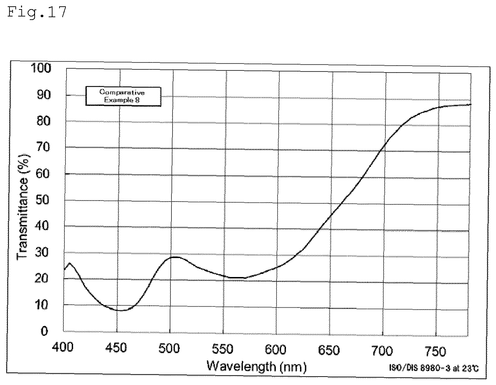

Procedures were carried out in the same manner as in Examples 1, and 3 to 9, except that no tetraazaporphyrin compound was added. The obtained evaluation results are shown in Table 1. Transmittance curves of the obtained resin flat plates are shown in Figs. 10 to 17.

**[Table 1]**

| | Composition | | | Luminous transmittance (%T) | | Visibility (with light irradiation (at time of color development)) | | | |
|---|---|---|---|---|---|---|---|---|---|
| | Monomer (parts by weight) | Tetraazaporphyrin (parts by weight) | Photochromic dye (parts by weight) | Without light irradiation (at time of decoloration) | With light irradiation (at time of color development) | 550nm (%T) | 585nm (%T) | Difference (%T) | Outdoor test |
| Example 1 | SSS-55 Monomer (100) | PD-311S (0.0010) | Photochromic dye A (0.0540) | 75 | 20 | 17 | 7 | 10 | Good |
| | | | Photochromic dye B (0.0215) | | | | | | |
| Example 2 | SSS-55 Monomer (100) | PD-311S (0.0010) | Photochromic dye B (0.0900) | 75 | 23 | 21 | 9 | 12 | Good |
| | | | Photochromic dye C (0.0400) | | | | | | |
| Example 3 | SSS-55 Monomer (100) | PD-311S (0.0010) | Photochromic dye B (0.0900) | 75 | 23 | 21 | 9 | 12 | Good |
| | | | Photochromic dye D (0.0400) | | | | | | |
| Example 4 | SSS-50 Monomer (100) | PD-311S (0.0010) | Photochromic dye A (0.0530) | 76 | 20 | 16 | 7 | 9 | Good |
| | | | Photochromic dye B (0.0285) | | | | | | |
| Example 5 | SSS-50 Monomer (100) | PD-311S (0.0010) | Photochromic dye B (0.0900) | 73 | 21 | 19 | 9 | 10 | Good |
| | | | Photochromic dye D (0.0400) | | | | | | |
| Example 6 | A1 (49.6) B1 (23.4) | PD-311S (0.0010) | Photochromic dye A (0.0745) | 73 | 19 | 15 | 7 | 8 | Good |
| | B2 (25.0) C1 (2.0) | | Photochromic dye B (0.0610) | | | | | | |
| Example 7 | A1 (49.6) B1 (23.4) | PD-311S (0.0010) | Photochromic dye B (0.1285) | 72 | 22 | 20 | 10 | 10 | Good |
| | B2 (25.0) C1 (2.0) | | Photochromic dye D (0.0855) | | | | | | |
| Example 8 | A2 (49.7) B3 (48.3) C1(2.0) | PD-311S (0.0010) | Photochromic dye A (0.0745) | 71 | 19 | 15 | 8 | 8 | Good |
| | | | Photochromic dye B (0.0610) | | | | | | |
| Example 9 | A2 (49.7) B3 (48.3) C1(2.0) | PD-311S (0.0010) | Photochromic dye B (0.1285) | 72 | 23 | 22 | 12 | 10 | Good |
| | | | Photochromic dve D (0.0855) | | | | | | |
| Comparative Example 1 | SSS-55 Monomer (100) | - | Photochromic dye A (0.0540) | 89 | 24 | 20 | 19 | 1 | Poor |
| | | | Photochromic dye B (0.0215) | | | | | | |
| Comparative Example 2 | SSS-55 Monomer (100) | - | Photochromic dye B (0.0900) | 88 | 24 | 21 | 22 | -1 | Poor |
| | | | Photochromic dye D (0.0400) | | | | | | |
| Comparative Example 3 | SSS-50 Monomer (100) | - | Photochromic dye A (0.0530) | 91 | 22 | 17 | 17 | -1 | Poor |
| | | | Photochromic dye B (0.0285) | | | | | | |
| Comparative Example 4 | SSS-50 Monomer (100) | - | Photochromic dye B (0.0900) | 90 | 24 | 21 | 23 | -2 | Poor |
| | | | Photochromic dye D (0.0400) | | | | | | |
| Comparative Example 5 | A1 (49.6) B1 (23.4) | - | Photochromic dye A (0.0745) | 86 | 21 | 16 | 17 | 0 | Poor |
| | B2 (25.0) C1 (2.0) | | Photochromic dye B (0.0610) | | | | | | |
| Comparative Example 6 | A1 (49.6) B1 (23.4) | - | Photochromic dye B (0.1285) | 86 | 25 | 22 | 24 | -2 | Poor |
| | B2 (25.0) C1 (2.0) | | Photochromic dye D (0.0855) | | | | | | |
| Comparative Example 7 | A2 (49.7) B3 (48.3) C1 (2.0) | - | Photochromic dye A (0.0745) | 86 | 21 | 16 | 16 | 0 | Poor |
| | | | Photochromic dye B (0.0610) | | | | | | |
| Comparative Example 8 | A2 (49.7) B3 (48.3) C1 (2.0) | - | Photochromic dye B (0.1285) | 85 | 25 | 22 | 23 | -1 | Poor |
| | | | Photochromic dye D (0.0855) | | | | | | |

The components listed in Table 1 are shown below.
Photochromic dye A: Reversacol Wembley Grey (manufactured by Vivimed Labs Ltd.)
Photochromic dye B: Reversacol Heath Green (manufactured by Vivimed Labs Ltd.)
Photochromic dye C: Reversacol Chilli Red (manufactured by Vivimed Labs Ltd.)
Photochromic dye D: Reversacol Cayenne Red (manufactured by Vivimed Labs Ltd.)
A1: Mixture of 2,5-bis(isocyanatomethyl)-bicyclo[2.2.1]heptane and 2,6-bis(isocyanatomethyl)-bicyclo[2.2.1]heptane
A2: 1,3-Xylylene diisocyanate
B1: Pentaerythritol tetrakis(3-mercaptopropionate)
B2: 4-Mercaptomethyl-1,8-dimercapto-3,6-dithiaoctane
B3: Composition that contains 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane
C1: ADEKA PLURONIC L-64 manufactured by Adeka Corporation

In Examples 1 to 9, the luminous transmittance at the time of decoloration is 70%T or more which represents high transparency, and the luminous transmittance at the time of color development is 25%T or less which represents that a high color-development performance, while exhibiting a difference in transmittance of 5% or more between 550 nm and 585 nm. Thus, it was confirmed that a high contrast performance was held.

This application claims priority based on Japanese Patent Application No. 2016-194499 filed on September 30, 2016 and Japanese Patent Application No. 2017-157506 filed on August 17, 2017.

## Claims

1. A photochromic lens comprising a tetraazaporphyrin compound represented by General Formula (1), and a photochromic dye, in which a transmittance at 23°C after irradiation using a xenon lamp at an illuminance of 50,000 lux for 15 minutes satisfies the following conditions;
(1) a transmittance at 550 nm is 25% or less
(2) a transmittance a at 550 nm is larger than a minimum transmittance b between 575 nm and 600 nm, and a difference between the transmittance a and the transmittance b is 5% or more
(3) there are one or more points of inflection in a transmittance curve from 550 nm to 600 nm, 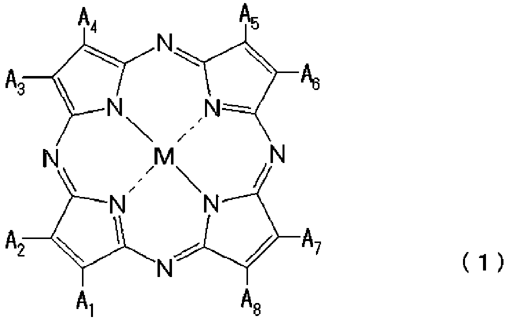 wherein, in General Formula (1), A₁ to A₈ each independently represent a hydrogen atom, a halogen atom, a nitro group, a cyano group, a hydroxyl group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, or may form a ring other than an aromatic ring via a linking group, and M represents two hydrogen atoms, an optionally substituted metal atom, or an oxy metal atom.

2. The photochromic lens according to claim 1,
wherein a luminous transmittance at the time of decoloration is 70% or more.

3. The photochromic lens according to claim 1,
wherein, in the tetraazaporphyrin compound, M is a copper atom, a nickel atom, or a cobalt atom.

4. The photochromic lens according to any one of claims 1 to 3,
wherein the tetraazaporphyrin compound is represented by General Formula (1a), 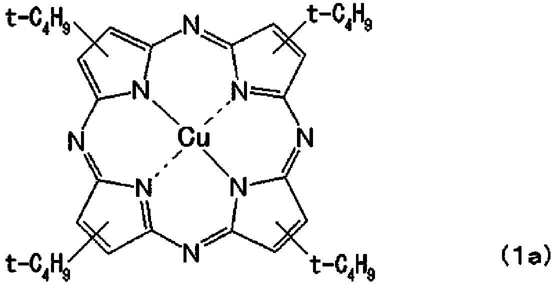
wherein, in Formula (1a), Cu represents divalent copper, and t-C₄H₉ represents a tertiary-butyl group of which substitution positions of four substituents are either A₁ or A₂, either A₃ or A₄, either A₅ or A₆, and either A₇ or A₈ in General Formula (1) .

5. The photochromic lens according to any one of claims 1 to 4, wherein the photochromic dye is represented by General Formula (5), 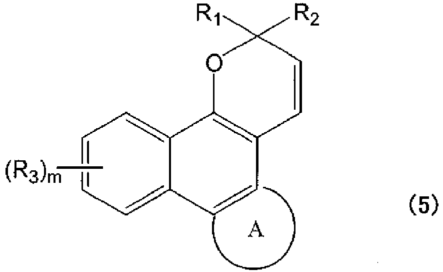
wherein, in the formula, R₁ and R₂, which may be the same or different from each other, independently represent hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R is a linear or branched alkyl group having 1 to 6 carbon atoms, and, in a case where there are two R's, the two R's may be the same or different from each other) , and a methacryloyl group or an acryloyl group); or
an aralkyl or heteroaralkyl group (in which a linear or branched alkyl group having 1 to 4 carbon atoms is substituted with the aryl group or heteroaryl group),
R₃'s, which may be the same or different from each other, independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which has been substituted with at least one halogen atom, a halocycloalkyl group having 3 to 12 carbon atoms which has been substituted with at least one halogen atom, or a linear or branched haloalkoxy group having 1 to 12 carbon atoms which has been substituted with at least one halogen atom;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, and an amino group);
an aralkyl or heteroaralkyl group (in which a linear or branched alkyl group having 1 to 4 carbon atoms is substituted with the aryl group or heteroaryl group);
a substituted or unsubstituted phenoxy or naphthoxy group (which has, as a substituent, at least one substituent selected from a linear or branched alkyl group or alkoxy group having 1 to 6 carbon atoms) ;
-NH₂, -NHR, -CONH₂, or -CONHR (in which R is a linear or branched alkyl group having 1 to 6 carbon atoms); or
-OCOR₈ or -COOR₈ (where R₈ is a linear or branched alkyl group having 1 to 6 carbon atoms or a cycloalkyl group having 3 to 6 carbon atoms, a phenyl group which is substituted by at least one substituent of the substituted aryl group or the substituted heteroaryl group in R₁ and R₂, or an unsubstituted phenyl group);
m is an integer of 0 to 4;
A represents an annelated ring of Formula (A₂) or Formula (A₄), 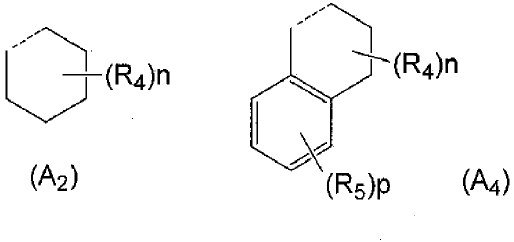
in these annelated rings,
a dotted line represents a C₅-C₆ bond of the naphthopyran ring in General Formula (5);
an α bond of the annelated ring (A₄)can be bonded to C₅ or C₆ of the naphthopyran ring in General Formula (5);
R₄'s are the same or different from each other, and independently represent OH, a linear or branched alkyl group or alkoxy group having 1 to 6 carbon atoms, or two R₄'s form carbonyl (CO);
R₅ represents halogen;
a linear or branched alkyl group having 1 to 12 carbon atoms;
a linear or branched haloalkyl group having 1 to 6 carbon atoms which has been substituted with at least one halogen atom;
a cycloalkyl group having 3 to 12 carbon atoms;
a linear or branched alkoxy group having 1 to 6 carbon atoms;
a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group);
-NH₂ or -NHR (where R is a linear or branched alkyl group having 1 to 6 carbon atoms);
a substituted or unsubstituted phenoxy or naphthoxy group (which has, as a substituent, at least a linear or branched alkyl group or alkoxy group having 1 to 6 carbon atoms); or
a -COR₉, -COOR₉, or -CONHR₉ group (where R₉ is a linear or branched alkyl group having 1 to 6 carbon atoms, a cycloalkyl group having 3 to 6 carbon atoms, or a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group)); and
in a case where A represents (A₄), n is an integer of 0 to 2 and p is an integer of 0 to 4, and in a case where A represents (A₂), n is an integer of 0 to 2.

6. The photochromic lens according to any one of claims 1 to 4, wherein the photochromic dye is represented by General Formula (a) or General Formula (b),
PC-L-Chain (a)
PC-L-Chain-L'-PC' (b)
wherein PC and PC' each represent any one of General Formulas (c) to (f), and PC and PC' may be the same or different from each other, and 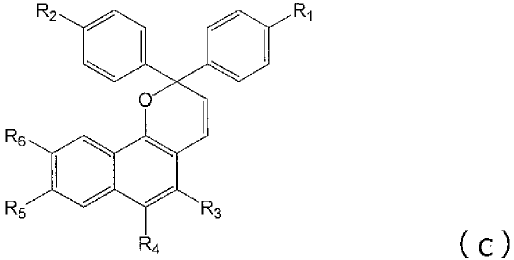 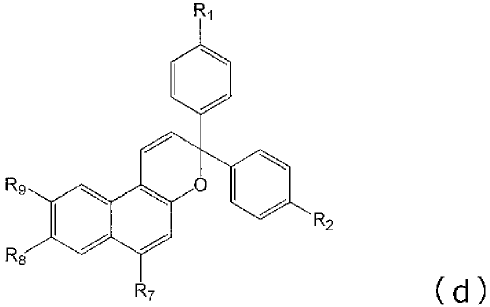 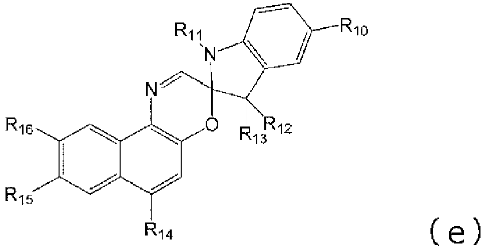 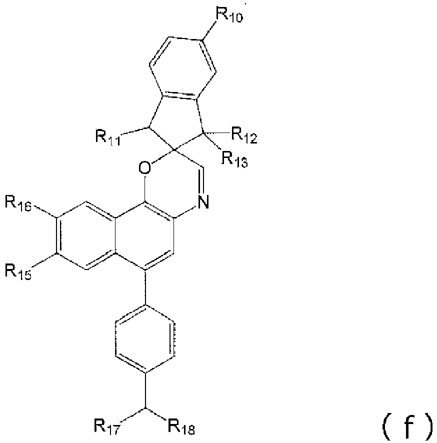
wherein R₁ to R₁₈, which may be the same or different from one another, each represent hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, in which the aliphatic group, alicyclic group, or aromatic organic group may contain an oxygen atom or a nitrogen atom,
any one of the groups contained in the compounds represented by General Formulas (c) to (f) is bonded to L or L' which is a divalent organic group,
L and L' each represent a divalent organic group containing one or more kinds selected from an oxyethylene chain, an oxypropylene chain, a (thio)ester group, and a (thio)amide group, and
the Chain represents a monovalent or divalent organic group containing at least one kind selected from a polysiloxane chain and a polyoxyalkylene chain.

7. The photochromic lens according to any one of claims 1 to 6, further comprising:
at least one kind selected from poly(meth)acrylate, polyallyl carbonate, and poly(thio)urethane.

8. The photochromic lens according to claim 7,
wherein the poly(meth)acrylate contains structural units derived from at least two kinds selected from compounds represented by General Formulas (i), (ii), (iii), and (iv); 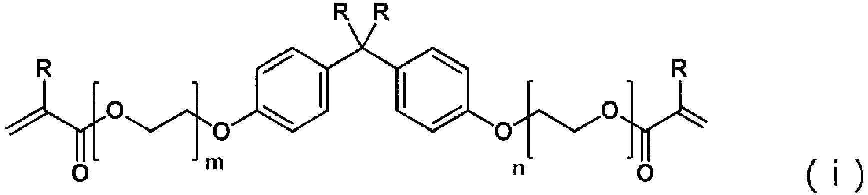
wherein, in the formula, R represents a hydrogen atom or a methyl group, and a plurality of R's may be the same or different from one another, and
m and n each represent an integer of 0 to 20 and may be the same or different from each other) 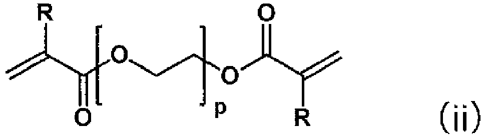
wherein, in the formula, R represents a hydrogen atom or a methyl group, and a plurality of R's may be the same or different from each other, and
p represents an integer of 0 to 20, 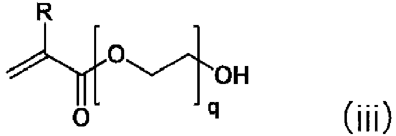
wherein, in the formula, R represents a hydrogen atom or a methyl group, and q represents an integer of 0 to 20.

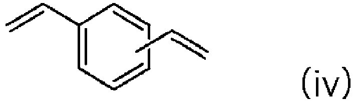

9. The photochromic lens according to claim 7,
wherein the photochromic lens contains a mixture comprised of the polyallyl carbonate and the poly(meth)acrylate, and
wherein the mixture contains a structural unit (a) derived from an allyl carbonate compound (A) which is represented by General Formula (11) and contains two or more allyloxycarbonyl groups, and a structural unit (b) derived from a (meth) acrylate compound (B) which is represented by General Formula (12) and contains two or more (meth)acryl groups, and
the structural unit (a) is contained in an amount of 5% by weight to 30% by weight and the structural unit (b) is contained in an amount of 70% by weight to 95% by weight, with respect to a total of 100% by weight of the structural unit (a) and the structural unit (b), 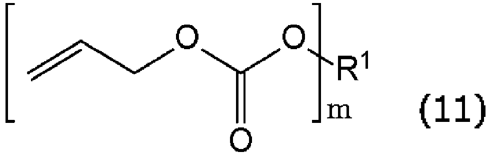
wherein, R¹ represents a divalent to twenty-valent group derived from chained or branched C3 to C35 aliphatic polyol which optionally contain a heteroatom, or a divalent to twenty-valent group derived from C5 to C40 cycloaliphatic polyol which optionally contain a heteroatom, and
m represents an integer of 2 to 10,
where R¹ does not contain an allyloxycarbonyl group, 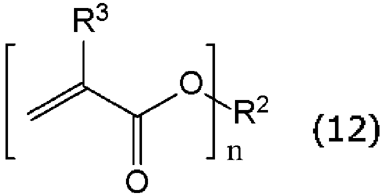
wherein, R² represents a divalent to tetravalent organic group having 1 to 30 carbon atoms which optionally contain a heteroatom or an aromatic group,
R³ represents a hydrogen atom or a methyl group, and
n represents an integer of 2 to 4.

10. The photochromic lens according to claim 7,
wherein the poly(thio)urethane contains a structural unit derived from a polyisocyanate compound (a), a structural unit derived from a polyol compound (b) having a number average molecular weight of 100 or more, and a structural unit derived from a bifunctional or higher functional active hydrogen compound (c) (with the proviso that the compound (b) is excluded).

11. A polymerizable composition, comprising:
a tetraazaporphyrin compound represented by General Formula (1) ;
at least one kind selected from photochromic dyes represented by General Formula (5), General Formula (a), and General Formula (b) ; and
a polymerizable compound, 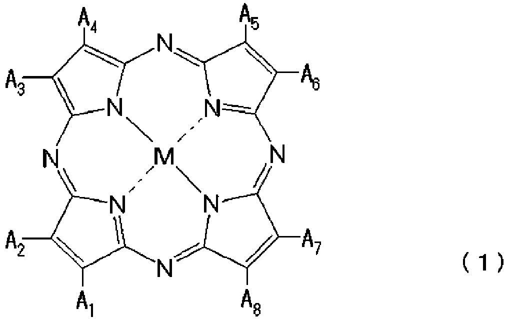
wherein, in General Formula (1), A₁ to A₈ each independently represent a hydrogen atom, a halogen atom, a nitro group, a cyano group, a hydroxyl group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, or may form a ring other than an aromatic ring via a linking group, and M represents two hydrogen atoms, an optionally substituted metal atom, or an oxy metal atom, 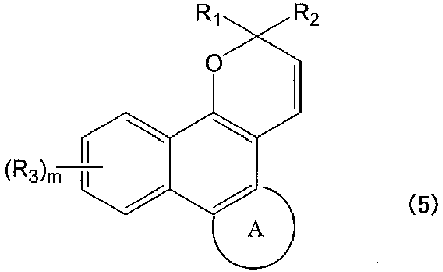
wherein, in the formula, R₁ and R₂, which may be the same or different from each other, independently represent hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, a -NH₂ group, a -NHR group, a -N (R)₂ group (R is a linear or branched alkyl group having 1 to 6 carbon atoms, and, in a case where there are two R's, the two R's may be the same or different from each other), and a methacryloyl group or an acryloyl group); or
an aralkyl or heteroaralkyl group (in which a linear or branched alkyl group having 1 to 4 carbon atoms is substituted with the aryl group or heteroaryl group),
R₃'s, which may be the same or different from each other, independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which has been substituted with at least one halogen atom, a halocycloalkyl group having 3 to 12 carbon atoms which has been substituted with at least one halogen atom, or a linear or branched haloalkoxy group having 1 to 12 carbon atoms which has been substituted with at least one halogen atom;
a substituted or unsubstituted aryl group having 6 to 24 carbon atoms or a substituted or unsubstituted heteroaryl group having 4 to 24 carbon atoms (which has, as a substituent, at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms which has been substituted with at least one halogen atom, a linear or branched haloalkoxy group having 1 to 12 carbon atoms which has been substituted with at least one halogen atom, a phenoxy group or naphthoxy group which has been substituted with at least one linear or branched alkyl group or alkoxy group having 1 to 12 carbon atoms, a linear or branched alkenyl group having 2 to 12 carbon atoms, and an amino group);
an aralkyl or heteroaralkyl group (in which a linear or branched alkyl group having 1 to 4 carbon atoms is substituted with the aryl group or heteroaryl group);
a substituted or unsubstituted phenoxy or naphthoxy group (which has, as a substituent, at least one substituent selected from a linear or branched alkyl group or alkoxy group having 1 to 6 carbon atoms) ;
-NH₂, -NHR, -CONH₂, or -CONHR (in which R is a linear or branched alkyl group having 1 to 6 carbon atoms); or
-OCOR₈ or -COOR₈ (where R₈ is a linear or branched alkyl group having 1 to 6 carbon atoms or a cycloalkyl group having 3 to 6 carbon atoms, a phenyl group which is substituted by at least one substituent of the substituted aryl group or the substituted heteroaryl group in R₁ and R₂, or an unsubstituted phenyl group);
m is an integer of 0 to 4;
A represents an annelated ring of Formula (A₂) or Formula (A₄), 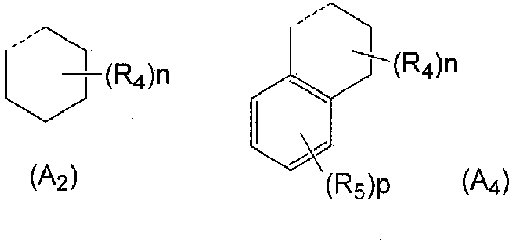
in these annelated rings,
a dotted line represents a C₅-C₆ bond of the naphthopyran ring in General Formula (5);
an α bond of the annelated ring (A₄) can be bonded to C₅ or C₆ of the naphthopyran ring in General Formula (5);
R₄'s are the same or different from each other, and independently represent OH, a linear or branched alkyl group or alkoxy group having 1 to 6 carbon atoms, or two R₄'s form carbonyl (CO);
R₅ represents halogen;
a linear or branched alkyl group having 1 to 12 carbon atoms;
a linear or branched haloalkyl group having 1 to 6 carbon atoms which has been substituted with at least one halogen atom;
a cycloalkyl group having 3 to 12 carbon atoms;
a linear or branched alkoxy group having 1 to 6 carbon atoms;
a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group);
-NH₂ or -NHR (where R is a linear or branched alkyl group having 1 to 6 carbon atoms);
a substituted or unsubstituted phenoxy or naphthoxy group (which has, as a substituent, at least a linear or branched alkyl group or alkoxy group having 1 to 6 carbon atoms); or
a -COR₉, -COOR₉, or -CONHR₉ group (where R₉ is a linear or branched alkyl group having 1 to 6 carbon atoms, a cycloalkyl group having 3 to 6 carbon atoms, or a substituted or unsubstituted phenyl or benzyl group (which has, as a substituent, at least one of the substituents described in the definition of R₁ and R₂ groups in General Formula (5) in a case where the R₁ and R₂ groups independently correspond to an aryl or heteroaryl group));
in a case where A represents (A₄), n is an integer of 0 to 2 and p is an integer of 0 to 4, and in a case where A represents (A₂), n is an integer of 0 to 2,
PC-L-Chain (a)
PC-L-Chain-L'-PC' (b)
wherein PC and PC' each represent any one of General Formulas (c) to (f), and PC and PC' may be the same or different from each other, 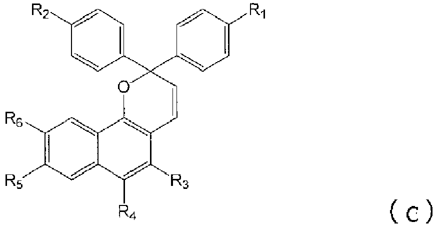 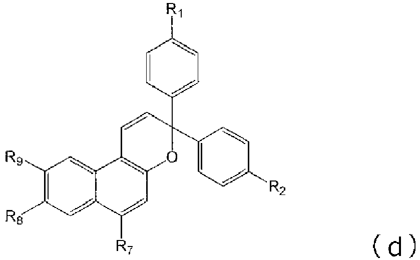 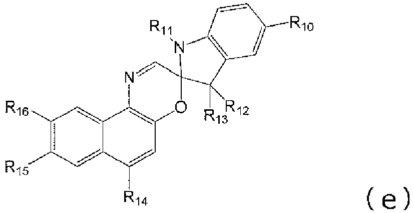 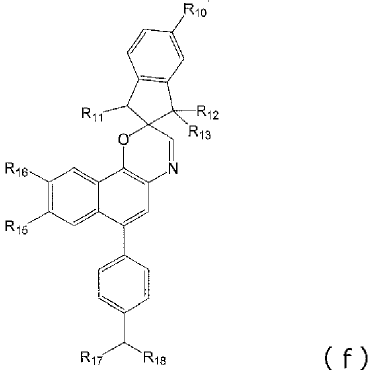
wherein R₁ to R₁₈, which may be the same or different from one another, each represent hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, in which
the aliphatic group, alicyclic group, or aromatic organic group may contain an oxygen atom or a nitrogen atom,
any one of the groups contained in the compounds represented by General Formulas (c) to (f) is bonded to L or L' which is a divalent organic group,
L and L' each represent a divalent organic group containing one or more kinds selected from an oxyethylene chain, an oxypropylene chain, a (thio)ester group, and a (thio)amide group, and
the Chain represents a monovalent or divalent organic group containing at least one kind selected from a polysiloxane chain and a polyoxyalkylene chain.

12. The polymerizable composition according to claim 11,
wherein the polymerizable compound contains at least two kinds selected from compounds represented by General Formulas (i), (ii), (iii), and (iv), 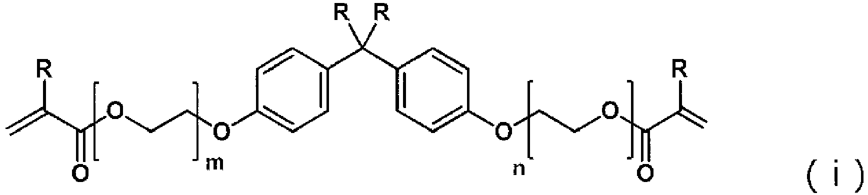
wherein, in the formula, R represents a hydrogen atom or a methyl group, and a plurality of R's may be the same or different from one another, and
m and n each represent an integer of 0 to 20 and may be the same or different from each other, and 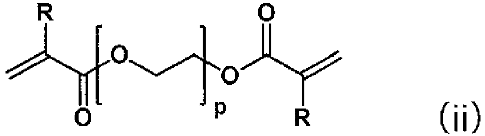
wherein, in the formula, R represents a hydrogen atom or a methyl group, and a plurality of R's may be the same or different from each other, and
p represents an integer of 0 to 20, 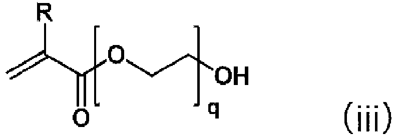
wherein, in the formula, R represents a hydrogen atom or a methyl group, and q represents an integer of 0 to 20.

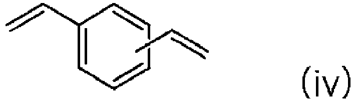

13. The polymerizable composition according to claim 11,
wherein the polymerizable compound contains an allyl carbonate compound (A) which is represented by General Formula (11) and contains two or more allyloxycarbonyl groups, and a (meth)acrylate compound (B) which is represented by General Formula (12) and contains two or more (meth)acryl groups, and
the compound (A) is contained in an amount of 5% by weight to 30% by weight and the compound (B) is contained in an amount of 70% by weight to 95% by weight, in a total of 100% by weight of the compound (A) and the compound (B), 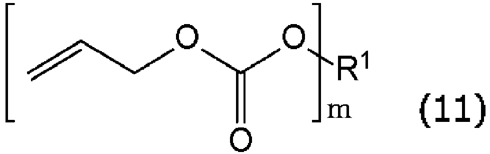
wherein R₁ represents a divalent to twenty-valent group derived from chained or branched C3 to C35 aliphatic polyol which optionally contain a heteroatom, or a divalent to twenty-valent group derived from C5 to C40 cycloaliphatic polyol which optionally contain a heteroatom, and
m represents an integer of 2 to 10,
where R¹ does not contain an allyloxycarbonyl group, and 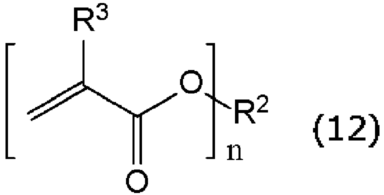
wherein R² represents a divalent to tetravalent organic group having 1 to 30 carbon atoms which optionally contain a heteroatom or an aromatic group,
R³ represents a hydrogen atom or a methyl group, and
n represents an integer of 2 to 4.

14. The polymerizable composition according to claim 11,
wherein the polymerizable compound contains a polyisocyanate compound (a), a polyol compound (b) having a number average molecular weight of 100 or more, and a bifunctional or higher functional active hydrogen compound (c) (with the proviso that the compound (b) is excluded).

15. A photochromic lens obtained by curing the polymerizable composition according to any one of claims 11 to 14.

16. A plastic polarizing lens, comprising:
a polarizing film; and
a base material layer comprised of the polymerizable composition according to any one of claims 11 to 14 which is formed on at least a surface of the polarizing film located at an objective surface side.

## Patentansprüche

1. Photochrome Linse, die eine Tetraazaporphyrin-Verbindung, die durch die allgemeine Formel (1) dargestellt ist, und einen photochromen Farbstoff umfasst, wobei die Lichtdurchlässigkeit bei 23 °C nach einer Bestrahlung mit einer Xenonlampe bei einer Beleuchtungsstärke von 50.000 Lux über 15 Minuten die folgenden Bedingungen erfüllt:
(1) die Durchlässigkeit bei 550 nm beträgt 25 % oder weniger;
(2) die Durchlässigkeit bei 550 nm ist größer als die Mindestlichtdurchlässigkeit b zwischen 575 nm und 600 nm, und der Unterschied zwischen der Lichtdurchlässigkeit a und der Lichtdurchlässigkeit b beträgt 5 % oder mehr;
(3) es gibt einen oder mehrere Wendepunkte in der Lichtdurchlässigkeitskurve von 550 nm bis 600 nm; 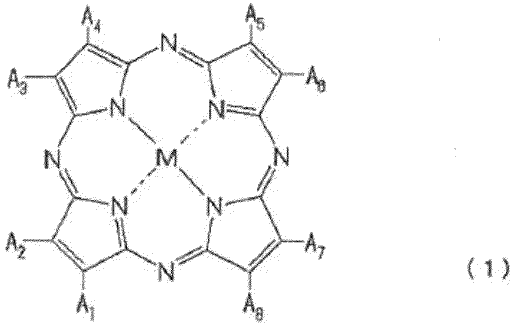 wobei in der allgemeinen Formel (1) A₁ bis A₈ jeweils unabhängig voneinander für ein Wasserstoffatom, ein Halogenatom, eine Nitrogruppe, eine Cyanogruppe, eine Hydroxylgruppe, eine Aminogruppe, eine Carboxylgruppe, eine Sulfonsäuregruppe, eine unverzweigte, verzweigte oder zyklische Alkylgruppe mit 1 bis 20 Kohlenstoffatomen, eine Alkoxygruppe mit 1 bis 20 Kohlenstoffatomen, eine Aryloxygruppe mit 6 bis 20 Kohlenstoffatomen, eine Monoalkylaminogruppe mit 1 bis 20 Kohlenstoffatomen, eine Dialkylaminogruppe mit 2 bis 20 Kohlenstoffatomen, eine Dialkylaminogruppe mit 7 bis 20 Kohlenstoffatomen, eine Aralkylgruppe mit 7 bis 20 Kohlenstoffatomen, eine Arylgruppe mit 6 bis 20 Kohlenstoffatomen, eine Heteroarylgruppe, eine Alkylthiogruppe mit 6 bis 20 Kohlenstoffatomen oder eine Arylthiogruppe mit 6 bis 20 Kohlenstoffatomen stehen oder gegebenenfalls über eine Linkergruppe einen anderen Ring als einen aromatischen Ring bilden und M für zwei Wasserstoffatome, ein gegebenenfalls substituiertes Metallatom oder ein Oxymetallatom steht.

2. Photochrome Linse nach Anspruch 1,
wobei der Lichttransmissionsgrad zum Zeitpunkt der Entfärbung 70 % oder mehr beträgt.

3. Photochrome Linse nach Anspruch 1,
wobei M in der Tetraazaporphyrin-Verbindung ein Kupfer-Atom, ein Nickel-Atom oder ein Cobalt-Atom ist.

4. Photochrome Linse nach einem der Ansprüche 1 bis 3, wobei die Tetraazaporphyrin-Verbindung durch die allgemeine Formel (la) dargestellt ist: 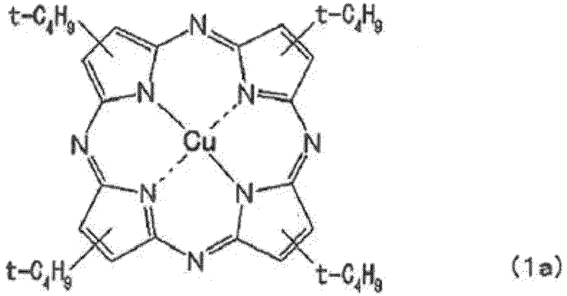 wobei in Formel (la) Cu für zweiwertiger Kupfer steht und t-C₄H₉ für eine tert-Butylgruppe steht, wobei die Substitutionspositionen der vier Substituenten in der allgemeinen Formel (1) entweder A₁ oder A₂, entweder A₃ oder A₄, entweder A₅ oder A₆ und entweder A₇ oder A₈ sind.

5. Photochrome Linse nach einem der Ansprüche 1 bis 4, wobei der photochrome Farbstoff durch die allgemeine Formel (5) dargestellt ist: 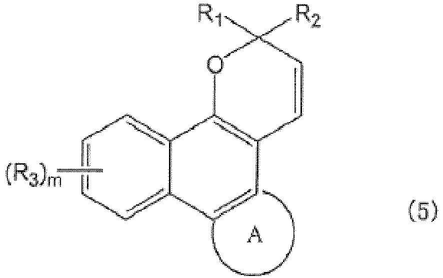 wobei in der Formel R₁ und R₂, die gleich oder unterschiedlich sein können, jeweils unabhängig voneinander für Wasserstoff,
eine unverzweigte oder verzweigte Alkylgruppe mit 1 bis 12 Kohlenstoffatomen,
eine Cycloalkylgruppe mit 3 bis 12 Kohlenstoffatomen,
eine substituierte oder unsubstituierte Arylgruppe mit 6 bis 24 Kohlenstoffatomen oder eine substituierte oder unsubstituierte Heteroarylgruppe mit 4 bis 24 Kohlenstoffatomen stehen (die als Substituenten zumindest einen Substituenten aufweist, der aus einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen, einer -NH₂-Gruppe, einer -NHR-Gruppe, einer -N(R)₂-Gruppe (worin R eine unverzweigte oder verzweigte Alkylgruppe mit 1 bis 6 Kohlenstoffatomen ist und, wenn zwei R vorhanden sind, die beiden R gleich oder unterschiedlich sein können), und einer Methacryloylgruppe oder einer Acryloylgruppe ausgewählt ist), oder
eine Aralkyl- oder Heteroaralkylgruppe (worin eine unverzweigte oder verzweigte Alkylgruppe mit 1 bis 4 Kohlenstoffatomen mit der Arylgruppe oder Heteroarylgruppe substituiert ist) stehen;
die R₃, die gleich oder unterschiedlich sein können, jeweils unabhängig voneinander für ein Halogenatom,
eine unverzweigte oder verzweigte Alkylgruppe mit 1 bis 12 Kohlenstoffatomen, eine Cycloalkylgruppe mit 3 bis 12 Kohlenstoffatomen, eine unverzweigte oder verzweigte Alkoxygruppe mit 1 bis 12 Kohlenstoffatomen, eine unverzweigte oder verzweigte Halogenalkylgruppe mit 1 bis 12 Kohlenstoffatomen, die mit zumindest einem Halogenatom substituiert ist, eine Halogencycloalkylgruppe mit 3 bis 12 Kohlenstoffatomen, die mit zumindest einem Halogenatom substituiert ist, oder eine unverzweigte oder verzweigte Halogenalkoxygruppe mit 1 bis 12 Kohlenstoffatomen, die mit zumindest einem Halogenatom substituiert ist,
eine substituierte oder unsubstituierte Arylgruppe mit 6 bis 24 Kohlenstoffatomen oder eine substituierte oder unsubstituierte Heteroarylgruppe mit 4 bis 24 Kohlenstoffatomen (die als Substituenten zumindest einen Substituenten aufweist, der aus einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, eine Phenoxygruppe oder Naphthoxygruppe, die mit zumindest einer unverzweigten oder verzweigten Alkylgruppe oder einer Alkoxygruppe mit 1 bis 12 Kohlenstoffatomen substituiert ist, einer unverzweigten oder verzweigten Alkenylgruppe mit 2 bis 12 Kohlenstoffatomen und einer Aminogruppe ausgewählt ist),
eine Aralkyl- oder Heteroaralkylgruppe (worin eine unverzweigte oder verzweigte Alkylgruppe mit 1 bis 4 Kohlenstoffatomen mit der Arylgruppe oder Heteroarylgruppe substituiert ist),
eine substituierte oder unsubstituierte Phenoxy- oder Naphthoxygruppe (die als Substituenten zumindest einen Substituenten aufweist, der aus einer unverzweigten oder verzweigten Alkylgruppe oder Alkoxygruppe mit 1 bis 6 Kohlenstoffatomen ausgewählt ist),
-NH₂, -NHR, -CONH₂ oder-CONHR (worin R eine unverzweigte oder verzweigte Alkylgruppe mit 1 bis 6 Kohlenstoffatomen ist), oder
-OCORs oder -COOR₈ (worin R₈ eine unverzweigte oder verzweigte Alkylgruppe mit 1 bis 6 Kohlenstoffatomen oder eine Cycloalkylgruppe mit 3 bis 6 Kohlenstoffatomen, eine Phenylgruppe, die mit zumindest einem Substituenten der substituierten Arylgruppe oder der substituierten Heteroarylgruppe in R₁ und R₂ substituiert ist, oder eine unsubstituierte Phenylgruppe ist) stehen;
m eine ganze Zahl von 0 bis 4 ist;
A für einen kondensierten Ring der Formel (A₂) oder Formel (A₄) steht: 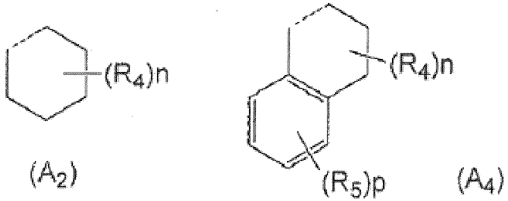 wobei in diesen kondensierten Ringen
eine gestrichelte Linie für eine C₅-C₆-Bindung des Naphthopyran-Rings in der allgemeinen Formel (5) steht,
eine α-Bindung des kondensierten Rings (A4) an C₅ oder C₆ des Naphthopyran-Rings in der allgemeinen Formel (5) gebunden sein kann;
die R₄ gleich oder unterschiedlich sind und jeweils unabhängig voneinander für OH, eine unverzweigte oder verzweigte Alkylgruppe oder Alkoxygruppe mit 1 bis 6 Kohlenstoffatomen stehen oder zwei R₄ Carbonyl (CO) bilden,
die R₅ für Halogen,
eine unverzweigte oder verzweigte Alkylgruppe mit 1 bis 12 Kohlenstoffatomen, eine unverzweigte oder verzweigte Halogenalkylgruppe mit 1 bis 6 Kohlenstoffatomen, die mit zumindest einem Halogenatom substituiert ist,
eine Cycloalkylgruppe mit 3 bis 12 Kohlenstoffatomen,
eine unverzweigte oder verzweigte Alkoxygruppe mit 1 bis 6 Kohlenstoffatomen,
eine substituierte oder unsubstituierte Phenyl- oder Benzylgruppe (die als Substituenten zumindest einen der in der Definition der Gruppen R₁ und R₂ in der allgemeinen Formel (5) beschriebenen Substituenten aufweisen, wenn die Gruppen R₁ und R₂ jeweils unabhängig voneinander für eine Aryl- oder Heteroarylgruppe stehen),
-NH₂ oder -NHR (worin R eine unverzweigte oder verzweigte Alkylgruppe mit 1 bis 6 Kohlenstoffatomen ist),
eine substituierte oder unsubstituierte Phenoxy- oder Naphthoxygruppe (die als Substituenten zumindest eine unverzweigte oder verzweigte Alkylgruppe oder Alkoxygruppe mit 1 bis 6 Kohlenstoffatomen aufweist), oder
eine Gruppe -COR₉, -COOR₉ oder -CONHR₉ stehen (worin R₉ eine unverzweigte oder verzweigte Alkylgruppe mit 1 bis 6 Kohlenstoffatomen, eine Cycloalkylgruppe mit 3 bis 6 Kohlenstoffatomen oder eine substituierte oder unsubstituierte Phenyl- oder Benzylgruppe ist (die als Substituenten zumindest einen der in der Definition der Gruppen R₁ und R₂ in der allgemeinen Formel (5) beschriebenen Substituenten aufweist, wenn die Gruppen R₁ und R₂ jeweils unabhängig voneinander für eine Aryl- oder Heteroarylgruppe stehen)); und
wenn A für (A₄) steht, n eine ganze Zahl von 0 bis 2 ist und p eine ganze Zahl von 0 bis 4 ist, und wenn A für (A₂) steht, n eine ganze Zahl von 0 bis 2 ist.

6. Photochrome Linse nach einem der Ansprüche 1 bis 4, wobei der photochrome Farbstoff durch die allgemeine Formel (a) oder die allgemeine Formel (b) dargestellt ist:
PC-L-Kette (a)
PC-L-Kette-L'-PC' (b)
worin PC und PC' jeweils für eine beliebige der allgemeinen Formeln (c) bis (f) stehen und PC und PC' gleich oder unterschiedlich sein können, 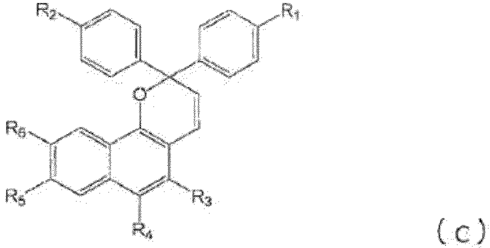 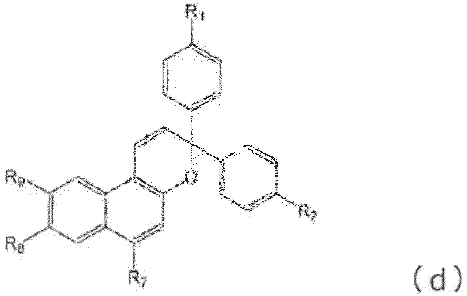 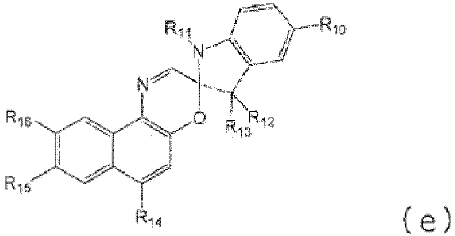 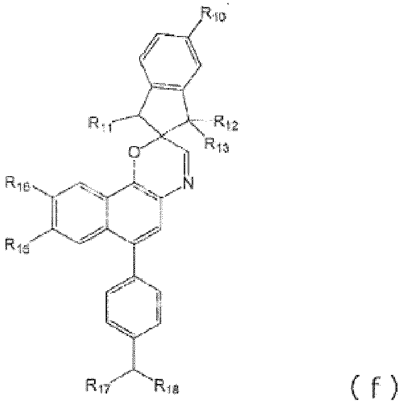 worin R₁ bis Ris, die gleich oder unterschiedlich sein können, jeweils für Wasserstoff, ein Halogenatom, eine Carboxylgruppe, eine Acetylgruppe, eine Formylgruppe, eine gegebenenfalls substituierte aliphatische C1- bis C20-Gruppe, eine gegebenenfalls substituierte alizyklische C3- bis C20-Gruppe oder eine gegebenenfalls substituierte, aromatische C6- bis C20-Gruppe stehen, wobei die aliphatische Gruppe, alizyklische Gruppe oder aromatische Gruppe gegebenenfalls ein Sauerstoffatom oder ein Stickstoffatom enthält;
wobei jede der vorgenannten Gruppen, die in den durch die allgemeinen Formeln (c) bis (f) dargestellten Verbindungen enthalten ist, an L oder L' gebunden ist, wobei es sich um eine zweiwertige organische Gruppe handelt;
L und L' jeweils für eine zweiwertige organische Gruppe stehen, die eine oder mehrere, ausgewählt aus einer Oxyethylenkette, einer Oxypropylenkette, einer (Thio)estergruppe und einer (Thio)amidgruppe umfassen; und
die Kette für eine einwertige oder zweiwertige organische Gruppe steht, die zumindest eine, ausgewählt aus einer Polysiloxankette und einer Polyoxyalkylenkette umfasst.

7. Photochrome Linse nach einem der Ansprüche 1 bis 6, die weiters Folgendes umfasst:
zumindest eines, ausgewählt aus Poly(meth)acrylat, Polyallylcarbonat und Poly(thio)-urethan.

8. Photochrome Linse nach Anspruch 7,
wobei das Poly(meth)acrylat Struktureinheiten enthält, die von zumindest zwei Verbindungen, ausgewählt aus Verbindungen, die durch die allgemeinen Formeln (i), (ii), (iii) und (iv) dargestellt sind, abgeleitet sind: 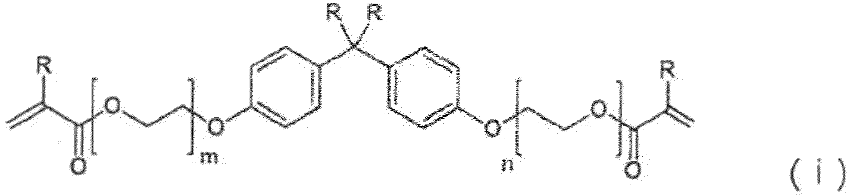 wobei in der Formel R für ein Wasserstoffatom oder eine Methylgruppe steht und eine Vielzahl von R gleich oder unterschiedlich sein können und
m und n jeweils für eine ganze Zahl von 0 bis 20 stehen und gleich oder unterschiedlich sein können; 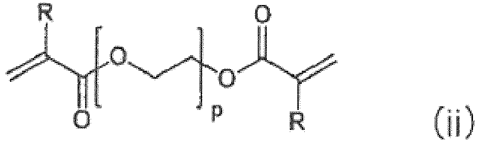 wobei in der Formel R für ein Wasserstoffatom oder eine Methylgruppe steht und eine Vielzahl von R gleich oder unterschiedlich sein können und
p für eine ganze Zahl von 0 bis 20 steht; 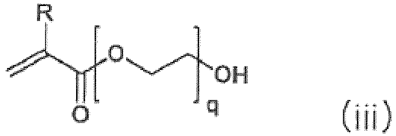 wobei in der Formel R für ein Wasserstoffatom oder eine Methylgruppe steht und q für eine ganze Zahl von 0 bis 20 steht;

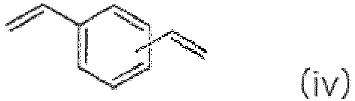

9. Photochrome Linse nach Anspruch 7,
wobei die photochrome Linse ein Gemisch umfasst, das aus dem Polyallylcarbonat und dem Poly(meth)acrylat besteht, und
wobei das Gemisch eine Struktureinheit (a), die von einer Allylcarbonat-Verbindung (A) abgeleitet ist, die durch die allgemeine Formel (11) dargestellt ist, und zwei oder mehr Allyloxycarbonylgruppen umfasst, und eine Struktureinheit (b) umfasst, die von einer (Meth)-acrylat-Verbindung (B) abgeleitet ist, die durch die allgemeine Formel (12) dargestellt ist, und zwei oder mehr (Meth)acrylgruppen umfasst, und
die Struktureinheit (a) in einer Menge von 5 Gew.-% bis 30 Gew.-% enthalten ist und die Struktureinheit (b) in einer Menge von 70 Gew.-% bis 95 Gew.-% enthalten ist, bezogen auf 100 Gew.-% der Struktureinheit (a) und der Struktureinheit (b); 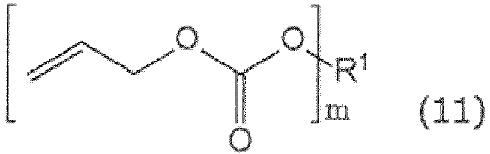 worin R₁ für eine zweiwertige bis zwanzigwertige Gruppe, die von kettenförmigem oder verzweigtem, aliphatischem C3- bis C35-Polyol abgeleitet ist, das gegebenenfalls ein Heteroatom enthält, oder eine zweiwertige bis zwanzigwertige Gruppe steht, die von cycloaliphatischem C5- bis C40-Polyol abgeleitet ist, das gegebenenfalls ein Heteroatom enthält, und
m für eine ganze Zahl von 2 bis 10 steht,
wobei R¹ keine Allyloxycarbonylgruppe enthält; 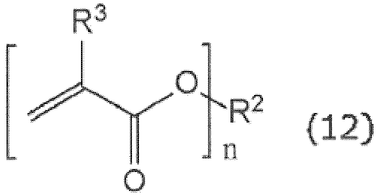 worin R² für eine zweiwertige bis vierwertige organische Gruppe mit 1 bis 30 Kohlenstoffatomen steht, die gegebenenfalls ein Heteroatom oder eine aromatische Gruppe enthält,
R³ für ein Wasserstoffatom oder eine Methylgruppe steht und
n für eine ganze Zahl von 2 bis 4 steht.

10. Photochrome Linse nach Anspruch 7,
wobei das Poly(thio)urethan eine Struktureinheit, die von einer Polyisocyanat-Verbindung (a) abgeleitet ist, eine Struktureinheit, die von einer Polyol-Verbindung (b) abgeleitet ist und ein zahlenmittleres Molekulargewicht von 100 oder mehr aufweist, und eine Struktureinheit enthält, die von einer bifunktionellen oder höher funktionellen aktiven WasserstoffVerbindung (c) abgeleitet ist (mit der Maßgabe, dass die Verbindung (b) ausgeschlossen ist).

11. Polymerisierbare Zusammensetzung, die Folgendes umfasst:
eine Tetraazaporphyrin-Verbindung, die durch die allgemeine Formel (1) dargestellt ist;
zumindest einen aus photochromen Farbstoffen, die durch die allgemeine Formel (5), die allgemeine Formel (a) und die allgemeine Formel (b) dargestellt sind, ausgewählten Farbstoff und
eine polymerisierbare Verbindung; 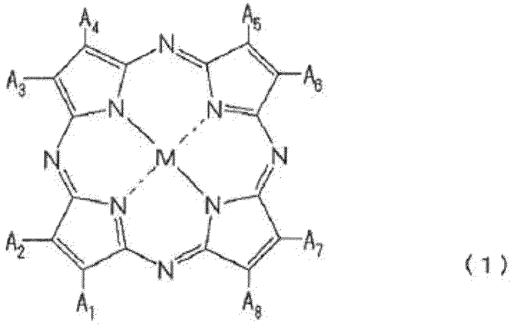 wobei in der allgemeinen Formel (1) A₁ bis A₈ jeweils unabhängig voneinander für ein Wasserstoffatom, ein Halogenatom, eine Nitrogruppe, eine Cyanogruppe, eine Hydroxylgruppe, eine Aminogruppe, eine Carboxylgruppe, eine Sulfonsäuregruppe, eine unverzweigte, verzweigte oder zyklische Alkylgruppe mit 1 bis 20 Kohlenstoffatomen, eine Alkoxygruppe mit 1 bis 20 Kohlenstoffatomen, eine Aryloxygruppe mit 6 bis 20 Kohlenstoffatomen, eine Monoalkylaminogruppe mit 1 bis 20 Kohlenstoffatomen, eine Dialkylaminogruppe mit 2 bis 20 Kohlenstoffatomen, eine Dialkylaminogruppe mit 7 bis 20 Kohlenstoffatomen, eine Aralkylgruppe mit 7 bis 20 Kohlenstoffatomen, eine Arylgruppe mit 6 bis 20 Kohlenstoffatomen, eine Heteroarylgruppe, eine Alkylthiogruppe mit 6 bis 20 Kohlenstoffatomen oder eine Arylthiogruppe mit 6 bis 20 Kohlenstoffatomen stehen oder gegebenenfalls über eine Linkergruppe einen anderen Ring als einen aromatischen Ring bilden und M für zwei Wasserstoffatome, ein gegebenenfalls substituiertes Metallatom oder ein Oxymetallatom steht; 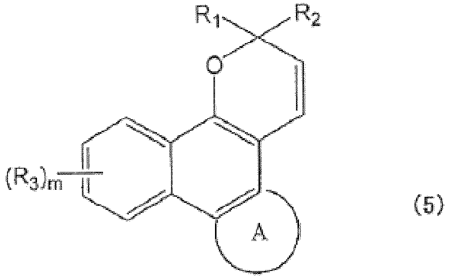 wobei in der Formel R₁ und R₂, die gleich oder unterschiedlich sein können, jeweils unabhängig voneinander für Wasserstoff,
eine unverzweigte oder verzweigte Alkylgruppe mit 1 bis 12 Kohlenstoffatomen,
eine Cycloalkylgruppe mit 3 bis 12 Kohlenstoffatomen,
eine substituierte oder unsubstituierte Arylgruppe mit 6 bis 24 Kohlenstoffatomen oder eine substituierte oder unsubstituierte Heteroarylgruppe mit 4 bis 24 Kohlenstoffatomen stehen (die als Substituenten zumindest einen Substituenten aufweist, der aus einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen, einer -NH₂-Gruppe, einer -NHR-Gruppe, einer -N(R)₂-Gruppe (worin R eine unverzweigte oder verzweigte Alkylgruppe mit 1 bis 6 Kohlenstoffatomen ist und, wenn zwei R vorhanden sind, die beiden R gleich oder unterschiedlich sein können), und einer Methacryloylgruppe oder einer Acryloylgruppe ausgewählt ist), oder
eine Aralkyl- oder Heteroaralkylgruppe (worin eine unverzweigte oder verzweigte Alkylgruppe mit 1 bis 4 Kohlenstoffatomen mit der Arylgruppe oder Heteroarylgruppe substituiert ist) stehen;
die R₃, die gleich oder unterschiedlich sein können, jeweils unabhängig voneinander für ein Halogenatom,
eine unverzweigte oder verzweigte Alkylgruppe mit 1 bis 12 Kohlenstoffatomen, eine Cycloalkylgruppe mit 3 bis 12 Kohlenstoffatomen, eine unverzweigte oder verzweigte Alkoxygruppe mit 1 bis 12 Kohlenstoffatomen, eine unverzweigte oder verzweigte Halogenalkylgruppe mit 1 bis 12 Kohlenstoffatomen, die mit zumindest einem Halogenatom substituiert ist, eine Halogencycloalkylgruppe mit 3 bis 12 Kohlenstoffatomen, die mit zumindest einem Halogenatom substituiert ist, oder eine unverzweigte oder verzweigte Halogenalkoxygruppe mit 1 bis 12 Kohlenstoffatomen, die mit zumindest einem Halogenatom substituiert ist,
eine substituierte oder unsubstituierte Arylgruppe mit 6 bis 24 Kohlenstoffatomen oder eine substituierte oder unsubstituierte Heteroarylgruppe mit 4 bis 24 Kohlenstoffatomen (die als Substituenten zumindest einen Substituenten aufweist, der aus einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, eine Phenoxygruppe oder Naphthoxygruppe, die mit zumindest einer unverzweigten oder verzweigten Alkylgruppe oder einer Alkoxygruppe mit 1 bis 12 Kohlenstoffatomen substituiert ist, einer unverzweigten oder verzweigten Alkenylgruppe mit 2 bis 12 Kohlenstoffatomen und einer Aminogruppe ausgewählt ist),
eine Aralkyl- oder Heteroaralkylgruppe (worin eine unverzweigte oder verzweigte Alkylgruppe mit 1 bis 4 Kohlenstoffatomen mit der Arylgruppe oder Heteroarylgruppe substituiert ist),
eine substituierte oder unsubstituierte Phenoxy- oder Naphthoxygruppe (die als Substituenten zumindest einen Substituenten aufweist, der aus einer unverzweigten oder verzweigten Alkylgruppe oder Alkoxygruppe mit 1 bis 6 Kohlenstoffatomen ausgewählt ist),
-NH₂, -NHR, -CONH₂ oder-CONHR (worin R eine unverzweigte oder verzweigte Alkylgruppe mit 1 bis 6 Kohlenstoffatomen ist), oder
-OCORs oder -COOR₈ (worin R₈ eine unverzweigte oder verzweigte Alkylgruppe mit 1 bis 6 Kohlenstoffatomen oder eine Cycloalkylgruppe mit 3 bis 6 Kohlenstoffatomen, eine Phenylgruppe, die mit zumindest einem Substituenten der substituierten Arylgruppe oder der substituierten Heteroarylgruppe in R₁ und R₂ substituiert ist, oder eine unsubstituierte Phenylgruppe ist) stehen;
m eine ganze Zahl von 0 bis 4 ist;
A für einen kondensierten Ring der Formel (A₂) oder Formel (A₄) steht: 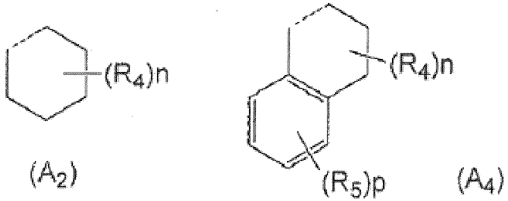 wobei in diesen kondensierten Ringen
eine gestrichelte Linie für eine C₅-C₆-Bindung des Naphthopyran-Rings in der allgemeinen Formel (5) steht,
eine α-Bindung des kondensierten Rings (A4) an C₅ oder C₆ des Naphthopyran-Rings in der allgemeinen Formel (5) gebunden sein kann;
die R₄ gleich oder unterschiedlich sind und jeweils unabhängig voneinander für OH, eine unverzweigte oder verzweigte Alkylgruppe oder Alkoxygruppe mit 1 bis 6 Kohlenstoffatomen stehen oder zwei R₄ Carbonyl (CO) bilden,
die R₅ für Halogen,
eine unverzweigte oder verzweigte Alkylgruppe mit 1 bis 12 Kohlenstoffatomen, eine unverzweigte oder verzweigte Halogenalkylgruppe mit 1 bis 6 Kohlenstoffatomen, die mit zumindest einem Halogenatom substituiert ist,
eine Cycloalkylgruppe mit 3 bis 12 Kohlenstoffatomen,
eine unverzweigte oder verzweigte Alkoxygruppe mit 1 bis 6 Kohlenstoffatomen,
eine substituierte oder unsubstituierte Phenyl- oder Benzylgruppe (die als Substituenten zumindest einen der in der Definition der Gruppen R₁ und R₂ in der allgemeinen Formel (5) beschriebenen Substituenten aufweisen, wenn die Gruppen R₁ und R₂ jeweils unabhängig voneinander für eine Aryl- oder Heteroarylgruppe stehen),
-NH₂ oder -NHR (worin R eine unverzweigte oder verzweigte Alkylgruppe mit 1 bis 6 Kohlenstoffatomen ist),
eine substituierte oder unsubstituierte Phenoxy- oder Naphthoxygruppe (die als Substituenten zumindest eine unverzweigte oder verzweigte Alkylgruppe oder Alkoxygruppe mit 1 bis 6 Kohlenstoffatomen aufweist), oder
eine Gruppe -COR₉, -COOR₉ oder -CONHR₉ stehen (worin R₉ eine unverzweigte oder verzweigte Alkylgruppe mit 1 bis 6 Kohlenstoffatomen, eine Cycloalkylgruppe mit 3 bis 6 Kohlenstoffatomen oder eine substituierte oder unsubstituierte Phenyl- oder Benzylgruppe ist (die als Substituenten zumindest einen der in der Definition der Gruppen R₁ und R₂ in der allgemeinen Formel (5) beschriebenen Substituenten aufweist, wenn die Gruppen R₁ und R₂ jeweils unabhängig voneinander für eine Aryl- oder Heteroarylgruppe stehen)); und
wenn A für (A₄) steht, n eine ganze Zahl von 0 bis 2 ist und p eine ganze Zahl von 0 bis 4 ist, und wenn A für (A₂) steht, n eine ganze Zahl von 0 bis 2 ist;
PC-L-Kette (a)
PC-L-Kette-L'-PC'(b)
worin PC und PC' jeweils unabhängig voneinander für die allgemeinen Formel (c) bis (f) stehen und PC und PC' gleich oder unterschiedlich sein können, 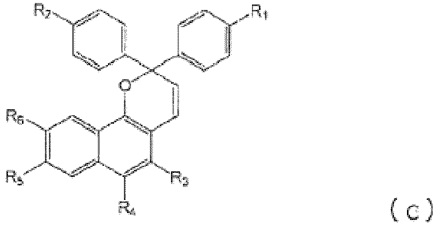 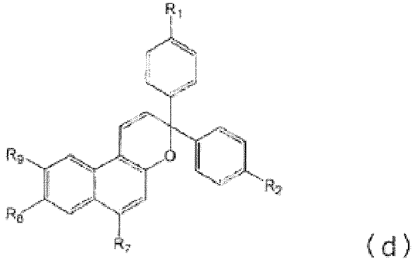 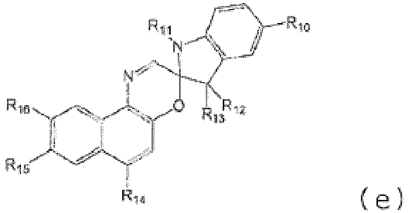 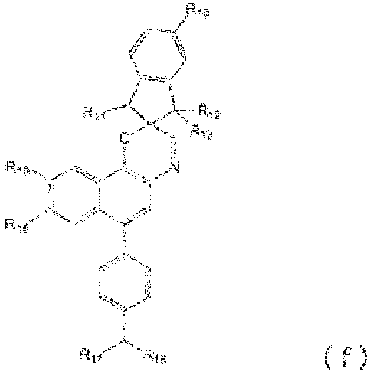
worin R₁ bis R₁₈, die gleich oder unterschiedlich sein können, jeweils für Wasserstoff, ein Halogenatom, eine Carboxylgruppe, eine Acetylgruppe, eine Formylgruppe, eine gegebenenfalls substituierte, aliphatische C1- bis C20-Gruppe, eine gegebenenfalls substituierte, alizyklische C3- bis C20-Gruppe oder eine gegebenenfalls substituierte, aromatische C6- bis C20-Gruppe stehen,
wobei die aliphatische Gruppe, alizyklisch Gruppe oder aromatische organische Gruppe ein Sauerstoffatom oder ein Stickstoffatom enthalten können,
wobei jede der in den Verbindungen, die durch die allgemeinen Formel (c) bis (f) dargestellt sind, enthaltenen Gruppen an L oder L', gebunden ist, wobei es sich um eine zweiwertige organische Gruppe handelt,
L und L' jeweils für eine zweiwertige organische Gruppe stehen, die eine oder mehrere aus einer Oxyethylenkette, eine Oxypropylenkette, einer (Thio)estergruppe und einer (Thio)amidgruppe ausgewählte Art enthält, und
die Kette für eine einwertige oder zweiwertige organische Gruppe steht, die zumindest eine aus einer Polysiloxankette und einer Polyoxyalkylenkette ausgewählte Art enthält.

12. Polymerisierbare Zusammensetzung nach Anspruch 11,
wobei die polymerisierbare Verbindung zumindest zwei aus Verbindungen, die durch die allgemeinen Formeln (i), (ii), (iii) und (iv) dargestellt sind, ausgewählte Verbindungen enthält, 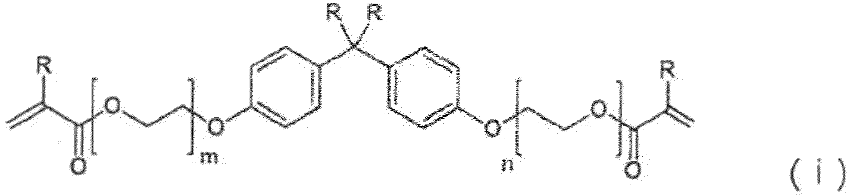 wobei in der Formel R für ein Wasserstoffatom oder eine Methylgruppe steht und eine Vielzahl von R gleich oder unterschiedlich sein können und
m und n jeweils für eine ganze Zahl von 0 bis 20 stehen und gleich oder unterschiedlich sein können; 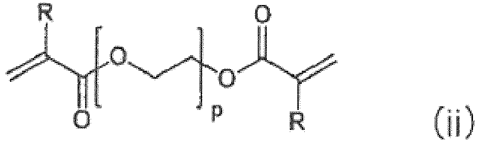 wobei in der Formel R für ein Wasserstoffatom oder eine Methylgruppe steht und eine Vielzahl von R gleich oder unterschiedlich sein können und
p für eine ganze Zahl von 0 bis 20 steht; 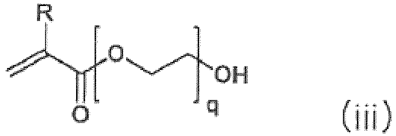 wobei in der Formel R für ein Wasserstoffatom oder eine Methylgruppe steht und q für eine ganze Zahl von 0 bis 20 steht;

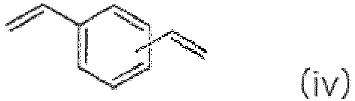

13. Polymerisierbare Zusammensetzung nach Anspruch 11,
wobei die polymerisierbare Verbindung eine Allylcarbonat-Verbindung (A), die durch die allgemeine Formel (11) dargestellt ist und zwei oder mehr Allyloxycarbonylgruppen enthält, und eine (Meth)acrylat-Verbindung (B) enthält, die durch die allgemeinen Formel (12) dargestellt ist und zwei oder mehr (Meth)acrylgruppen enthält, und
die Verbindung (A) in einer Menge von 5 Gew.-% bis 30 Gew.-% enthalten ist und die Verbindung (B) in einer Menge von 70 Gew.-% bis 95 Gew.-% enthalten ist, bezogen auf 100 Gew.-% der Verbindung (A) und der Verbindung (B); 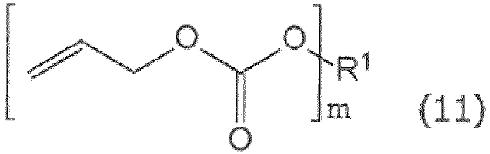 worin R¹ für eine zweiwertige bis zwanzigwertige Gruppe, die von einem kettenförmigen oder verzweigten, aliphatischen C3- bis C35-Polyol abgeleitet ist, das gegebenenfalls ein Heteroatom enthält, oder eine zweiwertige bis zwanzigwertige Gruppe steht, die von cycloaliphatischem C5- bis C40-Polyol abgeleitet ist, das gegebenenfalls ein Heteroatom enthält, und
m für eine ganze Zahl von 2 bis 10 steht,
wobei R¹ keine Allyloxycarbonylgruppe enthält; und 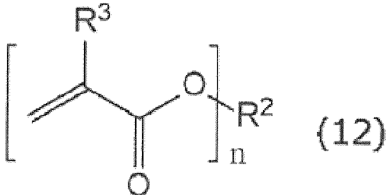 worin R² für eine zweiwertige bis vierwertige organische Gruppe mit 1 bis 30 Kohlenstoffatomen steht, die gegebenenfalls ein Heteroatom oder eine aromatische Gruppe enthält,
R³ für ein Wasserstoffatom oder eine Methylgruppe steht und
n für eine ganze Zahl von 2 bis 4 steht.

14. Polymerisierbare Zusammensetzung nach Anspruch 11,
wobei die polymerisierbare Verbindung eine Polyisocyanat-Verbindung (a), eine Polyol-Verbindung (b) mit einem zahlenmittleren Molekulargewicht von 100 oder mehr und eine bifunktionelle oder höher funktionelle aktive Wasserstoff-Verbindung (c) enthält (mit der Maßgabe, dass die Verbindung (b) ausgeschlossen ist).

15. Photochrome Linse, die durch Härten einer polymerisierbaren Zusammensetzung nach einem der Ansprüche 11 bis 14 erhältlich ist.

16. Polarisierende Kunststofflinse, die Folgendes umfasst.
einen Polarisationsfilm; und
eine Basismaterialschicht, die aus einer polymerisierbaren Zusammensetzung nach einem der Ansprüche 11 bis 14 besteht, die auf zumindest einer Oberfläche des Polarisationsfilms ausgebildet ist, der sich auf einer Seite einer Objektivoberfläche befindet.

## Revendications

1. Lentille photochromique comprenant un composé de tétraazaporphyrine représenté par la formule générale (1) et un colorant photochromique, dans laquelle une transmittance à 23 °C après irradiation à l'aide d'une lampe au xénon à un éclairement énergétique de 50 000 lux pendant 15 minutes satisfait aux conditions suivantes ;
(1) une transmittance à 550 nm est inférieure ou égale à 25 %
(2) une transmittance a à 550 nm est supérieure à une transmittance minimale b entre 575 nm et 600 nm, et une différence entre la transmittance a et la transmittance b est supérieure ou égale à 5 %
(3) il y a un ou plusieurs points d'inflexion dans une courbe de transmission de 550 nm à 600 nm, 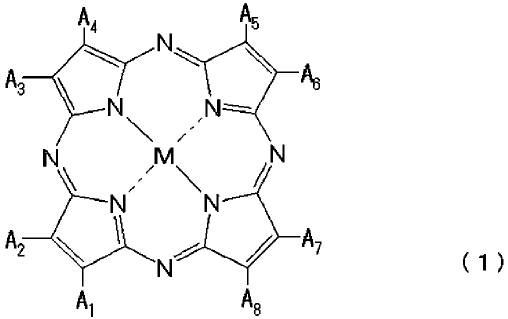 dans laquelle, dans la formule générale (1), A₁ à A₈ représentent chacun indépendamment un atome d'hydrogène, un atome d'halogène, un groupe nitro, un groupe cyano, un groupe hydroxyle, un groupe amino, un groupe carboxyle, un groupe acide sulfonique, un groupe alkyle linéaire, ramifié ou cyclique ayant 1 à 20 atomes de carbone, un groupe alcoxy ayant 1 à 20 atomes de carbone, un groupe aryloxy ayant 6 à 20 atomes de carbone, un groupe monoalkylamino ayant 1 à 20 atomes de carbone, un groupe dialkylamino ayant 2 à 20 atomes de carbone, un groupe dialkylamino ayant 7 à 20 atomes de carbone, un groupe aralkyle ayant 7 à 20 atomes de carbone, un groupe aryle ayant 6 à 20 atomes de carbone, un groupe hétéroaryle, un groupe alkylthio ayant 6 à 20 atomes de carbone, ou un groupe arylthio ayant 6 à 20 atomes de carbone, ou peuvent former un cycle autre qu'un cycle aromatique via un groupe de liaison, et M représente deux atomes d'hydrogène, un atome métallique éventuellement substitué ou un atome oxymétallique.

2. Lentille photochromique selon la revendication 1,
dans laquelle la transmittance lumineuse au moment de la décoloration est supérieure ou égale à 70 %.

3. Lentille photochromique selon la revendication 1,
dans laquelle, dans le composé de tétraazaporphyrine, M est un atome de cuivre, un atome de nickel ou un atome de cobalt.

4. 7. Lentille photochromique selon l'une quelconque des revendications 1 à 3,
dans laquelle le composé de tétraazaporphyrine est représenté par la formule générale (1a), 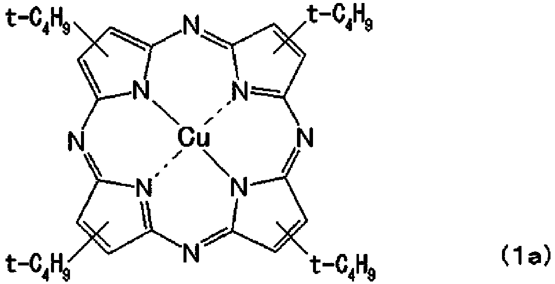
dans laquelle, dans la formule (1a), Cu représente le cuivre divalent, et t-C₄H₉ représente un groupe tert-butyle dont les positions de substitution de quatre substituants sont soit A₁ ou A₂, soit A₃ ou A₄, soit A₅ ou A₆, et soit A₇ ou A₈ dans la formule générale (1).

5. Lentille photochromique selon l'une quelconque des revendications 1 à 4, dans laquelle le colorant photochromique est représenté par la formule générale (5), 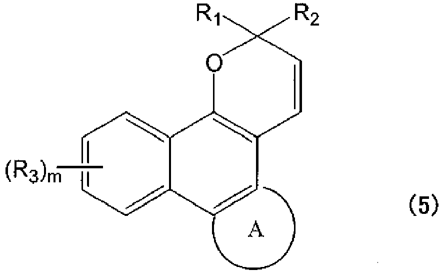
dans laquelle, dans la formule, R₁ et R₂, qui peuvent être identiques ou différents l'un de l'autre, représentent indépendamment un atome d'hydrogène ;
un groupe alkyle linéaire ou ramifié ayant 1 à 12 atomes de carbone ;
un groupe cycloalkyle ayant 3 à 12 atomes de carbone ;
un groupe aryle substitué ou non substitué ayant 6 à 24 atomes de carbone ou un groupe hétéroaryle substitué ou non substitué ayant 4 à 24 atomes de carbone (qui a, comme substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui a été substitué par au moins un atome d'halogène, un groupe halogénoalcoxy linéaire ou ramifié ayant 1 à 12 atomes de carbone qui a été substitué par au moins un atome d'halogène, un groupe phénoxy ou un groupe naphtoxy qui a été substitué par au moins un groupe alkyle linéaire ou ramifié ou un groupe alcoxy ayant 1 à 12 atomes de carbone, un groupe alcényle linéaire ou ramifié ayant 2 à 12 atomes de carbone, un groupe -NH₂, un groupe -NHR, un groupe -N(R)₂ groupe (R est un groupe alkyle linéaire ou ramifié ayant 1 à 6 atomes de carbone, et, dans le cas où il y a deux R, les deux R peuvent être identiques ou différents l'un de l'autre), et un groupe méthacryloyle ou un groupe acryloyle) ; ou
un groupe aralkyle ou hétéroaralkyle (dans lequel un groupe alkyle linéaire ou ramifié ayant 1 à 4 atomes de carbone est substitué par le groupe aryle ou le groupe hétéroaryle),
Les groupes R³, qui peuvent être identiques ou différents les uns des autres, représentent indépendamment un atome d'halogène ;
un groupe alkyle linéaire ou ramifié ayant 1 à 12 atomes de carbone ;
un groupe cycloalkyle ayant 3 à 12 atomes de carbone ;
un groupe alcoxy linéaire ou ramifié ayant 1 à 12 atomes de carbone ;
un groupe halogénoalkyle linéaire ou ramifié ayant 1 à 12 atomes de carbone qui a été substitué par au moins un atome d'halogène, un groupe halogénocycloalkyle ayant 3 à 12 atomes de carbone qui a été substitué par au moins un atome d'halogène, ou un groupe halogénoalcoxy linéaire ou ramifié ayant 1 à 12 atomes de carbone qui a été substitué par au moins un atome d'halogène ;
un groupe aryle substitué ou non substitué ayant 6 à 24 atomes de carbone ou un groupe hétéroaryle substitué ou non substitué ayant 4 à 24 atomes de carbone (qui a, comme substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui a été substitué par au moins un atome d'halogène, un groupe halogénoalcoxy linéaire ou ramifié ayant 1 à 12 atomes de carbone qui a été substitué par au moins un atome d'halogène, un groupe phénoxy ou un groupe naphtoxy qui a été substitué par au moins un groupe alkyle linéaire ou ramifié ou un groupe alcoxy ayant 1 à 12 atomes de carbone, un groupe alcényle linéaire ou ramifié ayant 2 à 12 atomes de carbone, et un groupe amino ;
un groupe aralkyle ou hétéroaralkyle (dans lequel un groupe alkyle linéaire ou ramifié ayant 1 à 4 atomes de carbone est substitué par le groupe aryle ou le groupe hétéroaryle) ;
un groupe phénoxy ou naphtoxy substitué ou non substitué (qui a, comme substituant, au moins un substituant choisi parmi un groupe alkyle linéaire ou ramifié ou un groupe alcoxy ayant 1 à 6 atomes de carbone) ;
-NH₂, -NHR, -CONH₂ ou -CONHR (dans lequel R est un groupe alkyle linéaire ou ramifié ayant 1 à 6 atomes de carbone) ; ou
-OCOR₈ ou -COOR₈ (où R₈ est un groupe alkyle linéaire ou ramifié ayant 1 à 6 atomes de carbone ou un groupe cycloalkyle ayant 3 à 6 atomes de carbone, un groupe phényle qui est substitué par au moins un substituant du groupe aryle substitué ou du groupe hétéroaryle substitué dans R₁ et R₂, ou un groupe phényle non substitué) ;
m est un entier de 0 à 4 ;
A représente un cycle annelé de formule (A₂) ou de formule (A₄), 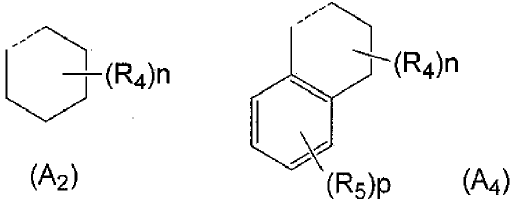
dans ces cycles annelés,
un trait pointillé représente une liaison C₅-C₆ du cycle naphtopyrane dans la formule générale (5) ;
une liaison α du cycle annelé (A₄) peut être liée à C₅ ou C₆ du cycle naphtopyrane dans la formule générale (5) ;
Les groupes R₄ sont identiques ou différents les uns des autres et représentent indépendamment OH, un groupe alkyle linéaire ou ramifié ou un groupe alcoxy ayant 1 à 6 atomes de carbone, ou deux R₄ forment carbonyle (CO) ;
R₅ représente un halogène ;
un groupe alkyle linéaire ou ramifié ayant 1 à 12 atomes de carbone ;
un groupe halogénoalkyle linéaire ou ramifié ayant 1 à 6 atomes de carbone qui a été substitué par au moins un atome d'halogène ;
un groupe cycloalkyle ayant 3 à 12 atomes de carbone ;
un groupe alcoxy linéaire ou ramifié ayant 1 à 6 atomes de carbone ;
un groupe phényle ou benzyle substitué ou non substitué (qui a, comme substituant, au moins un des substituants décrits dans la définition des groupes R₁ et R₂ dans la formule générale (5) dans un cas où les groupes R₁ et R₂ correspondent indépendamment à un groupe aryle ou hétéroaryle) ;
-NH₂ ou -NHR (où R est un groupe alkyle linéaire ou ramifié ayant 1 à 6 atomes de carbone) ;
un groupe phénoxy ou naphtoxy substitué ou non substitué (qui a, comme substituant, au moins un groupe alkyle linéaire ou ramifié ou un groupe alcoxy ayant 1 à 6 atomes de carbone) ; ou
un groupe -COR₉, -COOR₉ ou -CONHR₉ (où R₉ est un groupe alkyle linéaire ou ramifié ayant 1 à 6 atomes de carbone, un groupe cycloalkyle ayant 3 à 6 atomes de carbone, ou un groupe phényle ou benzyle substitué ou non substitué (qui a, comme substituant, au moins un des substituants décrits dans la définition des groupes R₁ et R₂ dans la formule générale (5) dans un cas où les groupes R₁ et R₂ correspondent indépendamment à un groupe aryle ou hétéroaryle) ; et
dans un cas où A représente (A₄), n est un entier de 0 à 2 et p est un entier de 0 à 4, et dans le cas où A représente (A₂), n est un entier de 0 à 2.

6. Lentille photochromique selon l'une quelconque des revendications 1 à 4, dans laquelle le colorant photochromique est représenté par la formule générale (a) ou la formule générale (b),
PC-L-Chaîne (a)
PC-L-Chaîne-L'-PC' (b)
dans laquelle PC et PC' représentent chacun l'une quelconque des formules générales (c) à (f), et PC et PC' peuvent être identiques ou différents l'un de l'autre, et 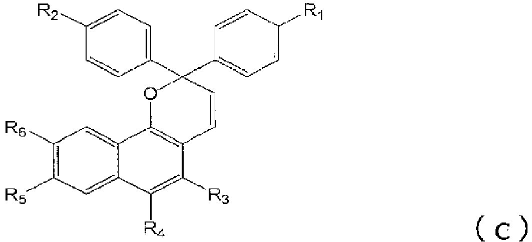 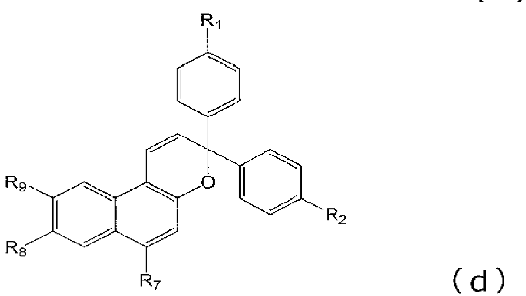 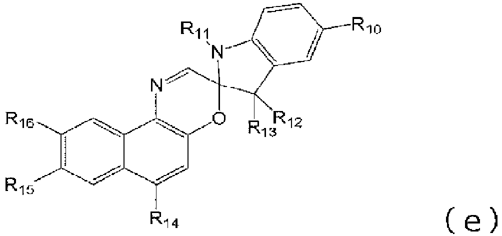 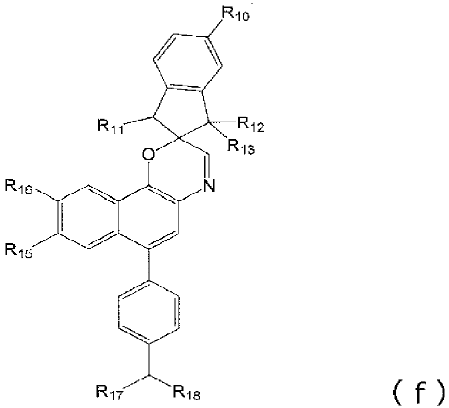
dans lesquelles R₁ à R₁₈, qui peuvent être identiques ou différents les uns des autres, représentent chacun un atome d'hydrogène, un atome d'halogène, un groupe carboxyle, un groupe acétyle, un groupe formyle, un groupe aliphatique en C1 à C20 éventuellement substitué, un groupe alicyclique en C3 à C20 éventuellement substitué, ou un groupe organique aromatique en C6 à C20 éventuellement substitué, dans lesquelles le groupe aliphatique, le groupe alicyclique ou le groupe organique aromatique peut contenir un atome d'oxygène ou un atome d'azote,
l'un quelconque des groupes contenus dans les composés représentés par les formules générales (c) à (f) est lié à L ou L' qui est un groupe organique divalent,
L et L' représentent chacun un groupe organique divalent contenant un ou plusieurs types choisis parmi une chaîne oxyéthylène, une chaîne oxypropylène, un groupe (thio)ester et un groupe (thio)amide, et
la chaîne représente un groupe organique monovalent ou divalent contenant au moins un type choisi parmi une chaîne polysiloxane et une chaîne polyoxyalkylène.

7. Lentille photochromique selon l'une quelconque des revendications 1 à 6, comprenant en outre :
au moins un type choisi parmi poly(méth)acrylate, poly(carbonate d'allyle) et poly(thio)uréthane.

8. Lentille photochromique selon la revendication 7,
dans laquelle le poly(méth)acrylate contient des motifs structuraux dérivés d'au moins deux types choisis parmi les composés représentés par les formules générales (i), (ii), (iii) et (iv) ; 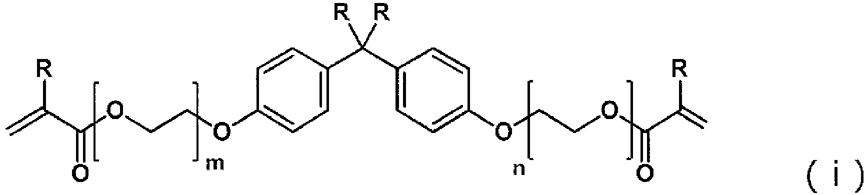
dans lesquels, dans la formule, R représente un atome d'hydrogène ou un groupe méthyle, et une pluralité de R peuvent être identiques ou différents les uns des autres, et
m et n représentent chacun un entier de 0 à 20 et peuvent être identiques ou différents l'un de l'autre, 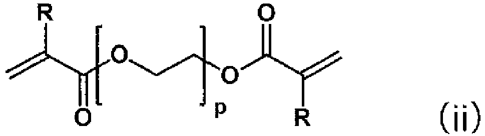
dans lesquels, dans la formule, R représente un atome d'hydrogène ou un groupe méthyle, et une pluralité de R peuvent être identiques ou différents les uns des autres, et
p représente un entier de 0 à 20, 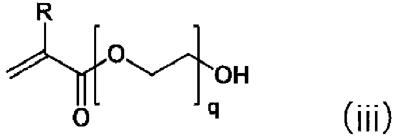
dans lesquels, dans la formule, R représente un atome d'hydrogène ou un groupe méthyle, et q représente un entier de 0 à 20.

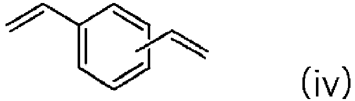

9. Lentille photochromique selon la revendication 7,
la lentille photochromique contenant un mélange constitué de poly(carbonate d'allyle) et de poly(méth)acrylate, et
dans laquelle le mélange contient un motif structural (a) dérivé d'un composé de carbonate d'allyle (A) qui est représenté par la formule générale (11) et contient au moins deux groupes allyloxycarbonyle, et un motif structural (b) dérivée d'un composé de (méth)acrylate (B) qui est représenté par la formule générale (12) et contient au moins deux groupes (méth)acryle, et
le motif structural (a) est contenu en une quantité de 5 % en poids à 30 % en poids et le motif structural (b) est contenu en une quantité de 70 % en poids à 95 % en poids, par rapport à un total de 100 % en poids du motif structural (a) et du motif structural (b), 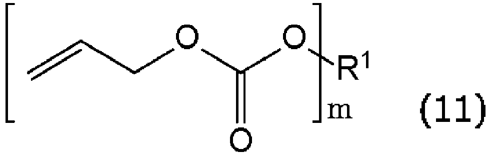
dans laquelle, R¹ représente un groupe divalent ayant une valence de vingt dérivé d'un polyol aliphatique linéaire ou ramifié en C3 à C35 qui contient éventuellement un hétéroatome, ou un groupe divalent à une valence de vingt dérivé d'un polyol cycloaliphatique en C5 à C40 qui contient éventuellement un hétéroatome, et
m représente un entier de 2 à 10,
où R¹ ne contient pas un groupe allyloxycarbonyle, 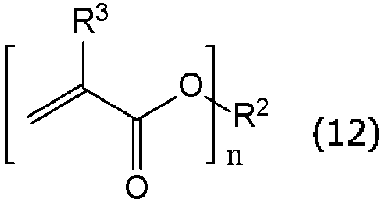
dans laquelle, R₂ représente un groupe organique divalent à tétravalent ayant 1 à 30 atomes de carbone qui contiennent éventuellement un hétéroatome ou un groupe aromatique,
R³ représente un atome d'hydrogène ou un groupe méthyle, et
n représente un entier de 2 à 4.

10. Lentille photochromique selon la revendication 7,
dans laquelle le poly(thio)uréthane contient un motif structural dérivé d'un composé polyisocyanate (a), un motif structural dérivé d'un composé polyol (b) ayant un poids moléculaire moyen en nombre supérieur ou égal à 100, et un motif structural dérivé d'un composé à hydrogène actif bifonctionnel ou à fonctionnalité supérieure (c) (à condition que le composé (b) soit exclu).

11. Composition polymérisable , comprenant :
un composé de tétraazaporphyrine représenté par la formule générale (1) ;
au moins un type choisi parmi des colorants photochromiques représentés par la formule générale (5), la formule générale (a) et la formule générale (b) ; et
un composé polymérisable, 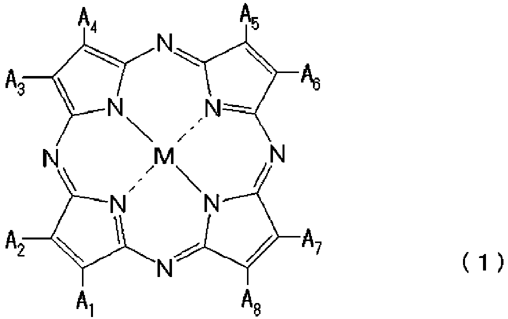
dans laquelle, dans la formule générale (1), A₁ à A₈ représentent chacun indépendamment un atome d'hydrogène, un atome d'halogène, un groupe nitro, un groupe cyano, un groupe hydroxyle, un groupe amino, un groupe carboxyle, un groupe acide sulfonique, un groupe alkyle linéaire, ramifié ou cyclique ayant 1 à 20 atomes de carbone, un groupe alcoxy ayant 1 à 20 atomes de carbone, un groupe aryloxy ayant 6 à 20 atomes de carbone, un groupe monoalkylamino ayant 1 à 20 atomes de carbone, un groupe dialkylamino ayant 2 à 20 atomes de carbone, un groupe dialkylamino ayant 7 à 20 atomes de carbone, un groupe aralkyle ayant 7 à 20 atomes de carbone, un groupe aryle ayant 6 à 20 atomes de carbone, un groupe hétéroaryle, un groupe alkylthio ayant 6 à 20 atomes de carbone, ou un groupe arylthio ayant 6 à 20 atomes de carbone, ou peuvent former un cycle autre qu'un cycle aromatique via un groupe de liaison, et M représente deux atomes d'hydrogène, un atome métallique éventuellement substitué ou un atome oxymétallique, 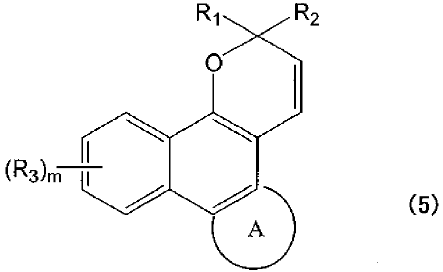
dans laquelle, dans la formule, R₁ et R₂, qui peuvent être identiques ou différents l'un de l'autre, représentent indépendamment un atome d'hydrogène ;
un groupe alkyle linéaire ou ramifié ayant 1 à 12 atomes de carbone ; un groupe cycloalkyle ayant 3 à 12 atomes de carbone ;
un groupe aryle substitué ou non substitué ayant 6 à 24 atomes de carbone ou un groupe hétéroaryle substitué ou non substitué ayant 4 à 24 atomes de carbone (qui a, comme substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui a été substitué par au moins un atome d'halogène, un groupe halogénoalcoxy linéaire ou ramifié ayant 1 à 12 atomes de carbone qui a été substitué par au moins un atome d'halogène, un groupe phénoxy ou un groupe naphtoxy qui a été substitué par au moins un groupe alkyle linéaire ou ramifié ou un groupe alcoxy ayant 1 à 12 atomes de carbone, un groupe alcényle linéaire ou ramifié ayant 2 à 12 atomes de carbone, un groupe -NH₂, un groupe -NHR, un groupe -N(R)₂ groupe (R est un groupe alkyle linéaire ou ramifié ayant 1 à 6 atomes de carbone, et, dans le cas où il y a deux R, les deux R peuvent être identiques ou différents l'un de l'autre), et un groupe méthacryloyle ou un groupe acryloyle) ; ou
un groupe aralkyle ou hétéroaralkyle (dans lequel un groupe alkyle linéaire ou ramifié ayant 1 à 4 atomes de carbone est substitué par le groupe aryle ou le groupe hétéroaryle),
Les groupes R₃, qui peuvent être identiques ou différents les uns des autres, représentent indépendamment un atome d'halogène ;
un groupe alkyle linéaire ou ramifié ayant 1 à 12 atomes de carbone ;
un groupe cycloalkyle ayant 3 à 12 atomes de carbone ;
un groupe alcoxy linéaire ou ramifié ayant 1 à 12 atomes de carbone ;
un groupe halogénoalkyle linéaire ou ramifié ayant 1 à 12 atomes de carbone qui a été substitué par au moins un atome d'halogène, un groupe halogénocycloalkyle ayant 3 à 12 atomes de carbone qui a été substitué par au moins un atome d'halogène, ou un groupe halogénoalcoxy linéaire ou ramifié ayant 1 à 12 atomes de carbone qui a été substitué par au moins un atome d'halogène ;
un groupe aryle substitué ou non substitué ayant 6 à 24 atomes de carbone ou un groupe hétéroaryle substitué ou non substitué ayant 4 à 24 atomes de carbone (qui a, comme substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui a été substitué par au moins un atome d'halogène, un groupe halogénoalcoxy linéaire ou ramifié ayant 1 à 12 atomes de carbone qui a été substitué par au moins un atome d'halogène, un groupe phénoxy ou un groupe naphtoxy qui a été substitué par au moins un groupe alkyle linéaire ou ramifié ou un groupe alcoxy ayant 1 à 12 atomes de carbone, un groupe alcényle linéaire ou ramifié ayant 2 à 12 atomes de carbone, et un groupe amino ;
un groupe aralkyle ou hétéroaralkyle (dans lequel un groupe alkyle linéaire ou ramifié ayant 1 à 4 atomes de carbone est substitué par le groupe aryle ou le groupe hétéroaryle) ;
un groupe phénoxy ou naphtoxy substitué ou non substitué (qui a, comme substituant, au moins un substituant choisi parmi un groupe alkyle linéaire ou ramifié ou un groupe alcoxy ayant 1 à 6 atomes de carbone) ;
-NH₂, -NHR, -CONH₂ ou -CONHR (dans lequel R est un groupe alkyle linéaire ou ramifié ayant 1 à 6 atomes de carbone) ; ou
-OCOR₉ ou -COOR₉ (où R₉ est un groupe alkyle linéaire ou ramifié ayant 1 à 6 atomes de carbone ou un groupe cycloalkyle ayant 3 à 6 atomes de carbone, un groupe phényle qui est substitué par au moins un substituant du groupe aryle substitué ou du groupe hétéroaryle substitué dans R₁ et R₂, ou un groupe phényle non substitué) ;
m est un entier de 0 à 4 ;
A représente un cycle annelé de formule (A₂) ou de formule (A₄), 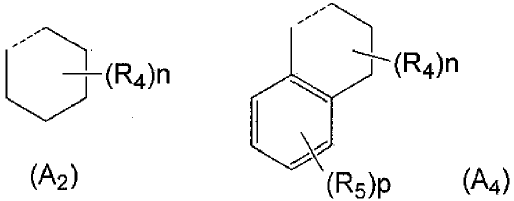
dans ces cycles annelés,
un trait pointillé représente une liaison C₅-C₆ du cycle naphtopyrane dans la formule générale (5) ;
une liaison α du cycle annelé (A₄) peut être liée à C₅ ou C₆ du cycle naphtopyrane dans la formule générale (5) ;
Les groupes R₄ sont identiques ou différents les uns des autres et représentent indépendamment OH, un groupe alkyle linéaire ou ramifié ou un groupe alcoxy ayant 1 à 6 atomes de carbone, ou deux R₄ forment carbonyle (CO) ;
R₅ représente un halogène ;
un groupe alkyle linéaire ou ramifié ayant 1 à 12 atomes de carbone ;
un groupe halogénoalkyle linéaire ou ramifié ayant 1 à 6 atomes de carbone qui a été substitué par au moins un atome d'halogène ;
un groupe cycloalkyle ayant 3 à 12 atomes de carbone ;
un groupe alcoxy linéaire ou ramifié ayant 1 à 6 atomes de carbone ;
un groupe phényle ou benzyle substitué ou non substitué (qui a, comme substituant, au moins un des substituants décrits dans la définition des groupes R₁ et R₂ dans la formule générale (5) dans un cas où les groupes R₁ et R₂ correspondent indépendamment à un groupe aryle ou hétéroaryle) ;
-NH₂ ou -NHR (où R est un groupe alkyle linéaire ou ramifié ayant 1 à 6 atomes de carbone) ;
un groupe phénoxy ou naphtoxy substitué ou non substitué (qui a, comme substituant, au moins un groupe alkyle linéaire ou ramifié ou un groupe alcoxy ayant 1 à 6 atomes de carbone) ; ou
un groupe -COR₉, -COOR₉ ou -CONHR₉ (où R₉ est un groupe alkyle linéaire ou ramifié ayant 1 à 6 atomes de carbone, un groupe cycloalkyle ayant 3 à 6 atomes de carbone, ou un groupe phényle ou benzyle substitué ou non substitué (qui a, comme substituant, au moins un des substituants décrits dans la définition des groupes R₁ et R₂ dans la formule générale (5) dans un cas où les groupes R₁ et R₂ correspondent indépendamment à un groupe aryle ou hétéroaryle) ;
dans un cas où A représente (A₄), n est un entier de 0 à 2 et p est un entier de 0 à 4, et dans le cas où A représente (A₂), n est un entier de 0 à 2,
PC-L-Chaîne (a)
PC-L-Chaîne-L'-PC' (b)
dans laquelle PC et PC' représentent chacun l'une quelconque des formules générales (c) à (f), et PC et PC' peuvent être identiques ou différents l'un de l'autre, 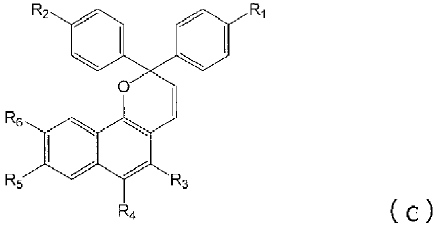 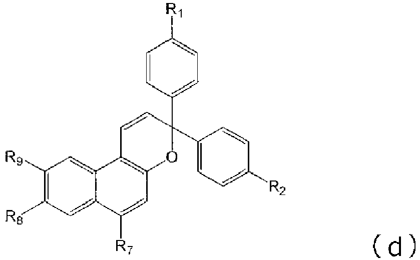 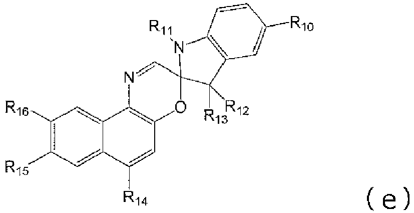 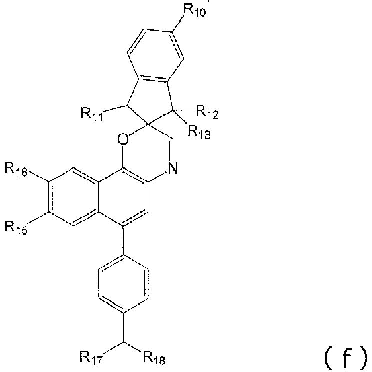
dans lesquelles R₁ à R₁₈, qui peuvent être identiques ou différents les uns des autres, représentent chacun un atome d'hydrogène, un atome d'halogène, un groupe carboxyle, un groupe acétyle, un groupe formyle, un groupe aliphatique en C1 à C20 éventuellement substitué, un groupe alicyclique en C3 à C20 éventuellement substitué, ou un groupe organique aromatique en C6 à C20 éventuellement substitué, dans lesquelles
le groupe aliphatique, le groupe alicyclique ou le groupe organique aromatique peut contenir un atome d'oxygène ou un atome d'azote,
l'un quelconque des groupes contenus dans les composés représentés par les formules générales (c) à (f) est lié à L ou L' qui est un groupe organique divalent,
L et L' représentent chacun un groupe organique divalent contenant un ou plusieurs types choisis parmi une chaîne oxyéthylène, une chaîne oxypropylène, un groupe (thio)ester et un groupe (thio)amide, et
la chaîne représente un groupe organique monovalent ou divalent contenant au moins un type choisi parmi une chaîne polysiloxane et une chaîne polyoxyalkylène.

12. Composition polymérisable selon la revendication 11,
dans laquelle le composé polymérisable contient au moins deux types choisis parmi les composés représentés par les formules générales (i), (ii), (iii) et (iv), 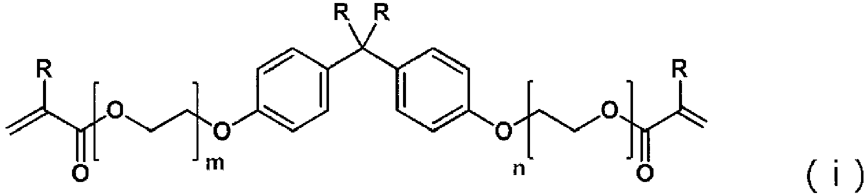
dans lesquels, dans la formule, R représente un atome d'hydrogène ou un groupe méthyle, et une pluralité de R peuvent être identiques ou différents les uns des autres, et
m et n représentent chacun un entier de 0 à 20 et peuvent être identiques ou différents l'un de l'autre, et 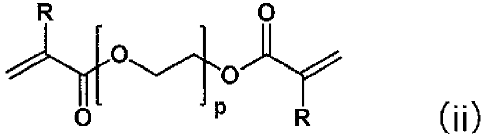
dans lesquels, dans la formule, R représente un atome d'hydrogène ou un groupe méthyle, et une pluralité de R peuvent être identiques ou différents les uns des autres, et
p représente un entier de 0 à 20, 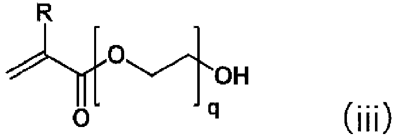
dans lesquels, dans la formule, R représente un atome d'hydrogène ou un groupe méthyle, et q représente un entier de 0 à 20.

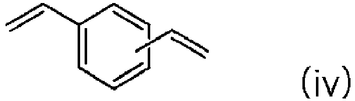

13. Composition polymérisable selon la revendication 11,
dans laquelle le composé polymérisable contient un composé de carbonate d'allyle (A) qui est représenté par la formule générale (11) et contient au moins deux groupes allyloxycarbonyle, et un composé de (méth)acrylate (B) qui est représenté par la formule générale (12) et contient au moins deux groupes (méth)acryle, et
le composé (A) est contenu en une quantité de 5 % en poids à 30 % en poids et le composé (B) est contenu en une quantité de 70 % en poids à 95 % en poids, dans un total de 100 % en poids du composé (A) et du composé (B), 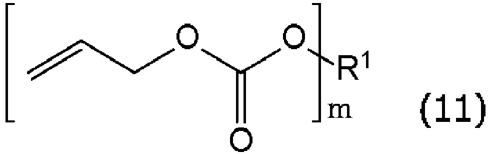
dans laquelle, R¹ représente un groupe divalent ayant une valence de vingt dérivé d'un polyol aliphatique linéaire ou ramifié en C3 à C35 qui contient éventuellement un hétéroatome, ou un groupe divalent à une valence de vingt dérivé d'un polyol cycloaliphatique en C5 à C40 qui contient éventuellement un hétéroatome, et
m représente un entier de 2 à 10,
où R¹ ne contient pas un groupe allyloxycarbonyle, et 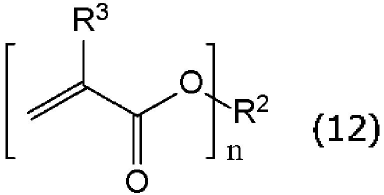
dans laquelle, R₂ représente un groupe organique divalent à tétravalent ayant 1 à 30 atomes de carbone qui contiennent éventuellement un hétéroatome ou un groupe aromatique,
R³ représente un atome d'hydrogène ou un groupe méthyle, et
n représente un entier de 2 à 4.

14. Composition polymérisable selon la revendication 11, dans laquelle le composé polymérisable contient un composé polyisocyanate (a), un composé polyol (b) ayant un poids moléculaire moyen en nombre supérieur ou égal à 100, et un composé à hydrogène actif bifonctionnel ou à fonctionnalité supérieure (c) (à condition que le composé (b) soit exclu).

15. Lentille photochromique obtenue par durcissement de la composition polymérisable selon l'une quelconque des revendications 11 à 14.

16. Lentille polarisante en plastique, comprenant :
un film polarisant ; et
une couche de matériau de base constituée de la composition polymérisable selon l'une quelconque des revendications 11 à 14 qui est formée sur au moins une surface du film polarisant située du côté d'une surface d'objectif.
